(19) Europäisches Patentamt
European Patent Office
Office européen des brevets

(11) EP 2 559 737 A1

(12) EUROPEAN PATENT APPLICATION
published in accordance with Art. 153(4) EPC

(43) Date of publication:
**20.02.2013 Bulletin 2013/08**

(21) Application number: **11768917.4**

(22) Date of filing: **14.04.2011**

(51) Int Cl.:
***C08L 101/00*** *(2006.01)* ***C08K 5/13*** *(2006.01)*
***C08K 5/134*** *(2006.01)* ***C08K 5/1545*** *(2006.01)*
***C08K 5/524*** *(2006.01)*

(86) International application number:
**PCT/JP2011/059267**

(87) International publication number:
**WO 2011/129396 (20.10.2011 Gazette 2011/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.10.2010 JP 2010242057**
**28.10.2010 JP 2010242056**
**28.10.2010 JP 2010242055**
**28.10.2010 JP 2010242054**
**17.06.2010 JP 2010138041**
**14.06.2010 JP 2010134804**
**14.06.2010 JP 2010134803**
**14.04.2010 JP 2010092971**

(71) Applicant: **Sumitomo Chemical Co., Ltd**
**Chuo-ku, Tokyo 104-8260 (JP)**

(72) Inventors:
- **KIMURA, Yoshikazu**
  **Osaka-shi**
  **Osaka 558-0051 (JP)**
- **AWA, Hideaki**
  **Ibaraki-shi**
  **Osaka 567-0826 (JP)**

(74) Representative: **Jones, Nicholas Andrew**
**Withers & Rogers LLP**
**4 More London Riverside**
**London**
**SE1 2AU (GB)**

# (54) THERMOPLASTIC POLYMER COMPOSITION AND STABILISER COMPOSITION

(57) The present invention provides a thermoplastic polymer composition containing a particular phenol compound or organic phosphorous compound, a compound represented by the formula (9) and a thermoplastic polymer, as well as a processing stabilizer containing a particular phenol compound or organic phosphorous compound and a compound represented by the formula (9). A combined use of a particular phenol compound or organic phosphorous compound and a compound represented by the formula (9) can improve processing stability of a thermoplastic polymer composition.

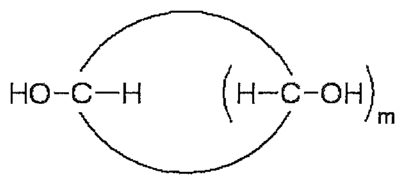

(9)

wherein in the formula (9), m is an integer of 2 or more.

EP 2 559 737 A1

## Description

### Technical Field

The present invention relates to a thermoplastic polymer composition and stabilizer composition.

### Background Art

Since thermoplastic polymers are superior in transparency and show good impact resistance, they are widely used for food packaging containers, convenience goods and the like. For the production of such products, thermoplastic polymers are used as compositions containing additives. As additives for thermoplastic polymers, 2,4-di-t-pentyl-6-[1-(3,5-di-t-pentyl-2-hydroxyphenyl)ethyl]phenyl acrylate, 6-[3-(3-t-butyl-4-hydroxy-5-methylphenyl)propoxy]-2,4,8,10-tetra-t-butyldibenzo[d,f][1,3,2]dioxaphosphepine (which is also called 6-t-butyl-4-[3-[(2,4,8,10-tetra-t-butyldibenzo[d,f][1,3,2]dioxaphosphepin-6-yl)oxy]propyl]-2-methylphenol), octadecyl 3-(3,5-di-t-butyl-4-hydroxyphenyl)propionate, 3,9-bis[2-{3-(3-t-butyl-4-hydroxy-5-methylphenyl) propionyloxy}-1,1-dimethylethyl]-2,4,8,10-tetraoxaspiro[5.5]undecane, pentaerythritol tetrakis[3-(3,5-di-t-butyl-4-hydroxyphenyl)propionate], tris(2,4-di-t-butylphenyl) phosphite and the like are known (patent documents 1 - 6).

### Document List

### Patent Documents

patent document 1: JP-A-1-168643
patent document 2: JP-A-10-273494
patent document 3: US Patent No. 3330859
patent document 4: US Patent No. 3644482
patent document 5: JP-A-59-25826

### SOMMARY OF THE INVENTION

### Problems to be Solved by the Invention

There is a demand for a thermoplastic polymer composition showing further improved processing stability.

The present inventors have conducted intensive studies in an attempt to solve the aforementioned problems and found that a thermoplastic polymer composition containing the following compound represented by the formula (1), the following compound represented by the formula (2), at least one selected from the group consisting of the following compounds represented by the formulas (3) - (7), or the following compound represented by the formula (8), the following compound represented by the formula (9), and a thermoplastic polymer
shows superior processing stability. They have reached the following invention based on such findings.

### Means or Solving the Problems

[1] A thermoplastic polymer composition comprising a compound represented by the formula (1):

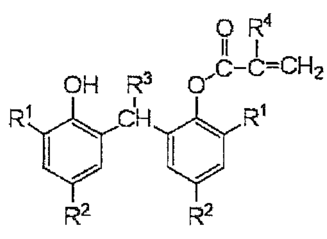

(1)

wherein in the formula (1),
each $R^1$ and/or each $R^2$ are/is independently a $C_{1-8}$ alkyl group, a $C_{6-12}$ aryl group or a $C_{7-18}$ aralkyl group,

$R^3$ is a hydrogen atom or a $C_{1-3}$ alkyl group, and
$R^4$ is a hydrogen atom or a methyl group, a compound represented by the formula (9):
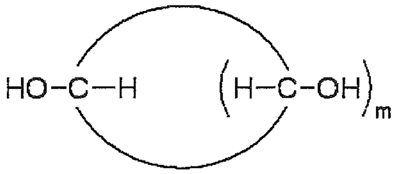

(9)

wherein in the formula (9), m is an integer of 2 or more, and a thermoplastic polymer.

[2] The thermoplastic polymer composition of the above-mentioned [1], wherein the total amount of the compound represented by the formula (1) and the compound represented by the formula (9) is 0.001 - 3 parts by weight relative to 100 parts by weight of the thermoplastic polymer.
[3] A stabilizer composition comprising a compound represented by the formula (1) and a compound represented by the formula (9).
[4] The stabilizer composition of the above-mentioned [3], wherein the compound represented by the formula (1) is at least one selected from the group consisting of 2,4-di-t-pentyl-6-[1-(3,5-di-t-pentyl-2-hydroxyphenyl)ethyl]phenyl acrylate and 2-t-butyl-6-(3-t-butyl-2-hydroxy-5-methylbenzyl)-4-methylphenyl acrylate.
[5] The stabilizer composition of the above-mentioned [3] or [4], wherein m is 5.
[6] The stabilizer composition of the above-mentioned [5], wherein the compound represented by the formula (9) is at least one selected from the group consisting of myo-inositol and scyllo-inositol.
[7] The stabilizer composition of any one of the above-mentioned [3] - [6], further comprising a compound represented by the formula (2):

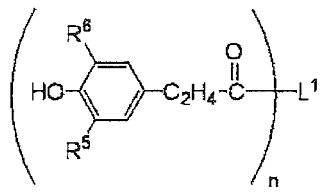

(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

[8] The stabilizer composition of any one of the above-mentioned [3] - [7], further comprising at least one selected from the group consisting of the compounds represented by the formulas (3) - (7) :

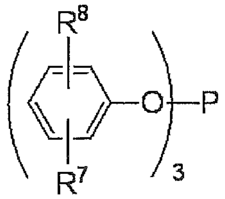

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

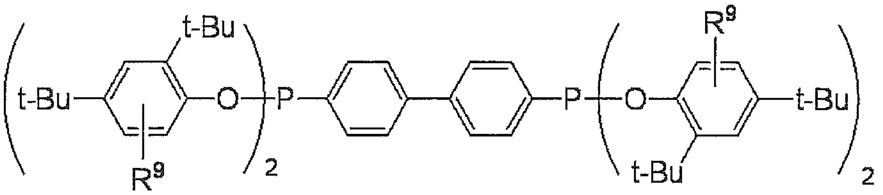

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

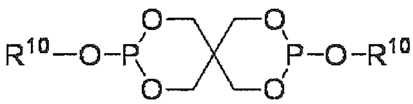

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

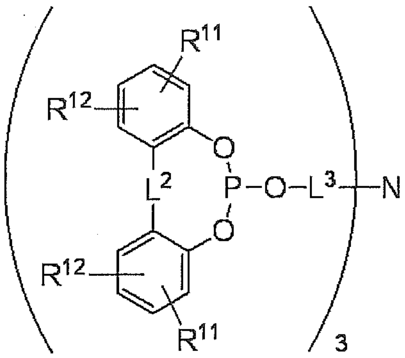

(6)

wherein in the formula (6),
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

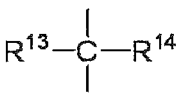

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

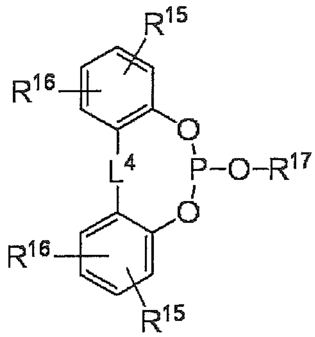

(7)

wherein in the formula (7), each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):
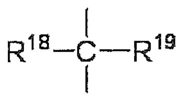

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

[9] The stabilizer composition of the above-mentioned [8], wherein at least one selected from the group consisting of the compounds represented by the formulas (3) - (7) is the compound represented by the formula (3).
[10] A production method of a thermoplastic polymer composition, comprising mixing a thermoplastic polymer and the stabilizer composition of any one of the above-mentioned [3] - [9].
[11] Use of the stabilizer composition of any one of the above-mentioned [3] - [9] for improving the processing stability of a thermoplastic polymer composition.

[12] A thermoplastic polymer composition comprising a compound represented by the formula (8):
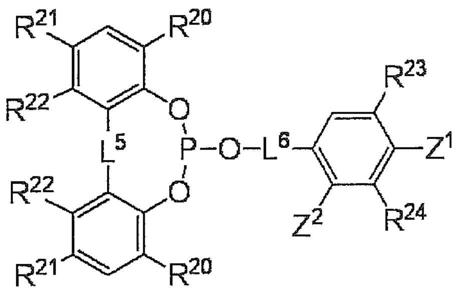

(8)

wherein in the formula (8), each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):
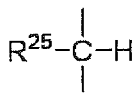 (8a)

wherein in the formula (8a), $R^{25}$ is a hydrogen atom, a $C_{1-8}$ alkyl group or a $C_{5-8}$ cycloalkyl group, $L^6$ is a $C_{2-8}$ alkylene group or a divalent group represented by the formula (8b):

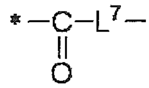 (8b)

wherein in the formula (8b), $L^7$ is a single bond or a $C_{1-8}$ alkylene group, and * shows bonding to the oxygen atom side, and

one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group,

a compound represented by the formula (9) and a thermoplastic polymer.

[13] The thermoplastic polymer composition of the above-mentioned [12], wherein the total amount of the compound represented by the formula (8) and the compound represented by the formula (9) is 0.001 - 3 parts by weight relative to 100 parts by weight of the thermoplastic polymer.

[14] A stabilizer composition comprising a compound represented by the formula (8) and a compound represented by the formula (9).

[15] The stabilizer composition of the above-mentioned [14], wherein the compound represented by the formula (8) is 6-[3-(3-t-butyl-4-hydroxy-5-methylphenyl)propoxy]-2,4,8,10-tetra-t-butyldibenzo[d,f][1,3,2]dioxaphosphepine.

[16] The stabilizer composition of the above-mentioned [14] or [15], wherein m is 5.

[17] The stabilizer composition of the above-mentioned [16], wherein the compound represented by the formula (9) is at least one selected from the group consisting of myo-inositol and scyllo-inositol.

[18] The stabilizer composition of any one of the above-mentioned [14] - [17], further comprising a compound represented by the formula (2).

[19] The stabilizer composition of any one of the above-mentioned [14] - [18], further comprising at least one selected from the group consisting of the compounds represented by the formulas (3) - (7).

[20] The stabilizer composition of the above-mentioned [19], wherein at least one selected from the group consisting of the compounds represented by the formulas (3) - (7) is the compound represented by the formula (3).

[21] A production method of a thermoplastic polymer composition, comprising mixing the stabilizer composition of any one of the above-mentioned [14] - [20] and a thermoplastic polymer.

[22] Use of the stabilizer composition of any one of the above-mentioned [14] - [20] for improving the processing stability of a thermoplastic polymer composition.

[23] A thermoplastic polymer composition comprising a compound represented by the formula (2), a compound represented by the formula (9) and a thermoplastic polymer.

[24] The thermoplastic polymer composition of the above-mentioned [23], wherein the total amount of the compound represented by the formula (2) and the compound represented by the formula (9) is 0.001 - 3 parts by weight relative to 100 parts by weight of the thermoplastic polymer.

[25] The thermoplastic polymer composition of the above-mentioned [23] or [24], wherein the thermoplastic polymer is a styrene-butadiene block copolymer.

[26] A stabilizer composition comprising a compound represented by the formula (2) and a compound represented by the formula (9).

[27] A stabilizer composition consisting of a compound represented by the formula (2) and a compound represented by the formula (9).

[28] The stabilizer composition of the above-mentioned [26] or [27], wherein the compound represented by the formula (2) is at least one selected from the group consisting of octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane and pentaerythritol tetrakis[3-(3,5-di-t-butyl-4-hydroxyphenyl)propionate].

[29] The stabilizer composition of any one of the above-mentioned [26] - [28], wherein m is 5.

[30] The stabilizer composition of the above-mentioned [29], wherein the compound represented by the formula (9) is at least one selected from the group consisting of myo-inositol and scyllo-inositol.
[31] A production method of a thermoplastic polymer composition, comprising mixing the stabilizer composition of any one of the above-mentioned [26] - [30] and a thermoplastic polymer.
[32] Use of the stabilizer composition of any one of the above-mentioned [26] - [30] for improving the processing stability of a thermoplastic polymer composition.

[33] A thermoplastic polymer composition comprising a compound represented by the formula (9), a thermoplastic polymer and at least one selected from the group consisting of the compounds represented by the formulas (3) - (7).
[34] The thermoplastic polymer composition of the above-mentioned [33], wherein the total amount of the compound represented by the formula (9) and the compound selected from the group consisting of the compounds represented by the formulas (3) - (7) is 0.001 - 3 parts by weight relative to 100 parts by weight of the thermoplastic polymer.
[35] The thermoplastic polymer composition of the above-mentioned [33] or [34], wherein the thermoplastic polymer is a styrene-butadiene block copolymer.
[36] A stabilizer composition comprising a compound represented by the formula (9) and at least one selected from the group consisting of the compounds represented by the formulas (3) - (7).
[37] A stabilizer composition consisting of a compound represented by the formula (9) and at least one selected from the group consisting of the compounds represented by the formulas (3) - (7).
[38] The stabilizer composition of the above-mentioned [36] or [37], wherein at least one selected from the group consisting of the compounds represented by the formulas (3) - (7) is the compound represented by the formula (3).
[39] The stabilizer composition of the above-mentioned [38], wherein the compound represented by the formula (3) is tris(2,4-di-t-butylphenyl) phosphite.
[40] A production method of a thermoplastic polymer composition, comprising mixing the stabilizer composition of any one of the above-mentioned [36] - [39] and a thermoplastic polymer.
[41] Use of the stabilizer composition of any one of the above-mentioned [36] - [39] for improving the processing stability of a thermoplastic polymer composition.

In the present invention, the "$C_{a-b}$" means that the carbon number is not less than a and not more than b. In the following, the "compound represented by the formula (1)" and the like are sometimes abbreviated as "compound (1)" and the like. Similarly, the "divalent group represented by the formula (6a)" and the like are sometimes abbreviated as "divalent group (6a)" and the like.

## Effect of the Invention

By using compound (1), compound (2), at least one selected from the group consisting of compounds (3) - (7) or compound (8) in combination with compound (9), the processing stability of a thermoplastic polymer composition can be improved.

## Description of Embodiments

The present invention is explained successively in the following. In the following, the thermoplastic polymer composition of the present invention and the stabilizer composition of the present invention, which contain compound

(1) and compound (9) as essential components, are sometimes referred to as "the first thermoplastic polymer composition" and "the first stabilizer composition", respectively.
In addition, the thermoplastic polymer composition of the present invention and the stabilizer composition of the present invention, which contain compound (8) and compound (9) as essential components, are sometimes referred to as "the second thermoplastic polymer composition" and "the second stabilizer compositions", respectively.
Furthermore, the thermoplastic polymer composition of the present invention and the stabilizer composition of the present invention, which contain compound (2) and compound (9) as essential components, are sometimes referred to as "the third thermoplastic polymer composition" and "the third stabilizer composition", respectively.
Moreover, the thermoplastic polymer composition of the present invention and the stabilizer composition of the present invention, which contain compound (9) and at least one selected from the group consisting of compounds (3) - (7) as essential components, are sometimes referred to as "the fourth thermoplastic polymer composition" and "the fourth stabilizer composition", respectively.

The first thermoplastic polymer composition is explained now. The first thermoplastic polymer composition contains compound (1), compound (9) and a thermoplastic polymer. Only one kind of compound (1) may be used or two or more kinds thereof may be used in combination. In the following, compound (1) is explained successively.

Each $R^1$ and/or each $R^2$ in the formula (1) are/is independently a $C_{1-8}$ alkyl group, a $C_{6-12}$ aryl group or a $C_{7-16}$ aralkyl group. While there are two $R^1$, they may be the same or different, and they are preferably the same. The same applies to $R^2$.

The $C_{1-8}$ alkyl group may be a chain or a cyclic group, preferably a chain (linear or branched chain), more preferably a branched chain. The $C_{1-8}$ alkyl group includes a linear $C_{1-8}$ alkyl group (e.g., a methyl group, an ethyl group, a propyl group, a butyl group, a pentyl group (to be also referred to as an amyl group) and the like), a branched chain $C_{3-8}$ alkyl group (e.g., an isopropyl group, an isobutyl group, a sec-butyl group, a t-butyl group, a t-pentyl group, a 2-ethylhexyl group and the like), and a cyclic $C_{3-8}$ alkyl group (i.e., a $C_{3-8}$ cycloalkyl group, for example, a cyclopentyl group, a cyclohexyl group and the like). Examples of the $C_{6-12}$ aryl group include a phenyl group, a 1-naphthyl group, a 2-naphthyl group and the like. Examples of the $C_{7-18}$ aralkyl group include a benzyl group, a 1-phenylethyl group, a 2-phenylethyl group and the like.

Preferably, each $R^1$ and/or each $R^2$ are/is independently a branched chain $C_{3-8}$ alkyl group, more preferably a $C_{4-8}$ alkyl group having a tertiary carbon atom, still more preferably a t-butyl group or a t-pentyl group, particularly preferably a t-pentyl group.

$R^3$ in the formula (1) is a hydrogen atom or a $C_{1-3}$ alkyl group. The $C_{1-3}$ alkyl group may be a linear or branched chain. Examples of the $C_{1-3}$ alkyl group include a methyl group, an ethyl group, a propyl group and an isopropyl group. $R^3$ is preferably a hydrogen atom or a methyl group.

$R^4$ in the formula (1) is a hydrogen atom or a methyl group, preferably a hydrogen atom.

Examples of compound (1) include 2,4-di-t-butyl-6-[1-(3,5-di-t-butyl-2-hydroxyphenyl)ethyl]phenyl (meth)acrylate, 2-t-butyl-6-(3-t-butyl-2-hydroxy-5-methylbenzyl)-4-methylphenyl (meth)acrylate, 2,4-di-t-pentyl-6-[1-(3,5-di-t-pentyl-2-hydroxyphenyl)ethyl]phenyl (meth)acrylate, 2,4-di-t-butyl-6-(3,5-di-t-butyl-2-hydroxy-benzyl)phenyl (meth)acrylate, 2-t-butyl-6-(3-t-butyl-2-hydroxy-5-methylbenzyl)-4-ethylphenyl (meth)acrylate, 2-t-pentyl-6-(3-t-pentyl-2-hydroxy-5-methylbenzyl)-4-methylphenyl (meth)acrylate and the like. Here, the "(meth)acrylate" means "acrylate and methacrylate".

Preferable compound (1) is 2,4-di-t-pentyl-6-[1-(3,5-dit-pentyl-2-hydroxyphenyl)ethyl]phenyl acrylate (hereinafter sometimes to be abbreviated as "compound (1-1)"), and 2-t-butyl-6-(3-t-butyl-2-hydroxy-5-methylbenzyl)-4-methylphenyl acrylate (hereinafter sometimes to be abbreviated as "compound (1-2)"). Compound (1-1) is commercially available as Sumilizer (registered trade mark) GS(F) (manufactured by Sumitomo Chemical Company, Limited), and compound (1-2) is commercially available as Sumilizer (registered trade mark) GM (manufactured by Sumitomo Chemical Company, Limited).

As compound (1), a commercially available product can be used, or it can be produced according to a known method (for example, the method described in JP-A-1-168643 or JP-A-58-84835).

Compound (9) is now explained. In the formula (9), m is an integer of 2 or more, preferably 2-6, more preferably 5.

Only one kind of compound (9) may be used or two or more kinds thereof may be used in combination. Examples of compound (9) include 1,2,3-cyclopropanetriol, 1,2,3,4-cyclobutanetetraol, 1,2,3,4,5-cyclopentanepentaol, 1,2,3,4,5,6-cyclohexanehexaol, 1,2,3,4,5,6,7-cycloheptaneheptaol, 1,2,3,4,5,6,7,8-cyclooctaneoctaol and the like. Of these, 1,2,3,4,5,6-cyclohexanehexaol wherein m is 5 is preferable. 1,2,3,4,5,6-Cyclohexanehexaol is also called inositol.

Inositol contains 9 kinds of isomers depending on the position of hydroxyl group. Only one kind of inositol isomers may be used or two or more kinds thereof may be used in combination. As inositol isomers, any of myo-inositol, epi-inositol, allo-inositol, muco-inositol, neo-inositol, chiro-inositol, scyllo-inositol and cis-inositol can be used. Of these, myo-inositol and scyllo-inositol shown by the following formulas are more preferable. Compound (9) is more preferably myo-inositol or scyllo-inositol. Chiro-inositol may be a D-form (i.e., D-chiro-inositol) or an L-form (i.e., L-chiro-inositol), or a mixture of a D-form and an L-form.

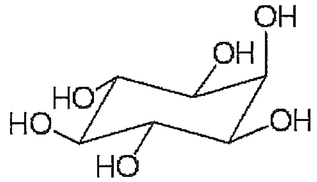

myo-inositol

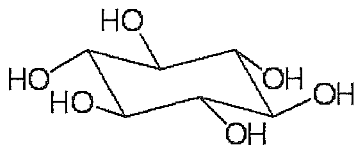

scyllo-inositol

As compound (9), a commercially available product can be directly used, or it can be hydrate, anhydrate or a mixture thereof.

Only one kind of thermoplastic polymers may be used or two or more kinds thereof may be used in combination. Examples of the thermoplastic polymer include polyethylene resin (high density polyethylene (HDPE), low density polyethylene (LDPE), linear low density polyethylene (LLDPE), ethylene-vinyl alcohol copolymer (EVOH), ethylene-ethyl acrylate copolymer (EEA), ethylene-vinyl acetate copolymer (EVA) and the like), polypropylene resin (crystalline propylene homopolymer, propylene-ethylene random copolymer, propylene-α-olefin random copolymer, propylene-ethylene-α-olefin copolymer, polypropylene block copolymer comprised of a block of propylene homopolymer or copolymer containing propylene as a main component and a block of copolymer of propylene and ethylene and/or other α-olefin, and the like), methylpentene polymer, polystyrene resin (polystyrenes such as polystyrene (PS), poly(p-methylstyrene), poly(α-methylstyrene) and the like, acrylonitrile-styrene copolymer (SAN), acrylonitrile-butadiene-styrene copolymer (ABS), special acrylic rubber-acrylonitrile-styrene copolymer, acrylonitrile-chlorinated polyethylene-styrene copolymer (ACS), styrene-ethylene-butylene-styrene block copolymer (SEBS), styrene-isoprene-styrene block copolymer (SIS) and the like), polybutadiene resin (polybutadiene; polybutadiene rubber (BR); styrene-butadiene copolymer (SB); styrene-butadiene block copolymer (SBS); impact resistance polystyrene (HI-PS) modified by polybutadiene, styrene-butadiene copolymer or SBS, styrene-butadiene thermoplastic elastomer and the like), chlorinated polyethylene (CPE), polychloroprene, chlorinated rubber, poly(vinyl chloride) thermoplastic elastomer, poly(vinyl chloride) (PVC), poly(vinylidene chloride) (PVDC), methacrylate resin, fluororesin, polyacetal (POM), grafted poly(phenylene ether) resin, poly(phenylene sulfide) resin (PPS), polyurethane (PU), polyamide (PA, also called as nylon (registered trade mark), for example, nylon 6 (Ny6), nylon 11 (Ny11), nylon 12 (Ny12), nylon 610 (Ny610), nylon 612 (Ny612), nylon MXD6 (NyMXD6)), polyester resin (e.g., poly(ethylene terephthalate) (PET), poly(butylene terephthalate) (PBT) and the like), poly(lactic acid) (PLA), polycarbonate (PC), polyacrylate, polysulfone (PPSU), poly(ether ether ketone) (PEEK), poly(ether sulfone) (PES), aromatic polyester, diallyl phthalate prepolymer, silicone resin (SI), 1,2-polybutadiene, polyisoprene, butadiene-acrylonitrile copolymer (NBR), ethylene-methyl methacrylate copolymer (EMMA) and the like.

Of these, due to good molding processability, polyethylene resin, polypropylene resin, polystyrene resin and polybutadiene resin are preferable, polyethylene resin and polybutadiene resin are more preferable, and styrene-butadiene block copolymer (SBS) is still more preferable.

While the weight average molecular weight (Mw) of the thermoplastic polymer to be used is not particularly limited, it is generally not less than 1000 and not more than 300,000. Mw can be measured by, for example, gel permeation chromatography (GPC) using polystyrene as a standard.

The total amount of compound (1) and compound (9) in the first thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of compound (1) and compound (9) in the first thermoplastic polymer composition (i.e., compound (1):compound (9)) is preferably 1000:1 - 0.05:1. Compound (1):compound (9) is more preferably 1000:1 - 0.1:1 from the aspect of processing stability of the thermoplastic polymer composition, and still more preferably 1000:1 - 0.5:1, particularly preferably 1000:1 - 1:1, from the aspect of suppression of color change of the thermoplastic polymer composition.

The first thermoplastic polymer composition may further contain compound (2). Only one kind of compound (2) may be used or two or more kinds thereof may be used in combination. In the following, compound (2) is explained successively.

Each $R^5$ and/or each $R^6$ in the formula (2) are/is independently a hydrogen atom or a $C_{1-6}$ alkyl group. When n is two or more, $R^5$ may be the same as or different from each other, and they are preferably the same. The same applies to $R^6$. The $C_{1-6}$ alkyl group may be a chain or a cyclic group, and the chain may be a linear or branched chain. The $C_{1-6}$ alkyl group includes a linear $C_{1-6}$ alkyl group (a methyl group, an ethyl group, a propyl group, a butyl group, a pentyl group, a hexyl group), a branched chain $C_{3-6}$ alkyl group (e.g., an isopropyl group, an isobutyl group, a t-butyl group, an isopentyl group, a t-pentyl group, a t-hexyl group), and a cyclic $C_{3-6}$ alkyl group (i.e., a $C_{3-6}$ cycloalkyl group, for example, a cyclopentyl group, a cyclohexyl group). Preferably, each $R^5$ and/or each $R^6$ are/is independently a linear $C_{1-6}$ alkyl group or branched chain $C_{3-6}$ alkyl group, more preferably a methyl group or a t-butyl group. Still more preferably, each $R^5$ and each $R^6$ are t-butyl groups.

$L^1$ in the formula (2) is an n-valent $C_{1-24}$ alcohol residue optionally containing a hetero atom, and n is an integer of 1 - 4. Examples of the hetero atom include an oxygen atom, a sulfur atom, a nitrogen atom and the like. These hetero atoms may be replaced with the carbon atom of the n-valent $C_{1-24}$ alcohol residue. That is, the n-valent $C_{1-24}$ alcohol residue may have -O-, -S-, -NR- wherein R is a hydrogen atom or other substituent (for example, a $C_{1-6}$ alkyl group)) and the like. As the hetero atom, an oxygen atom is preferable.

The n-valent $C_{1-24}$ alcohol residue (n=1 - 4) may be a chain or a cyclic residue, or a combination of these. The chain may be a linear or branched chain.

Examples of the monovalent $C_{1-24}$ alcohol residue include the residues of methanol, ethanol, propanol, isopropanol, butanol, t-butanol, hexanol, octanol, decanol, dodecanol, tetradecanol, hexadecanol, octadecanol and the like.

Examples of the divalent $C_{1-24}$ alcohol residue include the residues of ethylene glycol, 1,2-propanediol, 1,3-propanediol, 1,4-butanediol, 1,5-pentanediol, 1,6-hexanediol, 1,8-octanediol, 1,10-decanediol, 1,12-dodecanediol, 1,14-tetradecanediol, 1,16-hexadecanediol, diethylene glycol, triethylene glycol, 3,9-bis(1,1-dimethyl-2-hydroxyethyl)-2,4,8,10-tetraoxaspiro[5.5]undecane and the like.

Examples of the trivalent $C_{1-24}$ alcohol residue include the residues of glycerol and the like.

Examples of the tetravalent $C_{1-24}$ alcohol residue include the residues of erythritol, pentaerythritol and the like.

Examples of compound (2) include ester of 3-(3,5-di-t-butyl-4-hydroxyphenyl)propionic acid, 3-(3-t-butyl-4-hydroxy-5-methylphenyl)propionic acid or 3-(3,5-dicyclohexyl-4-hydroxyphenyl)propionic acid and a monovalent or polyvalent alcohol. Examples of the aforementioned monovalent or polyvalent alcohol include methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, triethylene glycol, pentaerythritol, tris(hydroxyethyl)isocyanurate, N,N'-bis(hydroxyethyl) oxamide, 3-thiaundecanol, 3-thiapentadecanol, trimethylhexanediol, trimethylolpropane, 4-hydroxymethyl-1-phospha-2,6,7-trioxabicyclo[2,2,2]octane, 3,9-bis(1,1-dimethyl-2-hydroxyethyl)-2,4,8,10-tetraoxaspiro[5.5]undecane, a mixture thereof and the like.

Preferable compound (2) is octadecyl 3-(3,5-di-t-butyl-4-hydroxyphenyl)propionate (hereinafter sometimes to be abbreviated as "compound (2-1)"), 3,9-bis[2-{3-(3-t-butyl-4-hydroxy-5-methylphenyl)propionyloxy}-1,1-dimethylethyl]-2,4,8,10-tetraoxaspiro[5.5]undecane (hereinafter sometimes to be abbreviated as "compound (2-2)") and pentaerythritol tetrakis[3-(3,5-di-t-butyl-4-hydroxyphenyl)propionate] (hereinafter sometimes to be abbreviated as "compound (2-3)"). Compound (2-1) is commercially available as "Irganox (registered trade mark) 1076" (manufactured by BASF), compound (2-2) is commercially available as "Sumilizer (registered trade mark) GA-80" (manufactured by Sumitomo Chemical Company, Limited), and compound (2-3) is commercially available as "Irganox (registered trade mark) 1010" (manufactured by BASF).

As compound (2), a commercially available product can be used, or it can be produced according to a known method (for example, the method described in US Patent No. 3330859, US Patent No. 3644482 or JP-A-59-25826).

When the first thermoplastic polymer composition contains compound (2), the content of compound (2) is preferably 0.001 - 3 parts by weight, more preferably 0.02 - 2 parts by weight, relative to 100 parts of weight of the first thermoplastic polymer composition.

The first thermoplastic polymer composition may further contain at least one selected from the group consisting of compounds (3) - (7). Only one kind of compounds (3) - (7) may be used or two or more kinds thereof may be used in combination. In the following, compounds (3) - (7) are explained successively.

Each $R^7$ and/or each $R^8$ in the formula (3) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. While there are three $R^7$, they may be the same as or different from each other, and they are preferably the same. The same applies to $R^8$. The positions of $R^7$ and $R^8$ are preferably the 2-position and the 4-position.

The $C_{1-9}$ alkyl group may be a linear or branched chain. The carbon number of the $C_{1-9}$ alkyl group is preferably not less than 3 and not more than 5. Examples of the $C_{1-9}$ alkyl group include a methyl group, an ethyl group, a propyl group, an isopropyl group, a butyl group, an isobutyl group, a sec-butyl group, a t-butyl group, a pentyl group, a t-pentyl group, a 2-ethylhexyl group, a nonyl group and the like.

The $C_{5-8}$ cycloalkyl group includes a cyclopentyl group, a cyclohexyl group, a cycloheptyl group and a cyclooctyl group.

Examples of the $C_{6-12}$ alkylcycloalkyl group include a 1-methylcyclopentyl group, a 2-methylcyclopentyl group, a 1-methylcyclohexyl group, a 2-methylcyclohexyl group, a 1-methyl-4-isopropylcyclohexyl group and the like.

Examples of the $C_{7-12}$ aralkyl group include a benzyl group, an $\alpha$-methylbenzyl group (also to be referred to as a 1-phenylethyl group), an $\alpha,\alpha$-dimethylbenzyl group (also to be referred to as a 1-methyl-1-phenylethyl group or a cumyl group) and the like.

Preferably, each $R^7$ and/or each $R^8$ are/is independently a hydrogen atom or a $C_{1-9}$ alkyl group, more preferably a hydrogen atom, a t-butyl group or a nonyl group, still more preferably a t-butyl group.

Examples of compound (3) include tris(2,4-di-t-butylphenyl) phosphite (hereinafter sometimes to be abbreviated as "compound (3-1)"), triphenyl phosphite, tris(4-nonylphenyl) phosphite, tris(2,4-dinonylphenyl) phosphite and the like. Of these, compound (3-1) is preferable. Compound (3-1) is commercially available as "Irgafos (registered trade mark) 168" (manufactured by BASF).

Each $R^9$ in the formula (4) is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. While there are four $R^9$, they may be the same as or different from each other, and they are preferably the same. Examples of the $C_{1-9}$ alkyl group, $C_{5-8}$ cycloalkyl group, $C_{6-12}$ alkylcycloalkyl group and $C_{7-12}$ aralkyl group for $R^9$ include those mentioned above. Each $R^9$ is preferably independently a hydrogen atom or a $C_{1-9}$ alkyl group, more preferably a hydrogen atom.

Examples of compound (4) include tetrakis(2,4-di-t-butylphenyl)-4,4-biphenylene diphoshonite (hereinafter

sometimes to be abbreviated as "compound (4-1)"), tetrakis(2,4-di-t-butyl-5-methylphenyl)-4,4-biphenylene diphoshonite (hereinafter sometimes to be abbreviated as "compound (4-2)") and the like. Of these, compound (4-1) is preferable. Compound (4-1) is commercially available as "Sandostab (registered trade mark) P-EPQ" (manufactured by Clariant), and compound (4-2) is commercially available as "Yoshinox (registered trade mark) GSY-P101" (manufactured by API).

Each $R^{10}$ in the formula (5) is independently a $C_{1-18}$ alkyl group or a phenyl group. The phenyl group for $R^{10}$ may have, as a substituent, at least one selected from the group consisting of a $C_{1-9}$ alkyl group, a $C_{5-8}$ cycloalkyl group, a $C_{6-12}$ alkylcycloalkyl group and a $C_{7-12}$ aralkyl group. Examples of these substituents for phenyl group include those mentioned above. In addition, while there are two $R^{10}$, they may be the same as or different from each other, and they are preferably the same.

The $C_{1-18}$ alkyl group may be a linear or branched chain. The carbon number of the $C_{1-18}$ alkyl group is preferably not less than 12 and not more than 18. Examples of the $C_{1-18}$ alkyl group include a methyl group, an ethyl group, a propyl group, an isopropyl group, a butyl group, an isobutyl group, a t-butyl group, a hexyl group, an octyl group, a decyl group, a dodecyl group, a tetradecyl group, a hexadecyl group, an octadecyl group and the like.

Examples of the phenyl group substituted by a $C_{1-9}$ alkyl group include a 2-methylphenyl group, a 4-methylphenyl group, a 2-t-butylphenyl group, a 4-t-butylphenyl group, a 2-nonylphenyl group, a 4-nonylphenyl group, a 2,4-di-t-butylphenyl group, a 2,4-di-nonylphenyl group, a 2,6-di-t-butylphenyl group, a 2-t-butyl-4-methylphenyl group, a 2-t-butyl-4-ethylphenyl group, a 2,5-di-t-butylphenyl group, a 2,6-di-t-butyl-4-methylphenyl group and the like.

Examples of the phenyl group substituted by a $C_{5-8}$ cycloalkyl group include a 2-cyclopentylphenyl group, a 2-cyclohexylphenyl group, a 4-cyclohexylphenyl group, a 2,4-dicyclohexylphenyl group and the like.

Examples of the phenyl group substituted by a $C_{6-12}$ alkylcycloalkyl group include a 2-(2-methylcyclohexyl)phenyl group, a 4-(2-methylcyclohexyl)phenyl group, a 2,4-di-(2-methylcyclohexyl)phenyl group and the like.

Examples of the phenyl group substituted by a $C_{7-12}$ aralkyl group include a 2-benzylphenyl group, a 2-cumylphenyl group, a 4-cumylphenyl group, a 2,4-dicumylphenyl group and the like.

Examples of the phenyl group substituted by a $C_{1-9}$ alkyl group and a $C_{5-8}$ cycloalkyl group include a 2-methyl-4-cyclohexylphenyl group and the like. Examples of the phenyl group substituted by a $C_{1-9}$ alkyl group and a $C_{6-12}$ alkylcycloalkyl group include a 2-methyl-4-(2-methylcyclohexyl)phenyl group and the like. Examples of the phenyl group substituted by a $C_{1-9}$ alkyl group and a $C_{7-12}$ aralkyl group include a 2-benzyl-4-methylphenyl group and the like.

Each $R^{10}$ is preferably independently an octadecyl group (also to be referred to as a stearyl group), a 2,6-di-t-butyl-4-methylphenyl group, a 2,4-di-t-butylphenyl group or a 2,4-dicumylphenyl group.

Examples of compound (5) include bis(2,6-di-t-butyl-4-methylphenyl)pentaerythritol diphosphite (hereinafter sometimes to be abbreviated as "compound (5-1)"), bis(2,4-dit-butylphenyl)pentaerythritol diphosphite (hereinafter sometimes to be abbreviated as "compound (5-2)"), bis(2,4-dicumylphenyl)pentaerythritol diphosphite (hereinafter sometimes to be abbreviated as "compound (5-3)"), distearylpentaerythritol diphosphite (hereinafter sometimes to be abbreviated as "compound (5-4)"), diisodecylpentaerythritol diphosphite, bis(2,4-di-t-butylphenyl)pentaerythritol diphosphite, bis(2,4-di-t-butyl-6-methylphenyl)pentaerythritol diphosphite, bis(2,4,6-tri-t-butylphenyl)pentaerythritol diphosphite and the like. Of these, compound (5-1), compound (5-2) and compound (5-3) are preferable. Compound (5-1) is commercially available as "Adekastab (registered trade mark) PEP-36" (manufactured by ADEKA), compound (5-2) is commercially available as "Ultranox (registered trade mark) 626" (manufactured by GE Plastics), compound (5-3) is commercially available as "Doverphos S9228T" (manufactured by Dover Chemical Corporation), and compound (5-4) is commercially available as "Adekastab (registered trade mark) PEP-8" (manufactured by ADEKA).

Each $R^{11}$ and/or each $R^{12}$ in the formula (6) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. Examples of the $C_{1-9}$ alkyl group, $C_{5-8}$ cycloalkyl group, $C_{6-12}$ alkylcycloalkyl group and $C_{7-12}$ aralkyl group for $R^{11}$ or $R^{12}$ include those mentioned above. While there are six $R^{11}$, they may be the same as or different from each other, and they are preferably the same. The same applies to $R^{12}$. The positions of $R^{11}$ and $R^{12}$ are preferably the 3-position and the 5-position, when the position of the carbon atom on the benzene ring to which $L^2$ is bonded is the 1-position. Preferably, each $R^{11}$ and/or each $R^{12}$ are/is independently a $C_{1-9}$ alkyl group, more preferably a t-butyl group.

Each $L^2$ in the formula (6) is independently a single bond, a sulfur atom or a divalent group represented by the formula (6a). The total carbon number of $R^{13}$ and $R^{14}$ in the formula (6a) is not more than 7, and $R^{13}$ and $R^{14}$ are each independently a hydrogen atom or a $C_{1-7}$ alkyl group. While there are three $L^2$, they may be the same as or different from each other, and they are preferably the same.

The $C_{1-7}$ alkyl group may be a linear or branched chain. The carbon number of the $C_{1-7}$ alkyl group is preferably not less than 1 and not more than 3. The total carbon number of $R^{13}$ and $R^{14}$ is preferably not more than 3. Examples of the $C_{1-7}$ alkyl group include a methyl group, an ethyl group, a propyl group, an isopropyl group, a butyl group, an isobutyl group, a sec-butyl group, a t-butyl group, a pentyl group, an isopentyl group, a neopentyl group, a t-pentyl group, a hexyl group, a heptyl group and the like.

Examples of the divalent group (6a) include $-CH_2-$, $-CH(CH_3)-$, $-CH(C_2H_5)-$, $-C(CH_3)_2-$, $-CH(n\text{-}C_3H_7)-$ and the like.

Each $L^2$ is preferably $-CH_2-$ or a single bond, more preferably a single bond.

Each $L^3$ in the formula (6) is independently a $C_{2-8}$ alkylene group. While there are three $L^3$, they may be the same as or different from each other, and they are preferably the same.

Examples of the $C_{2-8}$ alkylene group include an ethylene group, a propylene group ($-CH(CH_3)CH_2-$, $-CH_2CH(CH_3)-$), a trimethylene group, a tetramethylene group, a pentamethylene group, a hexamethylene group, an octamethylene group, a 2,2-dimethyl-1,3-propylene group and the like.

Each $L^3$ is preferably independently an ethylene group or a trimethylene group, more preferably an ethylene group.

As compound (6), 6,6',6"-[nitrilotris(ethyleneoxy)]tris(2,4,8,10-tetra-t-butyldibenzo[d,f][1,3,2]dioxaphosphepine) (hereinafter sometimes to be abbreviated as "compound (6-1)") is preferable. Compound (6-1) is commercially available as "Irgafos (registered trade mark) 12" (manufactured by BASF).

Each $R^{15}$ and/or each $R^{16}$ in the formula (7) are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group. Examples of the $C_{1-9}$ alkyl group, $C_{5-8}$ cycloalkyl group, $C_{6-12}$ alkylcycloalkyl group and $C_{7-12}$ aralkyl group for $R^{15}$ or $R^{16}$ include those mentioned above. While there are two $R^{15}$, they may be the same as or different from each other, and they are preferably the same. The same applies to $R^{16}$. The positions of $R^{15}$ and $R^{16}$ are preferably the 3-position and the 5-position, when the position of the carbon atom on the benzene ring to which $L^4$ is bonded is the 1-position. That is, when the position of the carbon atom on the benzene ring to which O is bonded is the 1-position, respectively, the 2-position and the 4-position are preferable. Preferably, each $R^{15}$ and/or each $R^{16}$ are/is independently a $C_{1-9}$ alkyl group, more preferably a t-butyl group.

$R^{17}$ in the formula (7) is a $C_{1-8}$ alkyl group or a phenyl group. The phenyl group for $R^{17}$ may have, as a substituent, at least one selected from the group consisting of a $C_{1-9}$ alkyl group, a $C_{5-8}$ cycloalkyl group, a $C_{6-12}$ alkylcycloalkyl group and a $C_{7-12}$ aralkyl group. Examples of the $C_{1-8}$ alkyl group and the phenyl group having a substituent for $R^{17}$ include those mentioned above. The carbon number of the $C_{1-8}$ alkyl group for $R^{17}$ is preferably not less than 4 and not more than 8. $R^{17}$ is preferably a $C_{1-8}$ alkyl group, more preferably an octyl group.

$L^4$ in the formula (7) is a single bond, a sulfur atom or a divalent group represented by the formula (7a). The total carbon number of $R^{18}$ and $R^{19}$ in the formula (7a) is not more than 7, and $R^{18}$ and $R^{19}$ are each independently a hydrogen atom or a $C_{1-7}$ alkyl group. Examples of the $C_{1-7}$ alkyl group for $R^{18}$ or $R^{19}$ include those mentioned above. The total carbon number for $R^{18}$ or $R^{19}$ is preferably not more than 3. Specific examples of the divalent group (7a) include those recited for the divalent group (6a). $L^4$ is preferably $-CH_2-$ or a single bond, more preferably $-CH_2-$.

Examples of compound (7) include 2,2-methylenebis(4,6-dit-butylphenyl) octyl phosphite (hereinafter sometimes to be abbreviated as "compound (7-1)") and 2,2'-methylenebis(4,6-dit-butylphenyl) 2-ethylhexyl phosphite. Of these, compound (7-1) is preferable. Compound (7-1) is commercially available as "Adekastab (registered trade mark) HP-10" (manufactured by ADEKA).

Among compounds (3) - (7), compound (3) is preferable, and compound (3-1) is more preferable.

When the first thermoplastic polymer composition contains at least one selected from the group consisting of compounds (3) - (7), the total amount of the compounds selected from the group consisting of compounds (3) - (7) is preferably 0.001 - 3 parts by weight, more preferably 0.02 - 2 parts by weight, relative to 100 parts of weight of the first thermoplastic polymer composition.

Next, the second thermoplastic polymer composition is explained. The second thermoplastic polymer composition contains compound (8), compound (9) and a thermoplastic polymer. Only one kind of compound (8) may be used or two or more kinds thereof may be used in combination. Explanations of compound (9) and the thermoplastic polymer in the second thermoplastic polymer composition are the same as those mentioned above. In the following, compound (8) is explained successively.

Each $R^{20}$ and/or each $R^{21}$ in the formula (8) are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group. $R^{23}$ and $R^{24}$ in the formula (8) are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group. While there are two $R^{20}$, they may be the same as or different from each other, and they are preferably the same. The same applies to $R^{21}$.

The $C_{1-8}$ alkyl group may be a linear or branched chain. The carbon number of the $C_{1-8}$ alkyl group is preferably not less than 1 and not more than 5. Examples of the $C_{1-8}$ alkyl group include a methyl group, an ethyl group, a propyl group, an isopropyl group, a butyl group, an isobutyl group, a sec-butyl group, a t-butyl group, a t-pentyl group, an isooctyl group (also to be referred to as a 6-methylheptyl group), a t-octyl group (also to be referred to as a 1,1,3,3-tetramethylbutyl group), a 2-ethylhexyl group and the like.

The $C_{5-8}$ cycloalkyl group includes a cyclopentyl group, a cyclohexyl group, a cycloheptyl group and a cyclooctyl group.

Examples of the $C_{6-12}$ alkylcycloalkyl group include a 1-methylcyclopentyl group, a 2-methylcyclopentyl group, a 1-methylcyclohexyl group, a 2-methylcyclohexyl group, a 1-methyl-4-isopropylcyclohexyl group and the like.

Examples of the $C_{7-12}$ aralkyl group include a benzyl group, $\alpha$-methylbenzyl group (also to be referred to as a

1-phenylethyl group), an α,α-dimethylbenzyl group (also to be referred to as a 1-methyl-1-phenylethyl group or a cumyl group) and the like.

Preferably, each $R^{20}$ and/or $R^{23}$ are/is independently a $C_{1-8}$ alkyl group (more preferably a $C_{4-8}$ alkyl group having a tertiary carbon atom), a $C_{5-8}$ cycloalkyl group (more preferably a cyclohexyl group) or a $C_{6-12}$ alkylcycloalkyl group (more preferably a 1-methylcyclohexyl group). As the $C_{4-8}$ alkyl group having a tertiary carbon atom, a t-butyl group, a t-pentyl group and a t-octyl group are still more preferable.

Each $R^{21}$ is preferably independently a $C_{1-8}$ alkyl group, a $C_{5-8}$ cycloalkyl group or a $C_{6-12}$ alkylcycloalkyl group, more preferably a $C_{1-5}$ alkyl group. The $C_{1-5}$ alkyl group may be a linear or branched chain. Examples of the $C_{1-5}$ alkyl group include a methyl group, an ethyl group, a propyl group, an isopropyl group, a butyl group, an isobutyl group, a sec-butyl group, a t-butyl group, a t-pentyl group and the like. More preferably, each $R^{21}$ is independently a methyl group, a t-butyl group or a t-pentyl group.

$R^{24}$ is preferably a hydrogen atom or a $C_{1-5}$ alkyl group, more preferably a hydrogen atom or a methyl group. Examples of the $C_{1-5}$ alkyl group for $R^{24}$ include those mentioned above.

Each $R^{22}$ in the formula (8) is independently a hydrogen atom or a $C_{1-8}$ alkyl group. While there are two $R^{22}$, they may be the same as or different from each other, and they are preferably the same. Each $R^{22}$ is preferably a hydrogen atom or a $C_{1-5}$ alkyl group, more preferably a methyl group or a hydrogen atom. Examples of the $C_{1-8}$ alkyl group and $C_{1-5}$ alkyl group for $R^{22}$ include those mentioned above.

$L^5$ in the formula (8) is a single bond, a sulfur atom or a divalent group represented by the formula (8a). $R^{25}$ in the formula (8a) is a hydrogen atom, a $C_{1-8}$ alkyl group or a $C_{5-8}$ cycloalkyl group. $R^{25}$ is preferably a hydrogen atom or a $C_{1-5}$ alkyl group. Examples of the $C_{1-8}$ alkyl group, $C_{1-5}$ alkyl group and $C_{5-8}$ cycloalkyl group for $R^{25}$ include those mentioned above. $L^5$ is preferably a single bond or the divalent group (8a), more preferably a single bond.

$L^6$ in the formula (8) is a $C_{2-8}$ alkylene group or a divalent group represented by the formula (8b). $L^7$ in the formula (8b) is a single bond or a $C_{1-8}$ alkylene group. The $C_{2-8}$ alkylene group and $C_{1-8}$ alkylene group may be each a linear or branched chain. Examples of the $C_{2-8}$ alkylene group include an ethylene group, a propylene group ($-CH(CH_3)CH_2-$, $-CH_2CH(CH_3)-$), a trimethylene group, a tetramethylene group, a pentamethylene group, a hexamethylene group, an octamethylene group, a 2,2-dimethyl-1,3-propylene group and the like. Examples of the $C_{1-8}$ alkylene group include a methylene group, the aforementioned $C_{2-8}$ alkylene group and the like.

$L^6$ is preferably a $C_{2-8}$ alkylene group, the divalent group (8b) wherein $L^7$ is a single bond (i.e., a carbonyl group), or the divalent group (8b) wherein $L^7$ is an ethylene group; more preferably a $C_{2-8}$ alkylene group; and still more preferably a trimethylene group.

One of $Z^1$ and $Z^2$ in the formula (8) is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group. Examples of the $C_{1-8}$ alkyl group for $Z^1$ and $Z^2$ include those mentioned above.

The $C_{1-8}$ alkoxy group may be a linear or branched chain. Examples of the $C_{1-8}$ alkoxy group include a methoxy group, an ethoxy group, a propoxy group, an isopropoxy group, a butoxy group, an isobutoxy group, a sec-butoxy group, a t-butoxy group, a t-pentyloxy group, an isooctyloxy group (also to be referred to as a 6-methylheptyloxy group), a t-octyloxy group (also to be referred to as a 1,1,3,3-tetramethylbutyloxy group), a 2-ethylhexyloxy group and the like.

Examples of the $C_{7-12}$ aralkyloxy group include a benzyloxy group, an α-methylbenzyloxy group, an α,α-dimethylbenzyloxy group and the like.

Preferably, one of $Z^1$ and $Z^2$ is a hydroxy group, and the other is a hydrogen atom.

A preferable combination of the substituents is a combination wherein each $R^{20}$ and/or $R^{23}$ are/is independently a $C_{4-8}$ alkyl group having a tertiary carbon atom, cyclohexyl or a 1-methylcyclohexyl group, each $R^{21}$ is independently a $C_{1-5}$ alkyl group, each $R^{22}$ is independently a hydrogen atom or a $C_{1-5}$ alkyl group, $R^{24}$ is a hydrogen atom or a $C_{1-5}$ alkyl group, $L^5$ is a single bond, $L^6$ is a $C_{2-8}$ alkylene group, and one of $Z^1$ and $Z^2$ is a hydroxy group and the other is a hydrogen atom. In this preferable combination, each $R^{20}$ is more preferably the same. The same applies to each $R^{21}$ and each $R^{22}$. In addition, in this preferable combination, each $R^{20}$ , each $R^{22}$ and $R^{23}$ are all still more preferably t-butyl groups or t-pentyl groups (particularly t-butyl groups).

Examples of compound (8) include 6-[3-(3-t-butyl-4-hydroxy-5-methylphenyl)propoxy]-2,4,8,10-tetra-t-butyldibenzo[d,f][1,3,2]dioxaphosphepine, 2,10-dimethyl-4,8-di-t-butyl-6-[3-(3,5-di-t-butyl-4-hydroxyphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]dibenzo[d,f][1,3,2]dioxaphosphepine, 2,4,8,10-tetra-t-pentyl-6-[3-(3,5-di-t-butyl-4-hydroxyphenyl)propoxy]-12-methyl-12H-dibenzo[d,g][1,3,2]dioxaphosphocin, 2,10-dimethyl-4,8-di-t-butyl-6-[3-(3,5-di-t-butyl-4-hydroxyphenyl)propionyloxy]-12H-dibenzo[d,g][1,3,2]dioxaphosphocin, 2,4,8,10-tetra-t-pentyl-6-[3-(3,5-di-t-butyl-4-hydroxyphenyl)propionyloxy]-12-methyl-12H-dibenzo[d,g][1,3,2]dioxaphosphocin, 2,4,8,10-tetra-t-butyl-6-[3-(3,5-di-t-butyl-4-hydroxyphenyl)propionyloxy]-dibenzo[d,f][1,3,2]dioxaphosphepine, 2,10-dimethyl-4,8-di-t-butyl-6-(3,5-di-t-butyl-4-hydroxybenzoyloxy)-12H-dibenzo[d,g][1,3,2]dioxaphosphocin, 2,4,8,10-tetra-t-butyl-6-(3,5-di-t-butyl-4-hydroxybenzoyloxy)-12-methyl-12H-dibenzo[d,g][1,3,2]dioxaphosphocin, 2,10-dimethyl-4,8-di-t-butyl-6-[3-(3-methyl-4-hydroxy-5-t-butylphenyl)propoxy]-12H-dibenzo[d,g][1,3,2]dioxaphosphocin, 2,4,8,10-tetra-t-butyl-6-[3-(3,5-di-t-butyl-4-hydroxyphenyl)propoxy]-12H-dibenzo[d,g][1,3,2]dioxaphosphocin, 2,10-diethyl-4,8-di-t-butyl-6-[3-(3,5-di-t-butyl-4-hydroxyphenyl)propoxy]-12H-dibenzo[d,g][1,3,2]dioxaphosphocin, 2,4,8,10-tetra-t-butyl-6-[2,2-dimethyl-3-(3-t-butyl-4-hydroxy-5-methylphenyl)propoxy]-dibenzo[d,f][1,3,2]dioxaphosphepine and the like.

Of compound (8), 6-[3-(3-t-butyl-4-hydroxy-5-methylphenyl)propoxy]-2,4,8,10-tetra-t-butyldibenzo[d,f][1,3,2]dioxaphosphepine (hereinafter sometimes to be abbreviated as "compound (8-1)") is preferable. Compound (8-1) is commercially available as "Sumilizer (registered trade mark) GP" (manufactured by Sumitomo Chemical Company, Limited).

As compound (8), a commercially available product can be used, or it can be produced according to a known method (for example, the method described in JP-A-10-273494).

The total amount of compound (8) and compound (9) in the second thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of compound (8) and compound (9) in the second thermoplastic polymer composition (i.e., compound (8):compound (9)) is preferably 1000:1 - 0.05:1. Compound (8):compound (9) is more preferably 1000:1 - 0.1:1 from the aspect of processing stability of a thermoplastic polymer composition, and still more preferably 1000:1 - 0.5:1, particularly preferably 1000:1 - 1:1, from the aspect of suppression of color change of a thermoplastic polymer composition.

The second thermoplastic polymer composition may further contain compound (2). Only one kind of compound (2) may be used or two or more kinds thereof may be used in combination. Explanations of compound (2) are the same as those mentioned above.

When the second thermoplastic polymer composition contains compound (2), the content of compound (2) is preferably 0.001 - 3 parts by weight, more preferably 0.02 - 2 parts by weight, relative to 100 parts by weight of the second thermoplastic polymer composition.

The second thermoplastic polymer composition may further contain at least one selected from the group consisting of compounds (3) - (7). Only one kind of compounds (3) - (7) may be used or two or more kinds thereof may be used in combination. Explanations of compounds (3) - (7) are the same as those mentioned above.

When the second thermoplastic polymer composition contains at least one selected from the group consisting of compounds (3) - (7), the total amount of the compounds selected from the group consisting of compounds (3) - (7) is preferably 0.001 - 3 parts by weight, more preferably 0.02 - 2 parts by weight, relative to 100 parts by weight of the second thermoplastic polymer composition.

Next, the third thermoplastic polymer composition is explained. The third thermoplastic polymer composition contains compound (2), compound (9) and a thermoplastic polymer. Only one kind of compound (2) may be used or two or more kinds thereof may be used in combination. Explanations of compound (2), compound (9) and the thermoplastic polymer in the third thermoplastic polymer composition are the same as those mentioned above.

The total amount of compound (2) and compound (9) in the third thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of compound (2) and compound (9) in the third thermoplastic polymer composition (i.e., compound (2):compound (9)) is preferably 1000:1 - 0.05:1. Compound (2):compound (9) is more preferably 1000:1 - 0.1:1 from the aspect of processing stability of a thermoplastic polymer composition, and still more preferably 1000:1 - 0.5:1, particularly preferably 1000:1 - 1:1, from the aspect of suppression of color change of a thermoplastic polymer composition.

The third thermoplastic polymer composition may further contain compound (1). Only one kind of compound (1) may be used or two or more kinds thereof may be used in combination. Explanations of compound (1) are the same as those mentioned above.

The third thermoplastic polymer composition may further contain at least one selected from the group consisting of compounds (3) - (7). Only one kind of compounds (3) - (7) may be used or two or more kinds thereof may be used in combination. Explanations of compounds (3) - (7) are the same as those mentioned above.

The third thermoplastic polymer composition may further contain compound (8). Only one kind of compound (8) may be used or two or more kinds thereof may be used in combination. Explanations of compound (8) are the same as those mentioned above.

Of compound (1) and compounds (3) - (8) usable for the third thermoplastic polymer composition, compound (1), compound (3) and compound (8) are preferable.

When the third thermoplastic polymer composition contains at least one of compound (1) and compounds (3) - (8), the content of each of compound (1) and compounds (3) - (8) is preferably 0.001 - 3 parts by weight, more preferably 0.02 - 2 parts by weight, relative to 100 parts by weight of the third thermoplastic polymer composition.

Next, the fourth thermoplastic polymer composition is explained. The fourth thermoplastic polymer composition contains compound (9), a thermoplastic polymer and at least one selected from the group consisting of compounds (3)

- (7) (i.e., organic phosphorous compound). Only one kind of compounds (3) - (7) may be used or two or more kinds thereof may be used in combination. Explanations of compounds (3) - (7) and the thermoplastic polymer in the fourth thermoplastic polymer composition are the same as those mentioned above.

The total amount of compound (9) and the compound selected from the group consisting of compounds (3) - (7) in the fourth thermoplastic polymer composition is preferably 0.001 - 3 parts by weight, more preferably 0.02 - 2 parts by weight, still more preferably 0.02 - 1 part by weight, relative to 100 parts by weight of the thermoplastic polymer.

The weight ratio of the compound selected from the group consisting of compounds (3) - (7) and compound (9) in the fourth thermoplastic polymer composition (i.e., compound selected from the group consisting of compounds (3) - (7):compound (9)) is preferably 1000:1 - 0.05:1. The compound selected from the group consisting of compounds (3) - (7):compound (9) is more preferably 1000:1 - 0.1:1 from the aspect of processing stability of a thermoplastic polymer composition, and still more preferably 1000:1 - 0.5:1, particularly preferably 1000:1 - 1:1, from the aspect of suppression of color change of a thermoplastic polymer composition.

The fourth thermoplastic polymer composition may further contain at least one selected from the group consisting of compound (1), compound (2) and compound (8). Only one kind of each of compound (1), compound (2) and compound (8) may be used or two or more kinds thereof may be used in combination. Explanations of compound (1), compound (2) and compound (8) are the same as those mentioned above.

When the fourth thermoplastic polymer composition contains at least one of compound (1), compound (2) and compound (8), the content of each of compound (1), compound (2) and compound (8) is preferably 0.001 - 3 parts by weight, more preferably 0.02 - 2 parts by weight, relative to 100 parts by weight of the fourth thermoplastic polymer composition.

The thermoplastic polymer composition of the present invention (i.e., the first - fourth thermoplastic polymer compositions) may contain additives other than the above-mentioned components (hereinafter to be abbreviated as "other additives"). Only one kind of other additives may be used or two or more kinds thereof may be used in combination. Examples of other additive include antioxidant, UV absorber, light stabilizer, stabilizer, lubricant, metal deactivator, nucleating agent, antistatic agent, flame-retardant, filler, pigment, inorganic filler and the like.

Examples of the antioxidant include phenol antioxidant (excluding compound (1) and compound (2)), sulfur antioxidant, phosphorus antioxidant (excluding compounds (3) - (8)), hydroquinone antioxidant and the like.

Examples of the phenol antioxidant include those described in the following [1] - [16] and the like.

[1] alkylated monophenol such as 2,6-di-t-butyl-4-methylphenol, 2,4,6-tri-t-butylphenol, 2,6-di-t-butylphenol, 2-t-butyl-4,6-dimethylphenol, 2,6-di-t-butyl-4-ethylphenol, 2,6-di-t-butyl-4-n-butylphenol, 2,6-di-t-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-t-butyl-4-methoxymethylphenol, 2,6-di-nonyl-4-methylphenol, 2,4-dimethyl-6-(1'-methylundecyl-1'-yl)phenol, 2,4-dimethyl-6-(1'-methylheptadecyl-1'-yl)phenol, 2,4-dimethyl-6-(1'-methyltridecyl-1'-yl)phenol and the like.

[2] alkylthiomethylphenol such as 2,4-bis(octylthiomethyl)-6-t-butylphenol, 2,4-bis(octylthiomethyl)-6-methylphenol, 2,4-bis(octylthiomethyl)-6-ethylphenol, 2,6-bis(dodecylthiomethyl)-4-nonylphenol and the like.

[3] alkylidene bisphenol and derivatives thereof such as 2,2'-methylenebis(4-methyl-6-t-butylphenol), 2,2'-methylenebis(4-ethyl-6-t-butylphenol), 2,2'-methylenebis[4-methyl-6-(α-methylcyclohexyl)phenol], 2,2'-methylenebis(4-methyl-6-cyclohexylphenol), 2,2'-methylenebis(4-methyl-6-nonylphenol), 2,2'-methylenebis(4,6-di-t-butylphenol), 2,2'-ethylidenebis(4,6-di-t-butylphenol), 2,2'-ethylidenebis(4-isobutyl-6-t-butylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl) cyclohexane, 1,1-bis(5-t-butyl-4-hydroxy-2-methylphenyl)butane, 2,6-bis(3-t-butyl-5-methyl-2-hydroxybenzyl)-4-methylphenol, 1,1,3-tris(5-t-butyl-4-hydroxy-2-methylphenyl)butane, 1,1-bis(5-t-butyl-4-hydroxy-2-methylphenyl)-3-n-dodecylmercaptobutane, ethylene glycol bis[3,3-bis(3'-t-butyl-4'-hydroxyphenyl)butyrate], bis(3-t-butyl-4-hydroxy-5-methylphenyl)dicyclopentadiene, bis[2-(3'-t-butyl-2'-hydroxy-5'-methylbenzyl)-6-t-butyl-4-methylphenyl] terephthalate, 1,1-bis(3,5-dimethyl-2-hydroxyphenyl)butane, 2,2-bis(3,5-di-t-butyl-4-hydroxyphenyl)propane, 2,2-bis(5-t-butyl-4-hydroxy-2-methylphenyl)-4-n-dodecylmercaptobutane, 1,1,5,5-tetra(5-t-butyl-4-hydroxy-2-methylphenyl)pentane and the like.

[4] acylaminophenol derivative such as 4-hydroxylauryl anilide, 4-hydroxystearic anilide, octyl-N-(3,5-di-t-butyl-4-hydroxyphenyl)carbamate and the like.

[5] ester of β-(3,5-di-t-butyl-4-hydroxyphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[6] bis(hydroxyphenyl)sulfide such as 2,2'-thiobis(6-t-butylphenol), 2,2'-thiobis(4-methyl-6-t-butylphenol), 2,2'-thiobis(4-octylphenol), 4,4'-thiobis(2-methyl-6-t-butylphenol), 4,4'-bis(2,6-dimethyl-4-hydroxyphenyl)sulfide and the like.

[7] O-benzyl derivative, N-benzyl derivative and S-benzyl derivative such as 3,5,3',5'-tetra-t-butyl-4,4'-dihydroxydibenzyl ether, octadecyl 4-hydroxy-3,5-dimethylbenzylmercaptoacetate, tris(3,5-di-t-butyl-4-hydroxybenzyl)amine, bis (4-t-butyl-3-hydroxy-2,6-dimethylbenzyl) dithioterephthalate, bis(3,5-di-t-butyl-4-hydroxybenzyl)sulfide, isooctyl 3,5-di-t-butyl-4-hydroxybenzylmercaptoacetate and the like.

[8] triazine derivative such as 2,4-bis(n-octylthio)-6-(4-hydroxy-3,5-di-t-butylanilino)-1,3,5-triazine, 2-n-octylthio-4,6-bis(4-hydroxy-3,5-di-t-butylanilino)-1,3,5-triazine, 2-n-octylthio-4,6-bis(4-hydroxy-3,5-di-t-butylphenoxy)-1,3,5-triazine, 2,4,6-tris(3,5-di-t-butyl-4-phenoxy)-1,3,5-triazine, tris(4-t-butyl-3-hydroxy-2,6-dimethylbenzyl)isocyanurate, tris (3,5-di-t-butyl-4-hydroxybenzyl)isocyanurate, 2,4,6-tris(3,5-di-t-butyl-4-hydroxyphenylethyl)-1,3,5-triazine, 2,4,6-tris (3,5-di-t-butyl-4-hydroxyphenylpropyl)-1,3,5-triazine, tris(3,5-dicyclohexyl-4-hydroxybenzyl)isocyanurate, tris[2-(3',5'-di-t-butyl-4'-hydroxycinnamoyloxy)ethyl]isocyanurate and the like.

[9] hydroxybenzylated malonate derivative such as dioctadecyl 2,2-bis(3,5-di-t-butyl-2-hydroxybenzyl) malonate, dioctadecyl 2-(3-t-butyl-4-hydroxy-5-methylbenzyl)malonate, didodecylmercaptoethyl 2,2-bis(3,5-di-t-butyl-4-hydroxybenzyl) malonate, bis[4-(1,1,3,3-tetramethylbutyl)phenyl] 2,2-bis(3,5-di-t-butyl-4-hydroxybenzyl)malonate and the like.

[10] aromatic hydroxybenzyl derivative such as 1,3,5-trimethyl-2,4,6-tris(3,5-di-t-butyl-4-hydroxybenzyl)benzene, 1,4-bis(3,5-di-t-butyl-4-hydroxybenzyl)-2,3,5,6-tetramethylbenzene, 2,4,6-tris(3,5-di-t-butyl-4-hydroxybenzyl) phenol and the like.

[11] benzylphosphonate derivative such as dimethyl 3,5-di-t-butyl-4-hydroxybenzylphosphonate, diethyl 3,5-di-t-butyl-4-hydroxybenzylphosphonate, dioctadecyl 3,5-di-t-butyl-4-hydroxybenzylphosphonate, dioctadecyl 5-t-butyl-4-hydroxy-3-methylbenzylphosphonate, calcium salt of 3,5-di-t-butyl-4-hydroxybenzylphosphonic acid monoester and the like.

[12] ester of β-(5-t-butyl-4-hydroxy-3-methylphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[13] ester of β-(3,5-dicyclohexyl-4-hydroxyphenyl)propionic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof and the like).

[14] ester of 3,5-di-t-butyl-4-hydroxyphenylacetic acid and a monovalent or polyvalent alcohol (e.g., methanol, ethanol, octanol, octadecanol, ethylene glycol, 1,3-propanediol, 1,4-butanediol, 1,6-hexanediol, 1,9-nonanediol, neopentylglycol, diethylene glycol, thioethylene glycol, spiroglycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2,2,2]octane or a mixture thereof).

[15] amide of β-(3,5-di-t-butyl-4-hydroxyphenyl)propionic acid such as N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine, N,N'-bis [3-(3',5'-di-t-butyl-4'-hydroxyphenyl)propionyl]trimethylenediamine and the like.

[16] tocopherols such as α-tocopherol, β-tocopherol, γ-tocopherol, 5-tocopherol and the like.

Examples of the sulfur antioxidant include dilauryl 3,3'-thiodipropionate, tridecyl 3,3'-thiodipropionate, dimyristyl 3,3'-thiodipropionate, distearyl 3,3'-thiodipropionate, lauryl stearyl 3,3'-thiodipropionate, neopentanetetrakis(3-lauryl thiopropionate) and the like.

Examples of the phosphorus antioxidant include trilauryl phosphite, trioctadecyl phosphite, tristearylsorbitol triphosphite, 2,2'-ethylidenebis(4,6-di-t-butylphenyl) fluorophosphite, bis(2,4-di-t-butyl-6-methylphenyl)ethyl phosphite, bis(2,4-di-t-butyl-6-methylphenyl)methyl phosphite, 2-(2,4,6-tri-t-butylphenyl)-5-ethyl-5-butyl-1,3,2-oxaphosphorinan and the like.

Examples of the hydroquinone antioxidant include 2,6-dit-butyl-4-methoxyphenol, 2,5-di-t-butylhydroquinone, 2,5-di-t-pentylhydroquinone, 2,6-diphenyl-4-octadecyloxyphenol, 2,6-dit-butylhydroquinone, 2,5-di-t-butyl-4-hydroxyanisole, 3,5-dit-butyl-4-hydroxyphenyl stearate, bis(3,5-di-t-butyl-4-hydroxyphenyl) adipate and the like.

Examples of the UV absorber include those described in the following [1] - [3] and the like.

[1] salicylate derivative such as phenyl salicylate, 4-t-butylphenyl salicylate, 2,4-di-t-butylphenyl 3',5'-di-t-butyl-4'-hydroxybenzoate, 4-t-octylphenyl salicylate, bis(4-t-butylbenzoyl)resorcinol, benzoylresorcinol, hexadecyl 3',5'-di-t-butyl-4'-hydroxybenzoate, octadecyl 3',5'-di-t-butyl-4'-hydroxybenzoate, 2-methyl-4,6-di-t-butylphenyl 3',5'-di-t-butyl-4'-hydroxybenzoate and the like.

[2] 2-hydroxybenzophenone derivative such as 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone and the like.

[3] 2-(2'-hydroxyphenyl)benzotriazoles such as 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-sec-butyl-2'-hydroxy-5'-t-butylphenyl)benzotriazole, 2-(2'-hydroxy-4'-octyloxyphenyl)benzotriazole, 2-(3',5'-di-t-pentyl-2'-hydroxyphenyl)benzotriazole, 2-[2'-hydroxy-3',5'-bis($\alpha$,$\alpha$-dimethylbenzyl)phenyl]-2H-benzotriazole, 2-[(3'-t-butyl-2'-hydroxyphenyl)-5'-(2-octyloxycarbonylethyl) phenyl]-5-chlorobenzotriazole, 2-[3'-t-butyl-5'-[2-(2-ethylhexyloxy)carbonylethyl]-2'-hydroxyphenyl]-5-chlorobenzotriazole, 2-[3'-t-butyl-2'-hydroxy-5'-(2-methoxycarbonylethyl)phenyl]-5-chlorobenzotriazole, 2-[3'-t-butyl-2'-hydroxy-5'-(2-methoxycarbonylethyl)phenyl]benzotriazole, 2-[3'-t-butyl-2'-hydroxy-5-(2-octyloxycarbonylethyl)phenyl]benzotriazole, 2-[3'-t-butyl-2'-hydroxy-5'-[2-(2-ethylhexyloxy)carbonylethyl]phenyl]benzotriazole, 2-[2-hydroxy-3-(3,4,5,6-tetrahydrophthalimidomethyl)-5-methylphenyl]benzotriazole, 2-(3,5-di-t-butyl-2-hydroxyphenyl)-5-chlorobenzotriazole, mixture of 2-(3'-dodecyl-2'-hydroxy-5'-methylphenyl)benzotriazole and 2-[3'-t-butyl-2'-hydroxy-5'-(2-isooctyloxycarbonylethyl)phenyl]benzotriazole, 2,2'-methylenebis[6-(2H-benzotriazol-2-yl)-4-(1,1,3,3-tetramethylbutyl)phenol], 2,2'-methylenebis[4-t-butyl-6-(2H-benzotriazol-2-yl)phenol], condensate of poly(3 - 11)(ethylene glycol) and 2-[3'-t-butyl-2'-hydroxy-5'-(2-methoxycarbonylethyl)phenyl]benzotriazole, condensate of poly(3-11)(ethylene glycol) and methyl 3-[3-(2H-benzotriazol-2-yl)-5-t-butyl-4-hydroxyphenyl]propionate, 2-ethylhexyl 3-[3-t-butyl-5-(5-chloro-2H-benzotriazol-2-yl)-4-hydroxyphenyl]propionate, octyl 3-[3-t-butyl-5-(5-chloro-2H-benzotriazol-2-yl)-4-hydroxyphenyl]propionate, methyl 3-[3-t-butyl-5-(5-chloro-2H-benzotriazol-2-yl)-4-hydroxyphenyl]propionate, 3-[3-t-butyl-5-(5-chloro-2H-benzotriazol-2-yl)-4-hydroxyphenyl]propionic acid and the like.

Examples of the light stabilizer include those described in the following [1] - [5] and the like.

[1] hindered amine light stabilizer, for example, those described in the following [a] - [c].

[a] bis(2,2,6,6-tetramethyl-4-piperidyl) sebacate, bis(2,2,6,6-tetramethyl-4-piperidyl) succinate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis (1,2,2,6,6-pentamethyl-4-piperidyl) 2-(3,5-di-t-butyl-4-hydroxybenzyl)-2-butylmalonate, bis(1-acryloyl-2,2,6,6-tetramethyl-4-piperidyl) 2,2-bis(3,5-di-t-butyl-4-hydroxybenzyl)malonate, bis(1,2,2,6,6-pentamethyl-4-piperidyl) decanedioate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,2,6,6-pentamethyl-4-piperidyl) 1,2,3,4-butanetetracarboxylate.

[b] mixed ester of 1,2,3,4-butanetetracarboxylic acid and 1,2,2,6,6-pentamethyl-4-piperidinol and 1-tridecanol, mixed ester of 1,2,3,4-butanetetracarboxylic acid and 2,2,6,6-tetramethyl-4-piperidinol and 1-tridecanol, mixed ester of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro[5.5]undecane, mixed ester of 1,2,3,4-butanetetracarboxylic acid and 2,2,6,6-tetramethyl-4-piperidinol and 3,9-bis(2-hydroxy-1,1-dimethylethyl)-2,4,8,10-tetraoxaspiro[5.5]undecane.

[c] polycondensate of dimethyl succinate and 1-(2-hydroxyethyl)-4-hydroxy-2,2,6,6-tetramethylpiperidine, poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl)((2,2,6,6-tetramethyl-4-piperidyl)imino) hexamethylene((2,2,6,6-tetramethyl-4-piperidyl)imino)], polycondensate of N,N'-bis(2,2,6,6-tetramethyl-4-piperidyl) hexamethylenediamine and 1,2-dibromoethane, N,N',4,7-tetrakis[4,6-bis(N-butyl-N-(2,2,6,6-tetramethyl-4-piperidyl) amino)-1,3,5-triazin-2-yl]-4,7-diazadecane-1,10-diamine, N,N',4-tris[4,6-bis(N-butyl-N-(2,2,6,6-tetramethyl-4-piperidyl) amino)-1,3,5-triazin-2-yl]-4,7-diazadecane-1,10-diamine, N,N',4,7-tetrakis[4,6-bis(N-butyl-N-(1,2,2,6,6-pentamethyl-4-piperidyl)amino)-1,3,5-triazin-2-yl]-4,7-diazadecane-1,10-diamine, N,N',4-tris[4,6-bis(N-butyl-N-(1,2,2,6,6-pentamethyl-4-piperidyl)amino)-1,3,5-triazin-2-yl]-4,7-diazadecane-1,10-diamine.

[2] acrylate light stabilizer such as ethyl $\alpha$-cyano-$\beta$,$\beta$-diphenylacrylate, isooctyl $\alpha$-cyano-$\beta$,$\beta$-diphenylacrylate, methyl $\alpha$-carbomethoxycinnamate, methyl $\alpha$-cyano-$\beta$-methyl-p-methoxycinnamate, butyl $\alpha$-cyano-$\beta$-methyl-p-methoxycinnamate, methyl $\alpha$-carbomethoxy-p-methoxycinnamate, N-($\beta$-carbomethoxy-$\beta$-cyanovinyl)-2-methylindoline and the like.

[3] nickel light stabilizer such as nickel complex of 2,2'-thiobis-[4-(1,1,3,3-tetramethylbutyl)phenol], nickel dibutyldithiocarbamate, nickel salt of monoalkylester, nickel complex of ketoxime and the like.

[4] oxamide light stabilizer such as 4,4'-dioctyloxyoxanilide, 2,2'-diethoxyoxanilide, 2,2'-dioctyloxy-5,5'-di-t-butylanilide, 2,2'-didodecyloxy-5,5'-di-t-butylanilide, 2-ethoxy-2'-ethyloxanilide, N,N'-bis(3-dimethylaminopropyl)oxamide, 2-ethoxy-5-t-butyl-2'-ethoxyanilide, 2-ethoxy-5,4'-di-t-butyl-2'-ethyloxanilide and the like.

[5] 2-(2-hydroxyphenyl)-1,3,5-triazine light stabilizer such as 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-[2-hydroxy-4-(2-hydroxy-3-butyloxypropoxy)phenyl]-4,6-bis(2,4-dimethylphenyl)-1,3,5-triazine, 2-[2-hydroxy-4-(2-hydroxy-3-octyloxypropoxy)phenyl]-4,6-bis(2,4-dimethylphenyl)-1,3,5-triazine and the like.

Examples of the stabilizer include hydroxyamines such as N,N-dibenzylhydroxyamine, N,N-diethylhydroxyamine, N,N-dioctylhydroxyamine, N,N-dilauryl hydroxyamine, N,N-ditetradecylhydroxyamine, N,N-dihexadecylhydroxyamine, N,N-dioctadecylhydroxyamine, N-hexadecyl-N-octadecylhydroxyamine, N-heptadecyl-N-octadecylhydroxyamine and the like, and the like.

Examples of the lubricant include aliphatic hydrocarbon such as paraffin, wax and the like, $C_{8-22}$ higher fatty acid, metal (Al, Ca, Mg, Zn) salt of $C_{8-22}$ higher fatty acid, $C_{8-22}$ aliphatic alcohol, polyglycol, ester of $C_{4-22}$ fatty acid and $C_4$-18 aliphatic monovalent alcohol, $C_{8-22}$ higher aliphatic amide, silicone oil, rosin derivative and the like.

Of the aforementioned other additives, phenol antioxidant, phosphorus antioxidant, sulfur antioxidant, UV absorber and hindered amine light stabilizer are preferable, and phenol antioxidant is more preferable.

Examples of particularly preferable phenol antioxidant include those described below: 2,6-di-t-butyl-4-methylphenol, 2,4,6-tri-t-butylphenol, 2,4-bis(octylthiomethyl)-6-t-butylphenol, 2,2'-thiobis(6-t-butylphenol), 2,2'-methylenebis (4-methyl-6-t-butylphenol), 2,2'-methylenebis(4-ethyl-6-t-butylphenol), 2,2'-methylenebis[4-methyl-6-($\alpha$-methylcyclohexyl)phenol], 2,2'-methylenebis(4-methyl-6-cyclohexylphenol), 2,2'-methylenebis(4,6-di-t-butylphenol), 2,2'-ethylidenebis(4,6-di-t-butylphenol), 4,4'-methylenebis(6-t-butyl-2-methylphenol), 4,4'-methylenebis(2,6-di-t-butylphenol), 4,4'-butylidenebis(3-methyl-6-t-butylphenol), 1,1-bis(4-hydroxyphenyl)cyclohexane, 1,1-bis(5-t-butyl-4-hydroxy-2-methylphenyl)butane, 1,1,3-tris(5-t-butyl-4-hydroxy-2-methylphenyl)butane, ethylene glycol bis[3,3-bis(3'-t-butyl-4'-hydroxyphenyl)butyrate], 2,4,6-tris(3,5-di-t-butyl-4-phenoxy)-1,3,5-triazine, tris(4-t-butyl-3-hydroxy-2,6-dimethylbenzyl)isocyanurate, bis(3,5-di-t-butyl-4-hydroxybenzyl)isocyanurate, tris[2-(3',5'-di-t-butyl-4'-hydroxycinnamoyloxy)ethyl]isocyanurate, diethyl 3,5-di-t-butyl-4-hydroxybenzylphosphonate, di-n-octadecyl 3,5-di-t-butyl-4-hydroxybenzylphosphonate, calcium salt of 3,5-di-t-butyl-4-hydroxybenzylphosphonic acid monoester, neopentanetetrayl tetrakis(3,5-di-t-butyl-4-hydroxycinnamate), thiodiethylene bis(3,5-di-t-butyl-4-hydroxycinnamate), 1,3,5-trimethyl-2,4,6-tris(3,5-di-t-butyl-4-hydroxybenzyl)benzene, 3,6-dioxaoctamethylene bis(3,5-di-t-butyl-4-hydroxycinnamate), hexamethylene bis(3,5-di-t-butyl-4-hydroxycinnamate), triethylene glycol bis(5-t-butyl-4-hydroxy-3-methylcinnamate), 3,9-bis[2-(3-(3-t-butyl-4-hydroxy-5-methylphenyl)propionyloxy)-1,1-dimethylethyl]-2,4,8,10-tetraoxaspiro[5.5]undecane, N,N'-bis[3-(3',5'-di-t-butyl-4'-hydroxyphenyl)propionyl]hydrazine, N,N'-bis[3-(3',5'-di-t-butyl-4'-hydroxyphenyl)propionyl]hexamethylenediamine.

Examples of particularly preferable phosphorus antioxidant include those described below: 2,2'-ethylidenebis (4,6-di-t-butylphenyl) fluorophosphite, bis(2,4-di-t-butyl-6-methylphenyl) ethyl phosphite, 2-(2,4,6-tri-t-butylphenyl)-5-ethyl-5-butyl-1,3,2-oxaphosphorinan.

Examples of particularly preferable UV absorber include those described below: phenyl salicylate, 4-t-butylphenyl salicylate, 2,4-di-t-butylphenyl 3',5'-di-t-butyl-4'-hydroxybenzoate, 4-t-octylphenyl salicylate, 2,4-dihydroxybenzophenone, 2-hydroxy-4-methoxybenzophenone, 2-hydroxy-4-octoxybenzophenone, 2,2'-dihydroxy-4-methoxybenzophenone, bis(5-benzoyl-4-hydroxy-2-methoxyphenyl)methane, 2,2',4,4'-tetrahydroxybenzophenone, 2-(2-hydroxy-5-methylphenyl)benzotriazole, 2-(3',5'-di-t-butyl-2'-hydroxyphenyl)benzotriazole, 2-(5'-t-butyl-2'-hydroxyphenyl)benzotriazole, 2-(2'-hydroxy-5'-t-octylphenyl)benzotriazole, 2-(3-t-butyl-2-hydroxy-5-methylphenyl)-5-chlorobenzotriazole, 2-(3'-sec-butyl-2'-hydroxy-5'-t-butylphenyl)benzotriazole, 2-(2'-hydroxy-4'-octyloxyphenyl)benzotriazole, 2-(3',5'-di-t-pentyl-2'-hydroxyphenyl)benzotriazole, 2-[2'-hydroxy-3',5'-bis($\alpha$,$\alpha$-dimethylbenzyl)phenyl]-2H-benzotriazole.

Examples of particularly preferable hindered amine light stabilizer include those described below: bis(2,2,6,6-tetramethyl-4-piperidyl) sebacate, bis(1,2,2,6,6-pentamethyl-4-piperidyl) sebacate, bis(N-octoxy-2,2,6,6-tetramethyl-4-piperidyl) sebacate, bis(N-benzyloxy-2,2,6,6-tetramethyl-4-piperidyl) sebacate, bis(N-cyclohexyloxy-2,2,6,6-tetramethyl-4-piperidyl) sebacate, bis(1,2,2,6,6-pentamethyl-4-piperidyl) 2-(3,5-di-t-butyl-4-hydroxybenzyl)-2-butylmalonate, bis (1-acryloyl-2,2,6,6-tetramethyl-4-piperidyl) 2,2-bis(3,5-di-t-butyl-4-hydroxybenzyl)-2-butylmalonate, bis(2,2,6,6-tetramethyl-4-piperidyl) succinate, 2,2,6,6-tetramethyl-4-piperidyl methacrylate, 4-[3-(3,5-di-t-butyl-4-hydroxyphenyl)propionyloxy]-1-[2-(3-(3,5-di-t-butyl-4-hydroxyphenyl)propionyloxy)ethyl]-2,2,6,6-tetramethylpiperidine, 2-methyl-2-(2,2,6,6-tetramethyl-4-piperidyl)amino-N-(2,2,6,6-tetramethyl-4-piperidyl)propionamide, tetrakis(2,2,6,6-tetramethyl-4-piperidyl) 1,2,3,4-butanetetracarboxylate, tetrakis(1,2,6,6-pentamethyl-4-piperidyl) 1,2,3,4-butanetetracarboxylate, mixed ester of 1,2,3,4-butanetetracarboxylic acid and 1,2,2,6,6-pentamethyl-4-piperidinol and 1-tridecanol, mixed ester of 1,2,3,4-butanetetracarboxylic acid and 2,2,6,6-tetramethyl-4-piperidinol and 1-tridecanol, mixed ester of 1,2,3,4-butanetetracarboxylic acid and 1,2,2,6,6-pentamethyl-4-piperidinol and 3,9-bis(2-hydroxy-1,1-dimethylethyl)-2,4,8,10-tetraoxaspiro [5.5]undecane, mixed ester of 1,2,3,4-butanetetracarboxylic acid and 2,2,6,6-tetramethyl-4-piperidinol and 3,9-bis(2-hydroxy-1,1-dimethylethyl)-2,4,8,10-tetraoxaspiro[5.5]undecane, polycondensate of dimethyl succinate and 1-(2-hydroxyethyl)-4-hydroxy-2,2,6,6-tetramethylpiperidine, poly[(6-morpholino-1,3,5-triazine-2,4-diyl)((2,2,6,6-tetramethyl-4-piperidyl)imino)hexamethylene((2,2,6,6-tetramethyl-4-piperidyl)imino)], poly[(6-(1,1,3,3-tetramethylbutyl)imino-1,3,5-triazine-2,4-diyl)((2,2,6,6-tetramethyl-4-piperidyl)imino)hexamethylene((2,2,6,6-tetramethyl-4-piperidyl)imino)].

Examples of the production method of the thermoplastic polymer composition of the present invention (i.e., the first - fourth thermoplastic polymer compositions) include

(a) a method including adding, when kneading a thermoplastic polymer, essential components compound (1) - compound (9), and, where necessary, optional components compound (1) - compound (8) and other additives separately to the thermoplastic polymer;
(b) a method including first mixing essential components compound (1) - compound (9), and, where necessary, optional components compound (1) - compound (8) and other additives to give a stabilizer composition, then mixing the obtained stabilizer composition with a thermoplastic polymer; and the like. In view of the dispersibility of the essential components compound (1) - compound (9) in a thermoplastic polymer, the method of the aforementioned (b) is preferable.

The production method of the stabilizer composition in the method of the aforementioned (b) is similar to the exemplified method described in the below-mentioned production method of a stabilizer composition.

Examples of the mixing method of a stabilizer composition and a thermoplastic polymer include

(c) a method including dry-blending a stabilizer composition and a thermoplastic polymer, melt-kneading them and extruding the mixture in a single screw or multiscrew extruder to give pellets of a thermoplastic polymer composition;
(d) a method including dissolving a stabilizer composition in a solvent such as cyclohexane and the like to give a solution of the stabilizer composition, adding the solution to a polymer solution after completion of thermoplastic polymer polymerization, and desolvating the mixture;

and the like.

The obtained thermoplastic polymer composition may be supplied in a molten state without cooling to a molding machine for molding. The molding method is not particularly limited and, for example, molding method such as injection molding method, extrusion molding method, extrusion blow molding method, injection blow molding method, biaxial orientation blow molding method and the like can be used.

By cooling after molding, a thermoplastic polymer molded product comprised of the thermoplastic polymer composition of the present invention is obtained. Examples of the use of the obtained thermoplastic polymer molding product include electronic component (for example, coil bobbin, connector, switch, resistor component, socket, relay, condenser case, fuse, motor, oven, printed circuit board, IC manufacturing equipment, lamp and the like), automobile part (for example, air outlet garnish, hood vent, distributor cap, exhaust gas control valve and the like), clock component (for example, machine component such as gear, cam and the like, ground plane and the like), camera component (for example, bottom cover, barrel, lever and the like), component of leisure goods (for example, reel and the like), household electrical appliance housing, illumination wiring equipment, film, bottle, fiber, septic tank, toilet tank, bath tub, unit bath, water tank, boats and ships, chemicals tank, pipe, corrugated plate, flat plate, paint, decorative laminate, mounting agent for electronic component, resin concrete and the like.

Next, the stabilizer composition of the present invention (i.e., the first - fourth stabilizer compositions) is explained. The stabilizer composition of the present invention is used to improve processing stability of thermoplastic polymer compositions. The processing stability of a thermoplastic polymer composition can be evaluated by the method described in the below-mentioned Examples.

First, the first stabilizer composition is explained. The first stabilizer composition contains compound (1) and compound (9). Only one kind of compound (1) may be used or two or more kinds thereof may be used in combination. Explanations of compound (1) and compound (9) are the same as those mentioned above.

The weight ratio of compound (1) and compound (9) in the first stabilizer composition (i.e., compound (1):compound (9)) is preferably 1000:1 - 0.05:1. Compound (1) :compound (9) is more preferably 1000:1 - 0.1:1 from the aspect of processing stability of the thermoplastic polymer composition, and still more preferably 1000:1 - 0.5:1, particularly preferably 1000:1 - 1:1, from the aspect of suppression of color change of the thermoplastic polymer composition.

The first stabilizer composition may contain components other than compound (1) and compound (9) as long as the effect of the present invention is not inhibited. For example, the first stabilizer composition may further contain compound (2). In addition, the first stabilizer composition may further contain at least one selected from the group consisting of compounds (3) - (7). Only one kind of compounds (2) - (7) may be used or two or more kinds thereof may be used in combination. Explanations of compound (2) - compound (7) are the same as those mentioned above.

The content of compound (2) in the first stabilizer composition is preferably 0 - 90 parts by weight, more preferably 0.1 - 80 parts by weight, relative to 100 parts by weight of the first stabilizer composition. The total amount of the compounds selected from the group consisting of compounds (3) - (7) in the first stabilizer composition is preferably 0 - 10 parts by weight, more preferably 0.001 - 5 parts by weight, relative to 100 parts by weight of the first stabilizer

composition.

The first stabilizer composition may further contain other additives. Explanations of other additives are the same as those mentioned above.

The second stabilizer composition is now explained. The second stabilizer composition contains compound (8) and compound (9). Only one kind of compound (8) may be used or two or more kinds thereof may be used in combination. Explanations of compound (8) and compound (9) are the same as those mentioned above.

The weight ratio of compound (8) and compound (9) in the second thermoplastic polymer composition (i.e., compound (8):compound (9)) is preferably 1000:1 - 0.05:1. Compound (8):compound (9) is more preferably 1000:1 - 0.1:1 from the aspect of processing stability of the thermoplastic polymer composition, and still more preferably 1000:1 - 0.5:1, particularly preferably 1000:1 - 1:1, from the aspect of suppression of color change of the thermoplastic polymer composition.

The second stabilizer composition may contain components other than compound (8) and compound (9) as long as the effect of the present invention is not inhibited. For example, the second stabilizer composition may further contain compound (2). In addition, the second stabilizer composition may further contain at least one selected from the group consisting of compounds (3) - (7). Only one kind of compounds (2) - (7) may be used or two or more kinds thereof may be used in combination. Explanations of compound (2) - compound (7) are the same as those mentioned above.

The content of compound (2) in the second stabilizer composition is preferably 0 - 90 parts by weight, more preferably 0.1 - 80 parts by weight, relative to 100 parts by weight of the second stabilizer composition. The total amount of the compounds selected from the group consisting of compounds (3) - (7) in the second stabilizer composition is preferably 0 - 10 parts by weight, more preferably 0.001 - 5 parts by weight, relative to 100 parts by weight of the second stabilizer composition.

The second stabilizer composition may further contain other additives. Explanations of other additives are the same as those mentioned above.

The third stabilizer composition is now explained. The third stabilizer composition contains compound (2) and compound (9). Only one kind of compound (2) may be used or two or more kinds thereof may be used in combination. Explanations of compound (2) and compound (9) are the same as those mentioned above.

The third stabilizer composition preferably consists of compound (2) and compound (9). Here, "consists of compound (2) and compound (9)" means the total amount of compound (2) and compound (9) is not less than 99 wt% of the third stabilizer composition.

The weight ratio of compound (2) and compound (9) in the third thermoplastic polymer composition (i.e., compound (2):compound (9)) is preferably 1000:1 - 0.05:1. Compound (2):compound (9) is more preferably 1000:1 - 0.1:1 from the aspect of processing stability of the thermoplastic polymer composition, and still more preferably 1000:1 - 0.5:1, further more preferably 1000:1 - 1:1, from the aspect of suppression of color change of the thermoplastic polymer composition.

The third stabilizer composition may contain components other than compound (2) and compound (9) as long as the effect of the present invention is not inhibited. For example, the third stabilizer composition may further contain compound (1). In addition, the third stabilizer composition may further contain at least one selected from the group consisting of compounds (3) - (7). Moreover, the third thermoplastic polymer composition may further contain compound (8). Only one kind of compound (1) and compounds (3) - (8) may be used or two or more kinds thereof may be used in combination. Explanations of compound (1) and compounds (3) - (8) are the same as those mentioned above.

The content of each of compound (1) and compounds (3) - (8) in the third stabilizer composition is preferably 0 - 90 parts by weight, more preferably 0.1 - 80 parts by weight, relative to 100 parts by weight of the third stabilizer composition.

The third stabilizer composition may further contain other additives. Explanations of other additives are the same as those mentioned above.

The fourth stabilizer composition is now explained. The fourth stabilizer composition contains compound (9) and at least one selected from the group consisting of compounds (3)- (7). Only one kind of compounds (3) - (7) may be used or two or more kinds thereof may be used in combination. Explanations of compounds (3) - (7) and compound (9) are the same as those mentioned above.

The fourth stabilizer composition preferably consists of compound (9) and at least one selected from the group consisting of compounds (3) - (7). Here, "consists of compound (9) and at least one selected from the group consisting of compounds (3) - (7)" means the total amount of compound (9) and the compound selected from the group consisting of compounds (3) - (7) is not less than 99 wt% of the fourth stabilizer composition.

The weight ratio of the compound selected from the group consisting of compounds (3) - (7) and compound (9) in the fourth thermoplastic polymer composition (i.e., compound selected from the group consisting of compounds (3) - (7) :compound (9)) is preferably 1000:1 - 0.05:1. The compound selected from the group consisting of compounds (3) - (7):compound (9) is more preferably 1000:1 - 0.1:1 from the aspect of processing stability of the thermoplastic polymer composition, and still more preferably 1000:1 - 0.5:1, further more preferably 1000:1 - 1:1, from the aspect of

suppression of color change of the thermoplastic polymer composition.

The fourth stabilizer composition may contain components other than compounds (3) - (7) and compound (9) as long as the effect of the present invention is not inhibited. For example, the fourth stabilizer composition may further contain at least one selected from the group consisting of compound (1), compound (2) and compound (8). Only one kind of compound (1), compound (2) and compound (8) may be used or two or more kinds thereof may be used in combination. Explanations of compound (1), compound (2) and compound (8) are the same as those mentioned above.

The content of each of compound (1), compound (2) and compound (8) in the fourth stabilizer composition is preferably 0 - 90 parts by weight, more preferably 0.1 - 80 parts by weight, relative to 100 parts by weight of the fourth stabilizer composition.

The fourth stabilizer composition may further contain other additives. Explanations of other additives in the fourth thermoplastic polymer composition are the same as those mentioned above.

Examples of the production method of the stabilizer composition of the present invention include a method including mixing the essential components and optional components used as necessary (i.e., compounds (1) - (8), compound (9) and other additives) of the first - fourth stabilizer compositions in a blending machine such as Henschel mixer, super mixer, high speed mixer and the like and the like. The thus-obtained mixture (stabilizer composition) may be further subjected to extrusion molding or agitation granulation.

## Examples

The present invention is explained in more detail in the following by referring to Examples and the like. In the following, "part" and "%" is, unless particularly explained, on the weight basis. In addition, the "melt flow rate" is described as "MFR".

The components used in the following Examples and the like are as follows.

compound (1-1): 2,4-di-t-pentyl-6-[1-(3,5-di-t-pentyl-2-hydroxyphenyl)ethyl]phenyl acrylate ("Sumilizer (registered trade mark) GS(F)" manufactured by Sumitomo Chemical Company, Limited)
compound (1-2): 2-t-butyl-6-(3-t-butyl-2-hydroxy-5-methylbenzyl)-4-methylphenyl acrylate ("Sumilizer (registered trade mark) GM" manufactured by Sumitomo Chemical Company, Limited)
compound (2-1): octadecyl 3-(3,5-di-t-butyl-4-hydroxyphenyl)propionate ("Irganox (registered trade mark) 1076" manufactured by BASF)
compound (2-2): 3,9-bis[2-{3-(3-t-butyl-4-hydroxy-5-methylphenyl)propionyloxy}-1,1-dimethylethyl]-2,4,8,10-tetraoxaspiro[5.5]undecane ("Sumilizer (registered trade mark) GA-80" manufactured by Sumitomo Chemical Company, Limited)
compound (2-3): pentaerythritol tetrakis[3-(3,5-di-t-butyl-4-hydroxyphenyl)propionate] ("Irganox (registered trade mark) 1010" manufactured by BASF)
compound (3-1): tris(2,4-di-t-butylphenyl) phosphite ("Irgafos (registered trade mark) 168" manufactured by BASF)
compound (4-1): tetrakis(2,4-di-t-butylphenyl)-4,4-biphenylene diphoshonite ("Sandostab (registered trade mark) P-EPQ" manufactured by Clariant)
compound (5-1): bis(2,6-di-t-butyl-4-methylphenyl)pentaerythritol diphosphite ("Adekastab (registered trade mark) PEP-36" manufactured by ADEKA)
compound (5-2): bis(2,4-di-t-butylphenyl)pentaerythritol diphosphite ("Ultranox (registered trade mark) 626" manufactured by GE Plastics)
compound (5-3): bis(2,4-dicumylphenyl)pentaerythritol diphosphite ("Doverphos S9228T" manufactured by Dover Chemical Corporation)
compound (6-1): 6, 6', 6"-[nitrilotris(ethyleneoxy)]tris(2,4,8,10-tetra-t-butyldibenzo[d,f][1,3,2]dioxaphosphepine) ("Irgafos (registered trade mark) 12" manufactured by BASF)
compound (7-1) : 2,2-methylenebis(4,6-di-t-butylphenyl) octyl phosphite ("Adekastab (registered trade mark) HP-10" manufactured by ADEKA)
compound (8-1) : 6-[3-(3-t-butyl-4-hydroxy-5-methylphenyl)propoxy]-2,4,8,10-tetra-t-butyldibenzo[d,f][1,3,2]dioxaphosphepine ("Sumilizer (registered trade mark) GP" manufactured by Sumitomo Chemical Company, Limited)
compound (9-1): myo-inositol (manufactured by TSUNO CO., LTD.)

In the following Example 1-1 - Example 1-239, the first stabilizer composition containing compound (1) and compound (9) as essential components is used, in Example 2-1 - Example 2-219, the second stabilizer composition containing compound (8) and compound (9) as essential components is used, in Example 3-1 - Example 3-138, the third stabilizer composition containing compound (2) and compound (9) as essential components is used, and in Example 4-1 - Example 4-201, the fourth stabilizer composition containing at least one selected from the group consisting of compound (3) - compound (7), and compound (9) is used.

Example 1-1 (Production of stabilizer composition)

Compound (1-1) (0.3 part) and compound (9-1) (0.01 part) were mixed to produce a stabilizer composition.

Example 1-2 (Production of stabilizer composition)

Compound (1-1) (0.3 part), compound (9-1) (0.01 part) and compound (2-1) (0.2 part) were mixed to produce a stabilizer composition.

Example 1-3 (Production of stabilizer composition)

Compound (1-2) (0.3 part), compound (9-1) (0.01 part) and compound (2-1) (0.2 part) were mixed to produce a stabilizer composition.

Reference Example 1-1

Compound (1-1) (0.3 part) and compound (2-1) (0.2 part) were mixed to produce a stabilizer composition.

Example 1-4 (Production of thermoplastic polymer composition)

A styrene-butadiene block copolymer (manufactured by Asahi Kasei Corp.) (100 parts) and the stabilizer composition (0.31 part) obtained in Example 1-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 1-5 (Production of thermoplastic polymer composition)

In the same manner as in Example 1-4 except that the stabilizer composition (0.51 part) obtained in Example 1-2 was used instead of the stabilizer composition obtained in Example 1-1, a thermoplastic polymer composition was obtained as pellets.

Example 1-6 (Production of thermoplastic polymer composition)

In the same manner as in Example 1-4 except that the stabilizer composition (0.51 part) obtained in Example 1-3 was used instead of the stabilizer composition obtained in Example 1-1, a thermoplastic polymer composition was obtained as pellets.

Reference Example 1-2

In the same manner as in Example 1-4 except that the stabilizer composition (0.5 part) obtained in Reference Example 1-1 was used instead of the stabilizer composition obtained in Example 1-1, a thermoplastic polymer composition was obtained as pellets.

Comparative Example 1-1

In the same manner as in Example 1-4 except that compound (1-1) (0.3 part) was used instead of the stabilizer composition obtained in Example 1-1, a thermoplastic polymer composition was obtained as pellets.

Experimental Example 1-1 (Evaluation of processing stability)

For evaluation of the processing stability during operation of extrusion processing, Dwell MFR tests were performed using the pellets of each thermoplastic polymer composition obtained in Example 1-4 - Example 1-6, Reference Example 1-2 and Comparative Example 1-1. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) at temperature in a cylinder 270°C and load 2.16 kg. The 0 min Dwell MFR was measured after 5-min preheating time after filling pellets of the thermoplastic polymer composition in the cylinder. The 30 min Dwell MFR was measured after 30-min dwell time, including the preheating time, of the pellets of the thermoplastic polymer composition in the

cylinder. The MFR variation rate was calculated by the following formula and using the thus-measured 0 min Dwell MFR and 30 min Dwell MFR:

$$\text{MFR variation rate (\%)} = \text{absolute value of (30 min Dwell MFR} - \text{0 min Dwell MFR)} \times 100/\text{(0 min Dwell MFR)}$$

The compositions of the stabilizer compositions obtained in Example 1-1 - Example 1-3 and Reference Example 1-1 are shown in Table 1, and the compositions, 0 min Dwell MFRs, 30 min Dwell MFRs and MFR variation rates of the thermoplastic polymer compositions obtained in Example 1-4 - Example 1-6, Reference Example 1-2 and Comparative Example 1-1 are shown in Table 2. In a thermoplastic polymer composition containing a styrene-butadiene block copolymer, a smaller MFR variation rate means better processing stability.

[Table 1]

Table 1: stabilizer composition

| | compound (1-1) (part) | compound (1-2) (part) | compound (9-1) (part) | compound (2-1) (part) |
|---|---|---|---|---|
| Ex. 1-1 | 0.3 | - | 0.01 | - |
| Ex. 1-2 | 0.3 | - | 0.01 | 0.2 |
| Ex. 1-3 | - | 0.3 | 0.01 | 0.2 |
| Ref. Ex. 1-1 | 0.3 | - | - | 0.2 |

[Table 2]

Table 2: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| 1-4 | 100 | Ex. 1-1 | 0.31 | 18.4 | 12.7 | 30.9 |
| Ex. 1-5 | 100 | Ex. 1-2 | 0.51 | 19.7 | 13.8 | 30.0 |
| 1-6 | 100 | Ex. 1-3 | 0.51 | 22.5 | 10.6 | 52.9 |
| Ref. Ex. 1-2 | 100 | Ref. Ex. 1-1 | 0.5 | 19.2 | 5.6 | 70.7 |
| Comp. Ex. 1-1 | 100 | compound (1-1) | 0.3 | 18.2 | 2.1 | 88.3 |
| SBS: styrene-butadiene block copolymer | | | | | | |

Example 1-7 (Production of thermoplastic polymer composition)

Nylon 6 (manufactured by Ube Industries, Ltd.) (100 parts), compound (1-1) (0.1 part) and compound (9-1) (0.01 part) were dry-blended, the obtained mixture was knead-extruded by a single screw extruder having a screw diameter of 30 mm ("VS30-28 type extruder" manufactured by TANABE PLASTICS MACHINERY CO., LTD.) at temperature 280°C and screw rotation 50 rpm to give strands, and the strands were cut by a pelletizer to give a thermoplastic polymer composition as pellets.

Comparative Example 1-2

In the same manner as in Example 1-7 except that compound (1-1) (0.1 part) alone was used instead of compound (1-1) (0.1 part) and compound (9-1) (0.01 part), a thermoplastic polymer composition was obtained as pellets.

Experimental Example 1-2 (Evaluation of processing stability)

0 min Dwell MFRs (g/10 min) and 30 min Dwell MFRs (g/10 min) were measured using the pellets of each thermoplastic polymer composition obtained in Example 1-7 and Comparative Example 1-2 and in the same manner as in Experimental Example 1-1, and the MFR variation rates (%) were calculated. The results are shown in Table 3. In a thermoplastic polymer composition containing nylon 6, a smaller MFR variation rate means better processing stability.
[Table 3]

Table 3: thermoplastic polymer composition

| | nylon 6 (part) | stabilizer composition | | 0 min Dwell MFR (g/10 min) | 30 min Dwell MFR (g/10 min) | MFR variation rate |
|---|---|---|---|---|---|---|
| | | compound (1-1) (part) | compound (9-1) (part) | | | |
| Ex. 1-7 | 100 | 0.1 | 0.01 | 9.7 | 13.3 | 37.1 |
| Comp. Ex. 1-2 | 100 | 0.1 | - | 9.6 | 20.8 | 116.7 |

Example 1-8 (Production of stabilizer composition)

Compound (1-2) (0.1 part) and compound (9-1) (0.01 part) were mixed to produce a stabilizer composition.

Example 1-9 (Production of thermoplastic polymer composition)

Polyurethane (manufactured by Nippon Miractran Company Limited) (100 parts) and the total amount of the stabilizer composition obtained in Example 1-8 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 200°C and screw rotation 50 rpm to give strands, and the strands were cut by a pelletizer to give a thermoplastic polymer composition as pellets.

Comparative Example 1-3

In the same manner as in Example 1-9 except that compound (1-2) (0.1 part) was used instead of the stabilizer composition obtained in Example 1-8, a thermoplastic polymer composition was obtained as pellets.

Experimental Example 1-3 (Evaluation of processing stability)

0 min Dwell MFRs (g/10 min) and 30 min Dwell MFRs (g/10 min) were measured using the pellets of each thermoplastic polymer composition obtained in Example 1-9 and Comparative Example 1-3 and in the same manner as in Experimental Example 1-1, and the MFR variation rates (%) were calculated.
The composition of the stabilizer composition obtained in Example 1-8 is shown in Table 4, and the compositions, 0 min Dwell MFRs, 30 min Dwell MFRs and MFR variation rates of the thermoplastic polymer compositions obtained in Example 1-9 and Comparative Example 1-3 are shown in Table 5. In a thermoplastic polymer composition containing polyurethane, a smaller MFR variation rate means better processing stability.
[Table 4]

Table 4: stabilizer composition

| | compound (1-1) (part) | compound (9-1) (part) |
|---|---|---|
| Ex. 1-8 | 0.1 | 0.01 |

[Table 5]

Table 5: thermoplastic polymer composition

| | polyurethane (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 1-9 | 100 | Ex. 1-8 | 0.11 | 11.2 | 17.7 | 58.0 |
| Comp. Ex. 1-3 | 100 | compound (1-2) | 0.1 | 15.9 | 27.4 | 72.3 |

Example 1-10 (Production of thermoplastic polymer composition)

A styrene-butadiene elastomer (manufactured by Asahi Kasei Chemicals Corp.) (100 parts) and the total amount of the stabilizer composition obtained in Example 1-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 200°C and screw rotation 50 rpm to give strands, and the strands were cut by a pelletizer to give a thermoplastic polymer composition as pellets.

Comparative Example 1-4

In the same manner as in Example 1-10 except that compound (1-1) (0.3 part) was used instead of the total amount of the stabilizer composition obtained in Example 1-1, a thermoplastic polymer composition was obtained as pellets.

Experimental Example 1-4 (Evaluation of processing stability)

0 min Dwell MFRs (g/10 min) and 30 min Dwell MFRs (g/10 min) were measured using the pellets of each thermoplastic polymer composition obtained in Example 1-10 and Comparative Example 1-4 and in the same manner as in Experimental Example 1-1 except that the temperature in the cylinder was changed to 285°C, and the MFR variation rates (%) were calculated. The results are shown in Table 6. In a thermoplastic polymer composition containing a styrene-butadiene block elastomer, a smaller MFR variation rate means better processing stability.
[Table 6]

Table 6: thermoplastic polymer composition

| | styrene-butadiene block elastomer (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 1-10 | 100 | Ex. 1-1 | 0.31 | 25.4 | 24.4 | 3.9 |
| Comp. Ex. 1-4 | 100 | compound (1-1) | 0.3 | 25.3 | 22.9 | 9.4 |

Example 1-11 (Production of stabilizer composition)

Compound (1-1) (0.03 part), compound (9-1) (0.005 part), compound (2-3) (0.2 part) and compound (3-1) (0.2 part) were mixed to produce a stabilizer composition.

Example 1-12 (Production of thermoplastic polymer composition)

A styrene-butadiene block copolymer (manufactured by Chevron Phillips Chemical Company) (100 parts) and the total amount of the stabilizer composition obtained in Example 1-11 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Reference Example 1-3

Compound (1-1) (0.03 part), compound (2-3) (0.2 part) and compound (3-1) (0.2 part) were mixed to produce a stabilizer composition.

Reference Example 1-4

In the same manner as in Example 1-11 except that the total amount of the stabilizer composition obtained in Reference Example 1-3 was used instead of the stabilizer composition obtained in Example 1-11, a thermoplastic polymer composition was obtained as pellets.

Experimental Example 1-5 (Evaluation of processing stability)

0 min Dwell MFRs (g/10 min) and 30 min Dwell MFRs (g/10 min) were measured using the pellets of each thermoplastic polymer composition obtained in Example 1-12 and Reference Example 1-4 and in the same manner as in Experimental Example 1-1, and the MFR variation rates (%) were calculated.

The compositions of the stabilizer compositions obtained in Example 1-11 and Reference Example 1-3 are shown in Table 7, and the compositions, 0 min Dwell MFRs, 30 min Dwell MFRs and MFR variation rates of the thermoplastic polymer compositions obtained in Example 1-12 and Reference Example 1-4 are shown in Table 8.

[Table 7]

Table 7: stabilizer composition

| | compound (1-1) (part) | compound (9-1) (part) | compound (2-3) (part) | compound (3-1) (part) |
|---|---|---|---|---|
| Ex. 1-11 | 0.03 | 0.005 | 0.2 | 0.2 |
| Ref. Ex. 1-3 | 0.03 | - | 0.2 | 0.2 |

[Table 8]

Table 8: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 1-12 | 100 | Ex. 1-11 | 0.435 | 36.1 | 5.9 | 83.6 |
| Ref. Ex. 1-4 | 100 | Ref. Ex. 1-3 | 0.43 | 34.3 | 2.7 | 92.1 |
| SBS: styrene-butadiene block copolymer | | | | | | |

Example 1-13 - Example 1-19 (Production of stabilizer composition)

Compound (1-1) and compound (9-1) in the amounts described in Table 9 were mixed to respectively produce stabilizer compositions.

Example 1-20 (Production of thermoplastic polymer composition)

A styrene-butadiene block copolymer (manufactured by DENKI KAGAKU KOGYO KABUSHIKI KAISHA) (100 parts) and the stabilizer composition (0.2 part) obtained in Example 1-13 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 1-21 - Example 1-26 (Production of thermoplastic polymer composition)

In the same manner as in Example 1-20 except that each stabilizer composition (0.2 part) obtained in Example 1-14 - Example 1-19 was used instead of the stabilizer composition obtained in Example 1-13, a thermoplastic polymer composition was obtained as pellets.

Comparative Example 1-5

In the same manner as in Example 1-20 except that compound (1-1) (0.2 part) was used instead of the stabilizer composition obtained in Example 1-13, a thermoplastic polymer composition was obtained as pellets.

Experimental Example 1-6

0 min Dwell MFRs (g/10 min) and 30 min Dwell MFRs (g/10 min) were measured using the pellets of each thermoplastic polymer composition obtained in Example 1-20 - Example 1-26 and Comparative Example 1-5 and in the same manner as in Experimental Example 1-1, and the MFR variation rates (%) were calculated.

The compositions of the stabilizer compositions obtained in Example 1-13 - Example 1-19 are shown in Table 9, and the compositions, 0 min Dwell MFRs, 30 min Dwell MFRs and MFR variation rates of the thermoplastic polymer compositions obtained in Example 1-20 - Example 1-26 and Comparative Example 1-5 are shown in Table 10.

[Table 9]

Table 9: stabilizer composition

| | compound (1-1) (part) | compound (9-1) (part) |
|---|---|---|
| Ex. 1-13 | 0.1998 | 0.0002 |
| Ex. 1-14 | 0.198 | 0.002 |
| Ex. 1-15 | 0.196 | 0.004 |
| Ex. 1-16 | 0.1935 | 0.0065 |
| Ex. 1-17 | 0.1905 | 0.0095 |
| Ex. 1-18 | 0.1818 | 0.0182 |
| Ex. 1-19 | 0.0667 | 0.1333 |

[Table 10]

Table 10: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 1-20 | 100 | Ex. 1-13 | 0.2 | 17.3 | 7.5 | 56.6 |
| Ex. 1-21 | 100 | Ex. 1-14 | 0.2 | 18.9 | 12.4 | 34.4 |
| Ex. 1-22 | 100 | Ex. 1-15 | 0.2 | 18.5 | 11.7 | 36.8 |
| Ex. 1-23 | 100 | Ex. 1-16 | 0.2 | 18.7 | 12.8 | 31.6 |
| Ex. 1-24 | 100 | Ex. 1-17 | 0.2 | 19.0 | 12.0 | 36.8 |
| Ex. 1-25 | 100 | Ex. 1-18 | 0.2 | 18.9 | 11.8 | 37.6 |
| Ex. 1-26 | 100 | Ex. 1-19 | 0.2 | 15.2 | 7.1 | 53.3 |
| Comp. Ex. 1-5 | 100 | compound (1-1) | 0.2 | 15.2 | 3.3 | 78.3 |
| SBS: styrene-butadiene block copolymer | | | | | | |

Example 1-27 and Example 1-28 (Production of stabilizer composition)

Compound (1-1) and compound (9-1) in the amounts described in Table 11 were mixed to respectively produce stabilizer compositions.

Example 1-29 (Production of thermoplastic polymer composition)

A styrene-butadiene block copolymer (manufactured by DENKI KAGAKU KOGYO KABUSHIKI KAISHA) (100 parts) and the stabilizer composition (0.51 part) obtained in Example 1-27 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 1-30 (Production of thermoplastic polymer composition)

In the same manner as in Example 1-29 except that the stabilizer composition (0.71 part) obtained in Example 1-28 was used instead of the stabilizer composition obtained in Example 1-27, a thermoplastic polymer composition was obtained as pellets.

Experimental Example 1-7

0 min Dwell MFRs (g/10 min) and 30 min Dwell MFRs (g/10 min) were measured using the pellets of each thermoplastic polymer composition obtained in Example 1-29 and Example 1-30 and in the same manner as in Experimental Example 1-1, and the MFR variation rates (%) were calculated. The results are shown in Table 12.

[Table 11]

Table 11: stabilizer composition

| | compound (1-1) (part) | compound (9-1) (part) | compound (2-1) (part) | compound (3-1) (part) |
|---|---|---|---|---|
| Ex. 1-27 | 0.3 | 0.01 | - | 0.2 |
| Ex. 1-28 | 0.3 | 0.01 | 0.2 | 0.2 |

[Table 12]

Table 12: thermoplastic polymer composition

| | SBS (part) | stabilizer composition | | 0 min Dwell MFR (g/10min) | 30 min Dwell MFR (g/10 min) | MFR variation rate (%) |
|---|---|---|---|---|---|---|
| | | kind | amount (part) | | | |
| Ex. 1-29 | 100 | Ex. 1-27 | 0.51 | 22.5 | 15.8 | 29.8 |
| Ex. 1-30 | 100 | Ex. 1-28 | 0.71 | 23.4 | 16.0 | 31.6 |
| SBS: styrene-butadiene block copolymer | | | | | | |

Example 1-31 - Example 1-117 (Production of stabilizer composition)

By mixing the components described in Table 13-1 - Table 13-3, stabilizer compositions are obtained. Thermoplastic polymer compositions containing these stabilizer compositions are predicted to be superior in processing stability.

[Table 13-1]

Table 13-1: stabilizer composition

| Example | compound (1) | | compound (9-1) | compound (2) | | compounds (3) - (7) | |
|---|---|---|---|---|---|---|---|
| | kind | amount (part) | amount (part) | kind | amount (part) | kind | amount (part) |
| 1-31 | (1-1) | 0.01 | 0.2 | - | - | - | - |
| 1-32 | (1-1) | 0.05 | 0.15 | - | - | - | - |
| 1-33 | (1-1) | 0.1 | 0.1 | - | - | - | - |
| 1-34 | (1-1) | 0.15 | 0.05 | - | - | - | - |
| 1-35 | (1-1) | 0.2 | 0.01 | - | - | - | - |

(continued)

| Example | compound (1) | | compound (9-1) | compound (2) | | compounds (3) - (7) | |
|---|---|---|---|---|---|---|---|
| | kind | amount (part) | amount (part) | kind | amount (part) | kind | amount (part) |
| 1-36 | (1-1) | 0.2 | 0.005 | - | - | - | - |
| 1-37 | (1-1) | 0.2 | 0.001 | - | - | - | - |
| 1-38 | (1-1) | 0.2 | 0.0005 | - | - | - | - |
| 1-39 | (1-1) | 0.2 | 0.0002 | - | - | - | - |
| 1-40 | (1-1) | 0.01 | 0.2 | (2-2) | 0.2 | - | - |
| 1-41 | (1-1) | 0.1 | 0.1 | (2-2) | 0.2 | - | - |
| 1-42 | (1-1) | 0.2 | 0.01 | (2-2) | 0.2 | - | - |
| 1-43 | (1-1) | 0.2 | 0.005 | (2-2) | 0.2 | - | - |
| 1-44 | (1-1) | 0.2 | 0.001 | (2-2) | 0.2 | - | - |
| 1-45 | (1-1) | 0.2 | 0.0005 | (2-2) | 0.2 | - | - |
| 1-46 | (1-1) | 0.01 | 0.2 | (2-3) | 0.2 | - | - |
| 1-47 | (1-1) | 0.1 | 0.1 | (2-3) | 0.2 | - | - |
| 1-48 | (1-1) | 0.2 | 0.01 | (2-3) | 0.2 | - | - |
| 1-49 | (1-1) | 0.2 | 0.005 | (2-3) | 0.2 | - | - |
| 1-50 | (1-1) | 0.2 | 0.001 | (2-3) | 0.2 | - | - |
| 1-51 | (1-1) | 0.2 | 0.0005 | (2-3) | 0.2 | - | - |
| 1-52 | (1-1) | 0.01 | 0.2 | - | - | (4-1) | 0.2 |
| 1-53 | (1-1) | 0.1 | 0.1 | - | - | (4-1) | 0.2 |
| 1-54 | (1-1) | 0.2 | 0.01 | - | - | (4-1) | 0.2 |
| 1-55 | (1-1) | 0.2 | 0.005 | - | - | (4-1) | 0.2 |
| 1-56 | (1-1) | 0.2 | 0.001 | - | - | (4-1) | 0.2 |
| 1-57 | (1-1) | 0.2 | 0.0005 | - | - | (4-1) | 0.2 |
| 1-58 | (1-1) | 0.01 | 0.2 | - | - | (5-1) | 0.2 |
| 1-59 | (1-1) | 0.1 | 0.1 | - | - | (5-1) | 0.2 |

[Table 13-2]

Table 13-2: stabilizer composition

| Example | compound (1) | | compound (9-1) | compound (2) | | compounds (3) - (7) | |
|---|---|---|---|---|---|---|---|
| | kind | amount (part) | amount (part) | kind | amount (part) | kind | amount (part) |
| 1-60 | (1-1) | 0.2 | 0.01 | - | - | (5-1) | 0.2 |
| 1-61 | (1-1) | 0.2 | 0.005 | - | - | (5-1) | 0.2 |
| 1-62 | (1-1) | 0.2 | 0.001 | - | - | (5-1) | 0.2 |
| 1-63 | (1-1) | 0.2 | 0.0005 | - | - | (5-1) | 0.2 |
| 1-64 | (1-1) | 0.01 | 0.2 | - | - | (5-2) | 0.2 |
| 1-65 | (1-1) | 0.1 | 0.1 | - | - | (5-2) | 0.2 |
| 1-66 | (1-1) | 0.2 | 0.01 | - | - | (5-2) | 0.2 |
| 1-67 | (1-1) | 0.2 | 0.005 | - | - | (5-2) | 0.2 |

(continued)

| Example | compound (1) | | compound (9-1) | compound (2) | | compounds (3) - (7) | |
|---|---|---|---|---|---|---|---|
| | kind | amount (part) | amount (part) | kind | amount (part) | kind | amount (part) |
| 1-68 | (1-1) | 0.2 | 0.001 | - | - | (5-2) | 0.2 |
| 1-69 | (1-1) | 0.2 | 0.0005 | - | - | (5-2) | 0.2 |
| 1-70 | (1-1) | 0.01 | 0.2 | - | - | (5-3) | 0.2 |
| 1-71 | (1-1) | 0.1 | 0.1 | - | - | (5-3) | 0.2 |
| 1-72 | (1-1) | 0.2 | 0.01 | - | - | (5-3) | 0.2 |
| 1-73 | (1-1) | 0.2 | 0.005 | - | - | (5-3) | 0.2 |
| 1-74 | (1-1) | 0.2 | 0.001 | - | - | (5-3) | 0.2 |
| 1-75 | (1-1) | 0.2 | 0.0005 | - | - | (5-3) | 0.2 |
| 1-76 | (1-1) | 0.01 | 0.2 | - | - | (6-1) | 0.2 |
| 1-77 | (1-1) | 0.1 | 0.1 | - | - | (6-1) | 0.2 |
| 1-78 | (1-1) | 0.2 | 0.01 | - | - | (6-1) | 0.2 |
| 1-79 | (1-1) | 0.2 | 0.005 | - | - | (6-1) | 0.2 |
| 1-80 | (1-1) | 0.2 | 0.001 | - | - | (6-1) | 0.2 |
| 1-81 | (1-1) | 0.2 | 0.0005 | - | - | (6-1) | 0.2 |
| 1-82 | (1-1) | 0.01 | 0.2 | - | - | (7-1) | 0.2 |
| 1-83 | (1-1) | 0.1 | 0.1 | - | - | (7-1) | 0.2 |
| 1-84 | (1-1) | 0.2 | 0.01 | - | - | (7-1) | 0.2 |
| 1-85 | (1-1) | 0.2 | 0.005 | - | - | (7-1) | 0.2 |
| 1-86 | (1-1) | 0.2 | 0.001 | - | - | (7-1) | 0.2 |
| 1-87 | (1-1) | 0.2 | 0.0005 | - | - | (7-1) | 0.2 |
| 1-88 | (1-1) | 0.01 | 0.2 | (2-1) | 0.2 | (3-1) | 0.2 |

[Table 13-3]

Table 13-3: stabilizer composition

| Example | compound (1) | | compound (9-1) | compound (2) | | compounds (3) - (7) | |
|---|---|---|---|---|---|---|---|
| | kind | amount (part) | amount (part) | kind | amount (part) | kind | amount (part) |
| 1-89 | (1-1) | 0.1 | 0.1 | (2-1) | 0.2 | (3-1) | 0.2 |
| 1-90 | (1-1) | 0.2 | 0.01 | (2-1) | 0.2 | (3-1) | 0.2 |
| 1-91 | (1-1) | 0.2 | 0.005 | (2-1) | 0.2 | (3-1) | 0.2 |
| 1-92 | (1-1) | 0.2 | 0.001 | (2-1) | 0.2 | (3-1) | 0.2 |
| 1-93 | (1-1) | 0.2 | 0.0005 | (2-1) | 0.2 | (3-1) | 0.2 |
| 1-94 | (1-1) | 0.01 | 0.2 | (2-2) | 0.2 | (3-1) | 0.2 |
| 1-95 | (1-1) | 0.1 | 0.1 | (2-2) | 0.2 | (3-1) | 0.2 |
| 1-96 | (1-1) | 0.2 | 0.01 | (2-2) | 0.2 | (3-1) | 0.2 |
| 1-97 | (1-1) | 0.2 | 0.005 | (2-2) | 0.2 | (3-1) | 0.2 |
| 1-98 | (1-1) | 0.2 | 0.001 | (2-2) | 0.2 | (3-1) | 0.2 |
| 1-99 | (1-1) | 0.2 | 0.0005 | (2-2) | 0.2 | (3-1) | 0.2 |

(continued)

| Example | compound (1) | | compound (9-1) | compound (2) | | compounds (3) - (7) | |
|---|---|---|---|---|---|---|---|
| | kind | amount (part) | amount (part) | kind | amount (part) | kind | amount (part) |
| 1-100 | (1-1) | 0.01 | 0.2 | (2-3) | 0.2 | (3-1) | 0.2 |
| 1-101 | (1-1) | 0.1 | 0.1 | (2-3) | 0.2 | (3-1) | 0.2 |
| 1-102 | (1-1) | 0.2 | 0.01 | (2-3) | 0.2 | (3-1) | 0.2 |
| 1-103 | (1-1) | 0.2 | 0.005 | (2-3) | 0.2 | (3-1) | 0.2 |
| 1-104 | (1-1) | 0.2 | 0.001 | (2-3) | 0.2 | (3-1) | 0.2 |
| 1-105 | (1-1) | 0.2 | 0.0005 | (2-3) | 0.2 | (3-1) | 0.2 |
| 1-106 | (1-2) | 0.01 | 0.2 | - | - | - | - |
| 1-107 | (1-2) | 0.05 | 0.15 | - | - | - | - |
| 1-108 | (1-2) | 0.1 | 0.1 | - | - | - | - |
| 1-109 | (1-2) | 0.15 | 0.05 | - | - | - | - |
| 1-110 | (1-2) | 0.2 | 0.01 | - | - | - | - |
| 1-111 | (1-2) | 0.2 | 0.005 | - | - | - | - |
| 1-112 | (1-2) | 0.2 | 0.001 | - | - | - | - |
| 1-113 | (1-2) | 0.2 | 0.0005 | - | - | - | - |
| 1-114 | (1-2) | 0.2 | 0.0002 | - | - | - | - |
| 1-115 | (1-2) | 0.1 | 0.1 | (2-1) | 0.2 | - | - |
| 1-116 | (1-2) | 0.1 | 0.1 | - | - | (3-1) | 0.2 |
| 1-117 | (1-2) | 0.1 | 0.1 | (2-1) | 0.2 | (3-1) | 0.2 |

Example 1-118 - Example 1-239 (Production of thermoplastic polymer composition)

In the same manner as in Example 1-4 except that the thermoplastic polymers (100 parts) described in Table 14-1 - Table 14-4 and the stabilizer compositions in the kinds and amounts described in Table 14-1 - Table 14-4 are used, thermoplastic polymer compositions are obtained as pellets. The obtained thermoplastic polymer compositions are predicted to be superior in processing stability.

The meanings of the abbreviations of the thermoplastic polymers described in Table 14-1 - Table 14-4 are as follows. The MFR described below is the 0 min Dwell MFR of the thermoplastic polymer as measured under the conditions of Experimental Example 1-1.

P1-1: high density polyethylene (HDPE) (excluding P1-44 - P1-49)
P1-2: low density polyethylene (LDPE) (excluding P1-50 - P1-57)
P1-3: linear low density polyethylene (LLDPE) (excluding P1-58 - P1-64)
P1-4: ethylene-ethyl acrylate copolymer (EEA)
P1-5: ethylene-vinyl acetate copolymer (EVA)
P1-6: polypropylene (PP) (excluding P1-65 - P1-71)
P1-7: propylene-ethylene random copolymer
P1-8: propylene-$\alpha$-olefin random copolymer
P1-9: propylene-ethylene-$\alpha$-olefin copolymer
P1-10: polystyrene (PS)
P1-11: acrylonitrile-styrene copolymer (SAN)
P1-12: acrylonitrile-butadiene-styrene copolymer (ABS)
P1-13: special acrylic rubber-acrylonitrile-styrene copolymer
P1-14: acrylonitrile-chlorinated polyethylene-styrene copolymer (ACS)
P1-15: polybutadiene rubber (BR)
P1-16: styrene-butadiene copolymer (SB)
P1-17: styrene-butadiene block copolymer (SBS)

P1-18: chlorinated polyethylene (CPE)
P1-19: polychloroprene
P1-20: chlorinated rubber
P1-21: poly(vinyl chloride) (PVC)
P1-22: poly(vinylidene chloride) (PVDC)
P1-23: methacrylate resin
P1-24: fluororesin
P1-25: polyacetal (POM)
P1-26: grafted poly(phenylene ether) resin
P1-27: poly(phenylene sulfide) resin (PPS)
P1-28: polyamide (PA) (excluding P1-74 - P1-78)
P1-29: poly(ethylene terephthalate) (PET)
P1-30: poly(butylene terephthalate) (PBT)
P1-31: poly(lactic acid) (PLA)
P1-32: polycarbonate (PC)
P1-33: polyacrylate
P1-34: polysulfone (PPSU)
P1-35: poly(ether ether ketone) (PEEK)
P1-36: poly(ether sulfone) (PES)
P1-37: aromatic polyester
P1-38: diallyl phthalate prepolymer
P1-39: silicone resin (SI)
P1-40: 1,2-polybutadiene
P1-41: polyisoprene
P1-42: butadiene-acrylonitrile copolymer (NBR)
P1-43: ethylene-methyl methacrylate copolymer (EMMA)
P1-44: high density polyethylene (HDPE) with MFR of 40 g/10 min
P1-45: high density polyethylene (HDPE) with MFR of 20 g/10 min
P1-46: high density polyethylene (HDPE) with MFR of 10 g/10 min
P1-47: high density polyethylene (HDPE) with MFR of 5 g/10 min
P1-48: high density polyethylene (HDPE) with MFR of 1 g/10 min
P1-49: high density polyethylene (HDPE) with MFR of 0.1 g/10 min
P1-50: low density polyethylene (LDPE) with MFR of 75 g/10 min
P1-51 low density polyethylene (LDPE) with MFR of 50 g/10 min
P1-52: low density polyethylene (LDPE) with MFR of 25 g/10 min
P1-53: low density polyethylene (LDPE) with MFR of 10 g/10 min
P1-54: low density polyethylene (LDPE) with MFR of 5 g/10 min
P1-55: low density polyethylene (LDPE) with MFR of 2 g/10 min
P1-56: low density polyethylene (LDPE) with MFR of 1 g/10 min
P1-57: low density polyethylene (LDPE) with MFR of 0.1 g/10 min
P1-58: linear low density polyethylene (LLDPE) with MFR of 100 g/10 min
P1-59: linear low density polyethylene (LLDPE) with MFR of 50 g/10 min
P1-60: linear low density polyethylene (LLDPE) with MFR of 25 g/10 min
P1-61: linear low density polyethylene (LLDPE) with MFR of 10 g/10 min
P1-62: linear low density polyethylene (LLDPE) with MFR of 5 g/10 min
P1-63: linear low density polyethylene (LLDPE) with MFR of 1 g/10 min
P1-64: linear low density polyethylene (LLDPE) with MFR of 0.1 g/10 min
P1-65: polypropylene (PP) with MFR of 100 g/10 min
P1-66: polypropylene (PP) with MFR of 50 g/10 min
P1-67: polypropylene (PP) with MFR of 25 g/10 min
P1-68: polypropylene (PP) with MFR of 10 g/10 min
P1-69: polypropylene (PP) with MFR of 5 g/10 min
P1-70: polypropylene (PP) with MFR of 1 g/10 min
P1-71: polypropylene (PP) with MFR of 0.1 g/10 min
P1-72: styrene-ethylene-butylene-styrene block copolymer (SEBS)
P1-73: styrene-isoprene-styrene block copolymer (SIS)
P1-74: nylon 610 (Ny610)
P1-75: nylon 612 (Ny612)

P1-76: nylon 11 (Ny11)
P1-77: nylon 12 (Ny12)
P1-78: nylon MXD6 (NyMXD6)

[Table 14-1]

Table 14-1: thermoplastic polymer composition

| Example | thermoplastic polymer | stabilizer composition | |
|---|---|---|---|
| | | kind | amount (part) |
| 1-118 | P1-1 | Ex. 1-1 | 0.31 |
| 1-119 | P1-2 | Ex. 1-1 | 0.31 |
| 1-120 | P1-3 | Ex. 1-1 | 0.31 |
| 1-121 | P1-3 | Ex. 1-2 | 0.51 |
| 1-122 | P1-3 | Ex. 1-15 | 0.2 |
| 1-123 | P1-3 | Ex. 1-16 | 0.2 |
| 1-124 | P1-3 | Ex. 1-17 | 0.2 |
| 1-125 | P1-3 | Ex. 1-18 | 0.2 |
| 1-126 | P1-3 | Ex. 1-27 | 0.51 |
| 1-127 | P1-3 | Ex. 1-28 | 0.71 |
| 1-128 | P1-4 | Ex. 1-1 | 0.31 |
| 1-129 | P1-4 | Ex. 1-2 | 0.51 |
| 1-130 | P1-4 | Ex. 1-15 | 0.2 |
| 1-131 | P1-4 | Ex. 1-16 | 0.2 |
| 1-132 | P1-4 | Ex. 1-17 | 0.2 |
| 1-133 | P1-4 | Ex. 1-18 | 0.2 |
| 1-134 | P1-4 | Ex. 1-27 | 0.51 |
| 1-135 | P1-4 | Ex. 1-28 | 0.71 |
| 1-136 | P1-5 | Ex. 1-1 | 0.31 |
| 1-137 | P1-6 | Ex. 1-1 | 0.31 |
| 1-138 | P1-7 | Ex. 1-1 | 0.31 |
| 1-139 | P1-7 | Ex. 1-2 | 0.51 |
| 1-140 | P1-7 | Ex. 1-15 | 0.2 |
| 1-141 | P1-7 | Ex. 1-16 | 0.2 |
| 1-142 | P1-7 | Ex. 1-17 | 0.2 |
| 1-143 | P1-7 | Ex. 1-18 | 0.2 |
| 1-144 | P1-7 | Ex. 1-27 | 0.51 |
| 1-145 | P1-7 | Ex. 1-28 | 0.71 |
| 1-146 | P1-8 | Ex. 1-1 | 0.31 |
| 1-147 | P1-9 | Ex. 1-1 | 0.31 |
| 1-148 | P1-10 | Ex. 1-1 | 0.31 |

[Table 14-2]

Table 14-2: thermoplastic polymer composition

| Example | thermoplastic polymer | stabilizer composition | |
|---|---|---|---|
| | | kind | amount (part) |
| 1-149 | P1-11 | Ex. 1-1 | 0.31 |
| 1-150 | P1-11 | Ex. 1-2 | 0.51 |
| 1-151 | P1-11 | Ex. 1-15 | 0.2 |
| 1-152 | P1-11 | Ex. 1-16 | 0.2 |
| 1-153 | P1-11 | Ex. 1-17 | 0.2 |
| 1-154 | P1-11 | Ex. 1-18 | 0.2 |
| 1-155 | P1-11 | Ex. 1-27 | 0.51 |
| 1-156 | P1-11 | Ex. 1-28 | 0.71 |
| 1-157 | P1-12 | Ex. 1-1 | 0.31 |
| 1-158 | P1-13 | Ex. 1-1 | 0.31 |
| 1-159 | P1-13 | Ex. 1-2 | 0.51 |
| 1-160 | P1-13 | Ex. 1-15 | 0.2 |
| 1-161 | P1-13 | Ex. 1-16 | 0.2 |
| 1-162 | P1-13 | Ex. 1-17 | 0.2 |
| 1-163 | P1-13 | Ex. 1-18 | 0.2 |
| 1-164 | P1-13 | Ex. 1-27 | 0.51 |
| 1-165 | P1-13 | Ex. 1-28 | 0.71 |
| 1-166 | P1-14 | Ex. 1-1 | 0.31 |
| 1-167 | P1-1 | Ex. 1-1 | 0.31 |
| 1-168 | P1-16 | Ex. 1-1 | 0.31 |
| 1-169 | P1-17 | Ex. 1-1 | 0.31 |
| 1-170 | P1-17 | Ex. 1-2 | 0.51 |
| 1-171 | P1-17 | Ex. 1-15 | 0.2 |
| 1-172 | P1-17 | Ex. 1-16 | 0.2 |
| 1-173 | P1-17 | Ex. 1-17 | 0.2 |
| 1-174 | P1-17 | Ex. 1-18 | 0.2 |
| 1-175 | P1-17 | Ex. 1-27 | 0.51 |
| 1-176 | P1-17 | Ex. 1-28 | 0.71 |
| 1-177 | P1-18 | Ex. 1-1 | 0.31 |
| 1-178 | P1-19 | Ex. 1-1 | 0.31 |
| 1-179 | P1-20 | Ex. 1-1 | 0.31 |

[Table 14-3]

Table 14-3: thermoplastic polymer composition

| Example | thermoplasticpolymer | stabilizer composition | |
|---|---|---|---|
| | | kind | amount (part) |
| 1-180 | P1-21 | Ex. 1-1 | 0.31 |
| 1-181 | P1-22 | Ex. 1-1 | 0.31 |
| 1-182 | P1-23 | Ex. 1-1 | 0.31 |
| 1-183 | P1-24 | Ex. 1-1 | 0.31 |
| 1-184 | P1-25 | Ex. 1-1 | 0.31 |
| 1-185 | P1-26 | Ex. 1-1 | 0.31 |
| 1-186 | P1-27 | Ex. 1-1 | 0.31 |
| 1-187 | P1-28 | Ex. 1-1 | 0.31 |
| 1-188 | P1-29 | Ex. 1-1 | 0.31 |
| 1-189 | P1-30 | Ex. 1-1 | 0.31 |
| 1-190 | P1-31 | Ex. 1-1 | 0.31 |
| 1-191 | P1-32 | Ex. 1-1 | 0.31 |
| 1-192 | P1-33 | Ex. 1-1 | 0.31 |
| 1-193 | P1-34 | Ex. 1-1 | 0.31 |
| 1-194 | P1-35 | Ex. 1-1 | 0.31 |
| 1-195 | P1-36 | Ex. 1-1 | 0.31 |
| 1-196 | P1-37 | Ex. 1-1 | 0.31 |
| 1-197 | P1-38 | Ex. 1-1 | 0.31 |
| 1-198 | P1-39 | Ex. 1-1 | 0.31 |
| 1-199 | P1-40 | Ex. 1-1 | 0.31 |
| 1-200 | P1-41 | Ex. 1-1 | 0.31 |
| 1-201 | P1-42 | Ex. 1-1 | 0.31 |
| 1-202 | P1-43 | Ex. 1-1 | 0.31 |
| 1-203 | P1-44 | Ex. 1-1 | 0.31 |
| 1-204 | P1-45 | Ex. 1-1 | 0.31 |
| 1-205 | P1-46 | Ex. 1-1 | 0.31 |
| 1-206 | P1-47 | Ex. 1-1 | 0.31 |
| 1-207 | P1-48 | Ex. 1-1 | 0.31 |
| 1-208 | P1-49 | Ex. 1-1 | 0.31 |
| 1-209 | P1-50 | Ex. 1-1 | 0.31 |

[Table 14-4]

Table 14-4: thermoplastic polymer composition

| Example | thermoplastic polymer | stabilizer composition | |
|---|---|---|---|
| | | kind | amount (part) |
| 1-210 | P1-51 | Ex. 1-1 | 0.31 |
| 1-211 | P1-52 | Ex. 1-1 | 0.31 |

(continued)

| Example | thermoplastic polymer | stabilizer composition | |
|---|---|---|---|
| | | kind | amount (part) |
| 1-212 | P1-53 | Ex. 1-1 | 0.31 |
| 1-213 | P1-54 | Ex. 1-1 | 0.31 |
| 1-214 | P1-55 | Ex. 1-1 | 0.31 |
| 1-215 | P1-56 | Ex. 1-1 | 0.31 |
| 1-216 | P1-57 | Ex. 1-1 | 0.31 |
| 1-217 | P1-58 | Ex. 1-1 | 0.31 |
| 1-218 | P1-59 | Ex. 1-1 | 0.31 |
| 1-219 | P1-60 | Ex. 1-1 | 0.31 |
| 1-220 | P1-61 | Ex. 1-1 | 0.31 |
| 1-221 | P1-62 | Ex. 1-1 | 0.31 |
| 1-222 | P1-63 | Ex. 1-1 | 0.31 |
| 1-223 | P1-64 | Ex. 1-1 | 0.31 |
| 1-224 | P1-65 | Ex. 1-1 | 0.31 |
| 1-225 | P1-66 | Ex. 1-1 | 0.31 |
| 1-226 | P1-67 | Ex. 1-1 | 0.31 |
| 1-227 | P1-68 | Ex. 1-1 | 0.31 |
| 1-228 | P1-69 | Ex. 1-1 | 0.31 |
| 1-229 | P1-70 | Ex. 1-1 | 0.31 |
| 1-230 | P1-71 | Ex. 1-1 | 0.31 |
| 1-231 | P1-72 | Ex. 1-1 | 0.31 |
| 1-232 | P1-73 | Ex. 1-1 | 0.31 |
| 1-233 | P1-74 | Ex. 1-1 | 0.31 |
| 1-234 | P1-75 | Ex. 1-1 | 0.31 |
| 1-235 | P1-76 | Ex. 1-1 | 0.31 |
| 1-236 | P1-77 | Ex. 1-1 | 0.31 |
| 1-237 | P1-76 | Ex. 1-1 | 0.31 |
| 1-238 | P1-77 | Ex. 1-1 | 0.31 |
| 1-239 | P1-78 | Ex. 1-1 | 0.31 |

Example 2-1 (Production of stabilizer composition)

Compound (8-1) (0.1 part) and compound (9-1) (0.01 part) were mixed to produce a stabilizer composition.

Example 2-2 (Production of thermoplastic polymer composition)

An ethylene-vinyl alcohol copolymer (manufactured by KURARAY CO., LTD.) (100 parts) and the total amount of the composition obtained in Example 2-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Comparative Example 2-1

In the same manner as in Example 2-2 except that compound (8-1) (0.1 part) was used instead of the total amount of the stabilizer composition obtained in Example 2-1, a thermoplastic polymer composition was obtained as pellets.

Experimental Example 2-1 (Evaluation of processing stability)

For evaluation of the processing stability during operation of extrusion processing, Dwell MFR tests were performed using the pellets of each thermoplastic polymer composition obtained in Example 2-2 and Comparative Example 2-1. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) at temperature in a cylinder 270°C and load 2.16 kg. The 0 min Dwell MFR was measured after 5-min preheating time after filling pellets of the thermoplastic polymer composition in the cylinder. The 30 min Dwell MFR was measured after 30-min dwell time, including the preheating time, of the pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR-0 min Dwell MFR) x 100/(0 min Dwell MFR)

The composition of the stabilizer composition obtained in Example 2-1 is shown in Table 15, and the compositions, 0 min Dwell MFRs, 30 min Dwell MFRs and MFR variation rates of the thermoplastic polymer compositions obtained in Example 2-2 and Comparative Example 2-1 are shown in Table 16. In a thermoplastic polymer composition containing an ethylene-vinyl alcohol copolymer, a smaller MFR variation rate means better processing stability.
[Table 15]

Table 15: stabilizer composition

| | compound (8-1) (part) | compound (9-1) (part) | mass ratio of compound (8-1):compound (9-1) |
|---|---|---|---|
| Ex. 2-1 | 0.1 | 0.01 | 10:1 |

[Table 16]

Table 16: thermoplastic polymer composition

| | EVOH (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 2-2 | 100 | Ex. 2-1 | 0.11 | 12.6 | 8.3 | 34 |
| Comp. Ex. 2-1 | 100 | compound (8-1) | 0.4 | 14.5 | 35.7 | 147 |
| EVOH: ethylene-vinyl alcohol copolymer | | | | | | |

Example 2-3 (Production of thermoplastic polymer composition)

Nylon 66 (manufactured by Asahi Kasei Chemicals Corp.) (100 parts) and the total amount of the stabilizer composition obtained in Example 2-1 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 280°C and screw rotation 50 rpm to give strands, and the strands were cut by a pelletizer to give a thermoplastic polymer composition as pellets.

Comparative Example 2-2

In the same manner as in Example 2-2 except that compound (8-1) (0.1 part) was used instead of the total amount of the stabilizer composition obtained in Example 2-1, a thermoplastic polymer composition was obtained as pellets.

Experimental Example 2-2 (Evaluation of processing stability)

0 min Dwell MFRs (g/10 min) and 30 min Dwell MFRs (g/10 min) were measured using the pellets of each thermoplastic polymer composition obtained in Example 2-3 and Comparative Example 2-2 and in the same manner as in Experimental Example 2-1 except that the temperature in the cylinder was changed to 285°C, and the MFR variation rates (%) were calculated. The results are shown in Table 17. In a thermoplastic polymer composition containing nylon 66, a smaller MFR variation rate means better processing stability.

[Table 17]

Table 17: thermoplastic polymer composition

| | nylon 66 (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 2-3 | 100 | Ex. 2-1 | 0.11 | 64.1 | 62.2 | 2.9 |
| Comp. Ex. 2-2 | 100 | compound (8-1) | 0.1 | 65.2 | 51.7 | 20.7 |

Example 2-4 - Example 2-8 (Production of stabilizer composition)

By mixing the components described in Table 18, stabilizer compositions were obtained.

Example 2-9 - Example 2-13 (Production of thermoplastic polymer composition)

In the same manner as in Example 2-2 except that each stabilizer composition (0.2 part) obtained in Example 2-4 - Example 2-8 was used instead of the total amount of the stabilizer composition obtained in Example 2-1, a thermoplastic polymer composition was obtained as pellets.

Comparative Example 2-3

In the same manner as in Example 2-2 except that compound (8-1) (0.2 part) was used instead of the total amount of the stabilizer composition obtained in Example 2-1, a thermoplastic polymer composition was obtained as pellets.

Experimental Example 2-3

0 min Dwell MFRs (g/10 min) and 30 min Dwell MFRs (g/10 min) were measured using the pellets of each thermoplastic polymer composition obtained in Example 2-9 - Example 2-13 and in the same manner as in Experimental Example 2-1, and the MFR variation rates (%) were calculated. The results are shown in Table 19.

[Table 18]

Table 18: stabilizer composition

| | compound (8-1) (part) | compound (9-1) (part) | mass ratio of compound (8-1):compound (9-1) |
|---|---|---|---|
| Ex. 2-4 | 0.1998 | 0.0002 | 999 : 1 |
| Ex. 2-5 | 0.1996 | 0.0004 | 500 : 1 |
| Ex. 2-6 | 0.198 | 0.002 | 100 : 1 |
| Ex. 2-7 | 0.1818 | 0.0182 | 10 : 1 |
| Ex. 2-8 | 0.0667 | 0.1333 | 1 : 2 |

[Table 19]

Table 19: thermoplastic polymer composition

| | EVOH (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 2-9 | 100 | Ex. 2-4 | 0.2 | 19.2 | 12.4 | 35 |
| Ex. 2-10 | 100 | Ex. 2-5 | 0.2 | 18.8 | 8.8 | 53 |
| Ex. 2-11 | 100 | Ex. 2-6 | 0.2 | 20.0 | 8.9 | 56 |
| Ex. 2-12 | 100 | Ex. 2-7 | 0.2 | 19.3 | 8.8 | 54 |
| Ex. 2-13 | 100 | Ex. 2-8 | 0.2 | 19.4 | 12.0 | 38 |
| EVOH: ethylene-vinyl alcohol copolymer | | | | | | |

Example 2-14 - Example 2-100 (Production of stabilizer composition)

By mixing the components described in Table 20-1 - Table 20-3, stabilizer compositions are obtained. Thermoplastic polymer compositions containing these stabilizer compositions are predicted to be superior in processing stability.

[Table 20-1]

Table 20-1: stabilizer composition

| Example | compound (8-1) | compound (9-1) | compound (2) | | compounds (3) - (7) | |
|---|---|---|---|---|---|---|
| | amount (part) | amount (part) | kind | amount (part) | kind | amount (part) |
| 2-14 | 0.01 | 0.2 | - | - | - | - |
| 2-15 | 0.05 | 0.15 | - | - | - | - |
| 2-16 | 0.1 | 0.1 | - | - | - | - |
| 2-17 | 0.15 | 0.05 | - | - | - | - |
| 2-18 | 0.2 | 0.01 | - | - | - | - |
| 2-19 | 0.2 | 0.005 | - | - | - | - |
| 2-20 | 0.2 | 0.001 | - | - | - | - |
| 2-21 | 0.2 | 0.0005 | - | - | - | - |
| 2-22 | 0.2 | 0.0002 | - | - | - | - |
| 2-23 | 0.01 | 0.2 | (2-1) | 0.2 | - | - |
| 2-24 | 0.1 | 0.1 | (2-1) | 0.2 | - | - |
| 2-25 | 0.2 | 0.01 | (2-1) | 0.2 | - | - |
| 2-26 | 0.2 | 0.005 | (2-1) | 0.2 | - | - |
| 2-27 | 0.2 | 0.001 | (2-1) | 0.2 | - | - |
| 2-28 | 0.2 | 0.0005 | (2-1) | 0.2 | - | - |
| 2-29 | 0.01 | 0.2 | (2-2) | 0.2 | - | - |
| 2-30 | 0.1 | 0.1 | (2-2) | 0.2 | - | - |
| 2-31 | 0.2 | 0.01 | (2-2) | 0.2 | - | - |
| 2-32 | 0.2 | 0.005 | (2-2) | 0.2 | - | - |
| 2-33 | 0.2 | 0.001 | (2-2) | 0.2 | - | - |

(continued)

| Example | compound (8-1) | compound (9-1) | compound (2) | | compounds (3) - (7) | |
|---|---|---|---|---|---|---|
| | amount (part) | amount (part) | kind | amount (part) | kind | amount (part) |
| 2-34 | 0.2 | 0.0005 | (2-2) | 0.2 | - | - |
| 2-35 | 0.01 | 0.2 | (2-3) | 0.2 | - | - |
| 2-36 | 0.1 | 0.1 | (2-3) | 0.2 | - | - |
| 2-37 | 0.2 | 0.01 | (2-3) | 0.2 | - | - |
| 2-38 | 0.2 | 0.005 | (2-3) | 0.2 | - | - |
| 2-39 | 0.2 | 0.001 | (2-3) | 0.2 | - | - |
| 2-40 | 0.2 | 0.0005 | (2-3) | 0.2 | - | - |
| 2-41 | 0.01 | 0.2 | - | - | (3-1) | 0.2 |
| 2-42 | 0.1 | 0.1 | - | - | (3-1) | 0.2 |

[Table 20-2]

Table 20-2: stabilizer composition

| Example | compound (8-1) | compound (9-1) | compound (2) | | compounds (3) - (7) | |
|---|---|---|---|---|---|---|
| | amount (part) | amount (part) | kind | amount (part) | kind | amount (part) |
| 2-43 | 0.2 | 0.01 | - | | (3-1) | 0.2 |
| 2-44 | 0.2 | 0.005 | - | - | (3-1) | 0.2 |
| 2-45 | 0.2 | 0.001 | - | - | (3-1) | 0.2 |
| 2-46 | 0.2 | 0.0005 | - | - | (3-1) | 0.2 |
| 2-47 | 0.01 | 0.2 | - | - | (4-1) | 0.2 |
| 2-48 | 0.1 | 0.1 | - | - | (4-1) | 0.2 |
| 2-49 | 0.2 | 0.01 | - | - | (4-1) | 0.2 |
| 2-50 | 0.2 | 0.005 | - | - | (4-1) | 0.2 |
| 2-51 | 0.2 | 0.001 | - | - | (4-1) | 0.2 |
| 2-52 | 0.2 | 0.0005 | - | - | (4-1) | 0.2 |
| 2-53 | 0.01 | 0.2 | - | - | (5-1) | 0.2 |
| 2-54 | 0.1 | 0.1 | - | - | (5-1) | 0.2 |
| 2-55 | 0.2 | 0.01 | - | - | (5-1) | 0.2 |
| 2-56 | 0.2 | 0.005 | - | - | (5-1) | 0.2 |
| 2-57 | 0.2 | 0.001 | - | - | (5-1) | 0.2 |
| 2-58 | 0.2 | 0.0005 | - | - | (5-1) | 0.2 |
| 2-59 | 0.01 | 0.2 | - | - | (5-2) | 0.2 |
| 2-60 | 0.1 | 0.1 | - | - | (5-2) | 0.2 |
| 2-61 | 0.2 | 0.01 | - | - | (5-2) | 0.2 |
| 2-62 | 0.2 | 0.005 | - | - | (5-2) | 0.2 |
| 2-63 | 0.2 | 0.001 | - | - | (5-2) | 0.2 |
| 2-64 | 0.2 | 0.0005 | - | - | (5-2) | 0.2 |
| 2-65 | 0.01 | 0.2 | - | - | (5-3) | 0.2 |

(continued)

| Example | compound (8-1) | compound (9-1) | compound (2) | | compounds (3) - (7) | |
|---|---|---|---|---|---|---|
| | amount (part) | amount (part) | kind | amount (part) | kind | amount (part) |
| 2-66 | 0.1 | 0.1 | - | - | (5-3) | 0.2 |
| 2-67 | 0.2 | 0.01 | - | - | (5-3) | 0.2 |
| 2-68 | 0.2 | 0.005 | - | - | (5-3) | 0.2 |
| 2-69 | 0.2 | 0.001 | - | - | (5-3) | 0.2 |
| 2-70 | 0.2 | 0.0005 | - | - | (5-3) | 0.2 |
| 2-71 | 0.01 | 0.2 | - | - | (6-1) | 0.2 |

[Table 20-3]

Table 20-3: stabilizer composition

| Example | compound (8-1) | compound (9-1) | compound (2) | | compounds (3) - (7) | |
|---|---|---|---|---|---|---|
| | amount (part) | amount (part) | kind | amount (part) | amount (part) | amount (part) |
| 2-72 | 0.1 | 0.1 | - | - | (6-1) | 0.2 |
| 2-73 | 0.2 | 0.01 | - | - | (6-1) | 0.2 |
| 2-74 | 0.2 | 0.005 | - | - | (6-1) | 0.2 |
| 2-75 | 0.2 | 0.001 | - | - | (6-1) | 0.2 |
| 2-76 | 0.2 | 0.0005 | - | - | (6-1) | 0.2 |
| 2-77 | 0.01 | 0.2 | - | - | (7-1) | 0.2 |
| 2-78 | 0.1 | 0.1 | - | - | (7-1) | 0.2 |
| 2-79 | 0.2 | 0.01 | - | - | (7-1) | 0.2 |
| 2-80 | 0.2 | 0.005 | - | - | (7-1) | 0.2 |
| 2-81 | 0.2 | 0.001 | - | - | (7-1) | 0.2 |
| 2-82 | 0.2 | 0.0005 | - | - | (7-1) | 0.2 |
| 2-83 | 0.01 | 0.2 | (2-1) | 0.2 | (3-1) | 0.2 |
| 2-84 | 0.1 | 0.1 | (2-1) | 0.2 | (3-1) | 0.2 |
| 2-85 | 0.2 | 0.01 | (2-1) | 0.2 | (3-1) | 0.2 |
| 2-86 | 0.2 | 0.005 | (2-1) | 0.2 | (3-1) | 0.2 |
| 2-87 | 0.2 | 0.001 | (2-1) | 0.2 | (3-1) | 0.2 |
| 2-88 | 0.2 | 0.0005 | (2-1) | 0.2 | (3-1) | 0.2 |
| 2-89 | 0.01 | 0.2 | (2-2) | 0.2 | (3-1) | 0.2 |
| 2-90 | 0.1 | 0.1 | (2-2) | 0.2 | (3-1) | 0.2 |
| 2-91 | 0.2 | 0.01 | (2-2) | 0.2 | (3-1) | 0.2 |
| 2-92 | 0.2 | 0.005 | (2-2) | 0.2 | (3-1) | 0.2 |
| 2-93 | 0.2 | 0.001 | (2-2) | 0.2 | (3-1) | 0.2 |
| 2-94 | 0.2 | 0.0005 | (2-2) | 0.2 | (3-1) | 0.2 |
| 2-95 | 0.01 | 0.2 | (2-3) | 0.2 | (3-1) | 0.2 |
| 2-96 | 0.1 | 0.1 | (2-3) | 0.2 | (3-1) | 0.2 |
| 2-97 | 0.2 | 0.01 | (2-3) | 0.2 | (3-1) | 0.2 |

(continued)

| Example | compound (8-1) | compound (9-1) | compound (2) | | compounds (3) - (7) | |
|---|---|---|---|---|---|---|
| | amount (part) | amount (part) | kind | amount (part) | amount (part) | amount (part) |
| 2-98 | 0.2 | 0.005 | (2-3) | 0.2 | (3-1) | 0.2 |
| 2-99 | 0.2 | 0.001 | (2-3) | 0.2 | (3-1) | 0.2 |
| 2-100 | 0.2 | 0.0005 | (2-3) | 0.2 | (3-1) | 0.2 |

Example 2-101 - Example 2-219 (Production of thermoplastic polymer composition)

In the same manner as in Example 2-2 except that the thermoplastic polymers (100 parts) described in Table 21-1 - Table 21-4, and the stabilizer compositions in the kinds and amounts described in Table 21-1 - Table 21-4, thermoplastic polymer compositions are obtained as pellets. The obtained thermoplastic polymer compositions are predicted to be superior in processing stability.

The meanings of the abbreviations of the thermoplastic polymers described in Table 21-1 - Table 21-4 are as follows. The MFR described below is the 0 min Dwell MFR of the thermoplastic polymer as measured under the conditions of Experimental Example 2-1.

P2-1: high density polyethylene (HDPE) (excluding P2-45 - P2-50)
P2-2: low density polyethylene (LDPE) (excluding P2-51 - P2-57)
P2-3: linear low density polyethylene (LLDPE) (excluding P2-58 - P2-64)
P2-4: ethylene-ethyl acrylate copolymer (EEA)
P2-5: ethylene-vinyl acetate copolymer (EVA)
P2-6: polypropylene (PP) (excluding P2-65 - P2-71)
P2-7: propylene-ethylene random copolymer
P2-8: propylene-α-olefin random copolymer
P2-9: propylene-ethylene-α-olefin copolymer
P2-10: polystyrene (PS)
P2-11: acrylonitrile-styrene copolymer (SAN)
P2-12: acrylonitrile-butadiene-styrene copolymer (ABS)
P2-13: special acrylic rubber-acrylonitrile-styrene copolymer
P2-14: acrylonitrile-chlorinated polyethylene-styrene copolymer (ACS)
P2-15: polybutadiene rubber (BR)
P2-16: styrene-butadiene copolymer (SB)
P2-17: styrene-butadiene block copolymer (SBS)
P2-18: chlorinated polyethylene (CPE)
P2-19: polychloroprene
P2-20: chlorinated rubber
P2-21: poly(vinyl chloride) (PVC)
P2-22: poly(vinylidene chloride) (PVDC)
P2-23: methacrylate resin
P2-24: fluororesin
P2-25: polyacetal (POM)
P2-26: grafted poly(phenylene ether) resin
P2-27: poly(phenylene sulfide) resin (PPS)
P2-28: polyurethane (PU) (excluding P2-75 - P2-77)
P2-29: polyamide (PA) (excluding P2-78 - P2-86)
P2-30: poly(ethylene terephthalate) (PET)
P2-31: poly(butylene terephthalate) (PBT)
P2-32: poly(lactic acid) (PLA)
P2-33: polycarbonate (PC)
P2-34: polyacrylate
P2-35: polysulfone (PPSU)
P2-36: poly(ether ether ketone) (PEEK)
P2-37: poly(ether sulfone) (PES)
P2-38: aromatic polyester
P2-39: diallyl phthalate prepolymer

P2-40: silicone resin (SI)
P2-41: 1,2-polybutadiene
P2-42: polyisoprene
P2-43: butadiene-acrylonitrile copolymer (NBR)
P2-44: ethylene-methyl methacrylate copolymer (EMMA)
P2-45: high density polyethylene (HDPE) with MFR of 40 g/10 min
P2-46: high density polyethylene (HDPE) with MFR of 20 g/10 min
P2-47: high density polyethylene (HDPE) with MFR of 10 g/10 min
P2-48: high density polyethylene (HDPE) with MFR of 5 g/10 min
P2-49: high density polyethylene (HDPE) with MFR of 1 g/10 min
P2-50: high density polyethylene (HDPE) with MFR of 0.1 g/10 min
P2-51: low density polyethylene (LDPE) with MFR of 75 g/10 min
P2-52: low density polyethylene (LDPE) with MFR of 50 g/10 min
P2-53: low density polyethylene (LDPE) with MFR of 25 g/10 min
P2-54: low density polyethylene (LDPE) with MFR of 10 g/10 min
P2-55: low density polyethylene (LDPE) with MFR of 5 g/10 min
P2-56: low density polyethylene (LDPE) with MFR of 2 g/10 min
P2-57: low density polyethylene (LDPE) with MFR of 1 g/10 min
P2-58: low density polyethylene (LDPE) with MFR of 0.1 g/10 min
P2-59: linear low density polyethylene (LLDPE) with MFR of 100 g/10 min
P2-60: linear low density polyethylene (LLDPE) with MFR of 50 g/10 min
P2-61: linear low density polyethylene (LLDPE) with MFR of 25 g/10 min
P2-62: linear low density polyethylene (LLDPE) with MFR of 10 g/10 min
P2-63: linear low density polyethylene (LLDPE) with MFR of 5 g/10 min
P2-64: linear low density polyethylene (LLDPE) with MFR of 1 g/10 min
P2-65: linear low density polyethylene (LLDPE) with MFR of 0.1 g/10 min
P2-66: polypropylene (PP) with MFR of 100 g/10 min
P2-67: polypropylene (PP) with MFR of 50 g/10 min
P2-68: polypropylene (PP) with MFR of 25 g/10 min
P2-69: polypropylene (PP) with MFR of 10 g/10 min
P2-70: polypropylene (PP) with MFR of 5 g/10 min
P2-71: polypropylene (PP) with MFR of 1 g/10 min
P2-72: polypropylene (PP) with MFR of 0.1 g/10 min
P2-73: styrene-butadiene thermoplastic elastomer
P2-74: styrene-ethylene-butylene-styrene block copolymer (SEBS)
P2-75: styrene-isoprene-styrene block copolymer (SIS)
P2-76: polyurethane (PU) with weight average molecular weight of 1000
P2-77: polyurethane (PU) with weight average molecular weight of 2000
P2-78: polyurethane (PU) with weight average molecular weight of 5000
P2-79: nylon 6 (Ny6) with number average molecular weight of 5000
P2-80: nylon 6 (Ny6) with number average molecular weight of 10000
P2-81: nylon 6 (Ny6) with number average molecular weight of 50000
P2-82: nylon 6 (Ny6) with number average molecular weight of 100000
P2-83: nylon 610 (Ny610)
P2-84: nylon 612 (Ny612)
P2-85: nylon 11 (Ny11)
P2-86: nylon 12 (Ny12)
P2-87: nylon MXD6 (NyMXD6)

[Table 21-1]

Table 21-1: thermoplastic polymer composition

| Example | thermoplastic polymer | stabilizer composition | |
|---|---|---|---|
| | | kind | amount (part) |
| 2-101 | P2-1 | Ex. 2-1 | 0.11 |
| 2-102 | P2-2 | Ex. 2-1 | 0.11 |

(continued)

| Example | thermoplastic polymer | stabilizer composition | |
|---|---|---|---|
| | | kind | amount (part) |
| 2-103 | P2-3 | Ex. 2-1 | 0.11 |
| 2-104 | P2-3 | Ex. 2-4 | 0.2 |
| 2-105 | P2-3 | Ex. 2-5 | 0.2 |
| 2-106 | P2-3 | Ex. 2-6 | 0.2 |
| 2-107 | P2-3 | Ex. 2-7 | 0.2 |
| 2-108 | P2-3 | Ex. 2-8 | 0.2 |
| 2-109 | P2-4 | Ex. 2-1 | 0.11 |
| 2-110 | P2-5 | Ex. 2-1 | 0.11 |
| 2-111 | P2-6 | Ex. 2-1 | 0.11 |
| 2-112 | P2-6 | Ex. 2-4 | 0.2 |
| 2-113 | P2-6 | Ex. 2-5 | 0.2 |
| 2-114 | P2-6 | Ex. 2-6 | 0.2 |
| 2-115 | P2-6 | Ex. 2-7 | 0.2 |
| 2-116 | P2-6 | Ex. 2-8 | 0.2 |
| 2-117 | P2-7 | Ex. 2-1 | 0.11 |
| 2-118 | P2-8 | Ex. 2-1 | 0.11 |
| 2-119 | P2-9 | Ex. 2-1 | 0.11 |
| 2-120 | P2-10 | Ex. 2-1 | 0.11 |
| 2-121 | P2-10 | Ex. 2-4 | 0.2 |
| 2-122 | P2-10 | Ex. 2-5 | 0.2 |
| 2-123 | P2-10 | Ex. 2-6 | 0.2 |
| 2-124 | P2-10 | Ex. 2-7 | 0.2 |
| 2-125 | P2-10 | Ex. 2-8 | 0.2 |
| 2-126 | P2-11 | Ex. 2-1 | 0.11 |
| 2-127 | P2-12 | Ex. 2-1 | 0.11 |
| 2-128 | P2-12 | Ex. 2-4 | 0.2 |
| 2-129 | P2-12 | Ex. 2-5 | 0.2 |
| 2-130 | P2-12 | Ex. 2-6 | 0.2 |

[Table 21-2]

Table 21-2: thermoplastic polymer composition

| Example | thermoplastic polymer | stabilizer composition | |
|---|---|---|---|
| | | kind | amount (part) |
| 2-131 | P2-12 | Ex. 2-7 | 0.2 |
| 2-132 | P2-12 | Ex. 2-8 | 0.2 |
| 2-133 | P2-13 | Ex. 2-1 | 0.11 |
| 2-134 | P2-14 | Ex. 2-1 | 0.11 |

(continued)

| Example | thermoplastic polymer | stabilizer composition | |
|---|---|---|---|
| | | kind | amount (part) |
| 2-135 | P2-15 | Ex. 2-1 | 0.11 |
| 2-136 | P2-16 | Ex. 2-1 | 0.11 |
| 2-137 | P2-16 | Ex. 2-4 | 0.2 |
| 2-138 | P2-16 | Ex. 2-5 | 0.2 |
| 2-139 | P2-16 | Ex. 2-6 | 0.2 |
| 2-140 | P2-16 | Ex. 2-7 | 0.2 |
| 2-141 | P2-16 | Ex. 2-8 | 0.2 |
| 2-142 | P2-17 | Ex. 2-1 | 0.11 |
| 2-143 | P2-17 | Ex. 2-4 | 0.2 |
| 2-144 | P2-17 | Ex. 2-5 | 0.2 |
| 2-145 | P2-17 | Ex. 2-6 | 0.2 |
| 2-146 | P2-17 | Ex. 2-7 | 0.2 |
| 2-147 | P2-17 | Ex. 2-8 | 0.2 |
| 2-148 | P2-18 | Ex. 2-1 | 0.11 |
| 2-149 | P2-19 | Ex. 2-1 | 0.11 |
| 2-150 | P2-20 | Ex. 2-1 | 0.11 |
| 2-151 | P2-21 | Ex. 2-1 | 0.11 |
| 2-152 | P2-22 | Ex. 2-1 | 0.11 |
| 2-153 | P2-23 | Ex. 2-1 | 0.11 |
| 2-154 | P2-24 | Ex. 2-1 | 0.11 |
| 2-155 | P2-25 | Ex. 2-1 | 0.11 |
| 2-156 | P2-26 | Ex. 2-1 | 0.11 |
| 2-157 | P2-27 | Ex. 2-1 | 0.11 |
| 2-158 | P2-28 | Ex. 2-1 | 0.11 |
| 2-159 | P2-29 | Ex. 2-1 | 0.11 |
| 2-160 | P2-30 | Ex. 2-1 | 0.11 |

[Table 21-3]

Table 21-3: thermoplastic polymer composition

| Example | thermoplastic polymer | stabilizer composition | |
|---|---|---|---|
| | | kind | amount (part) |
| 2-161 | P2-31 | Ex. 2-1 | 0.11 |
| 2-162 | P2-32 | Ex. 2-1 | 0.11 |
| 2-163 | P2-33 | Ex. 2-1 | 0.11 |
| 2-164 | P2-34 | Ex. 2-1 | 0.11 |
| 2-165 | P2-35 | Ex. 2-1 | 0.11 |
| 2-166 | P2-36 | Ex. 2-1 | 0.11 |

(continued)

| Example | thermoplastic polymer | stabilizer composition | |
|---|---|---|---|
| | | kind | amount (part) |
| 2-167 | P2-37 | Ex. 2-1 | 0.11 |
| 2-168 | P2-38 | Ex. 2-1 | 0.11 |
| 2-169 | P2-39 | Ex. 2-1 | 0.11 |
| 2-170 | P2-40 | Ex. 2-1 | 0.11 |
| 2-171 | P2-41 | Ex. 2-1 | 0.11 |
| 2-172 | P2-42 | Ex. 2-1 | 0.11 |
| 2-173 | P2-43 | Ex. 2-1 | 0.11 |
| 2-174 | P2-44 | Ex. 2-1 | 0.11 |
| 2-175 | P2-45 | Ex. 2-1 | 0.11 |
| 2-176 | P2-46 | Ex. 2-1 | 0.11 |
| 2-177 | P2-47 | Ex. 2-1 | 0.11 |
| 2-178 | P2-48 | Ex. 2-1 | 0.11 |
| 2-179 | P2-49 | Ex. 2-1 | 0.11 |
| 2-180 | P2-50 | Ex. 2-1 | 0.11 |
| 2-181 | P2-51 | Ex. 2-1 | 0.11 |
| 2-182 | P2-52 | Ex. 2-1 | 0.11 |
| 2-183 | P2-53 | Ex. 2-1 | 0.11 |
| 2-184 | P2-54 | Ex. 2-1 | 0.11 |
| 2-185 | P2-55 | Ex. 2-1 | 0.11 |
| 2-186 | P2-56 | Ex. 2-1 | 0.11 |
| 2-187 | P2-57 | Ex. 2-1 | 0.11 |
| 2-188 | P2-58 | Ex. 2-1 | 0.11 |
| 2-189 | P2-53 | Ex. 2-1 | 0.11 |
| 2-190 | P2-60 | Ex. 2-1 | 0.11 |

[Table 21-4]

Table 21-4: thermoplastic polymer composition

| Example | thermoplastic polymer | stabilizer composition | |
|---|---|---|---|
| | | kind | amount (part) |
| 2-191 | P2-61 | Ex. 2-1 | 0.11 |
| 2-192 | P2-62 | Ex. 2-1 | 0.11 |
| 2-193 | P2-63 | Ex. 2-1 | 0.11 |
| 2-194 | P2-64 | Ex. 2-1 | 0.11 |
| 2-195 | P2-65 | Ex. 2-1 | 0.11 |
| 2-196 | P2-66 | Ex. 2-1 | 0.11 |
| 2-197 | P2-67 | Ex. 2-1 | 0.11 |
| 2-198 | P2-68 | Ex. 2-1 | 0.11 |

(continued)

| Example | thermoplastic polymer | stabilizer composition | |
|---|---|---|---|
| | | kind | amount (part) |
| 2-199 | P2-69 | Ex. 2-1 | 0.11 |
| 2-200 | P2-70 | Ex. 2-1 | 0.11 |
| 2-201 | P2-71 | Ex. 2-1 | 0.11 |
| 2-202 | P2-72 | Ex. 2-1 | 0.11 |
| 2-203 | P2-73 | Ex. 2-1 | 0.11 |
| 2-204 | P2-74 | Ex. 2-1 | 0.11 |
| 2-205 | P2-75 | Ex. 2-1 | 0.11 |
| 2-206 | P2-76 | Ex. 2-1 | 0.11 |
| 2-207 | P2-77 | Ex. 2-1 | 0.11 |
| 2-208 | P2-76 | Ex. 2-1 | 0.11 |
| 2-209 | P2-77 | Ex. 2-1 | 0.11 |
| 2-210 | P2-78 | Ex. 2-1 | 0.11 |
| 2-211 | P2-79 | Ex. 2-1 | 0.11 |
| 2-212 | P2-80 | Ex. 2-1 | 0.11 |
| 2-213 | P2-81 | Ex. 2-1 | 0.11 |
| 2-214 | P2-82 | Ex. 2-1 | 0.11 |
| 2-215 | P2-83 | Ex. 2-1 | 0.11 |
| 2-216 | P2-84 | Ex. 2-1 | 0.11 |
| 2-217 | P2-85 | Ex. 2-1 | 0.11 |
| 2-218 | P2-86 | Ex. 2-1 | 0.11 |
| 2-219 | P2-87 | Ex. 2-1 | 0.11 |

Example 3-1 (Production of stabilizer composition)

Compound (2-1) (0.2 part) and compound (9-1) (0.01 part) were mixed to produce a stabilizer composition.

Example 3-2 (Production of stabilizer composition)

Compound (2-1) (0.2 part), compound (9-1) (0.01 part) and compound (1-1) (0.3 part) were mixed to produce a stabilizer composition.

Example 3-3 (Production of stabilizer composition)

Compound (2-1) (0.2 part), compound (9-1) (0.01 part) and compound (1-2) (0.3 part) were mixed to produce a stabilizer composition.

Reference Example 3-1

Compound (2-1) (0.2 part) and compound (1-1) (0.3 part) were mixed to produce a stabilizer composition.

Example 3-4 (Production of thermoplastic polymer composition)

A styrene-butadiene block copolymer (manufactured by Asahi Kasei Corp.) (100 parts) and the stabilizer composition (0.21 part) obtained in Example 3-1 were dry-blended, the obtained mixture was knead-extruded by a single

screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 3-5 (Production of thermoplastic polymer composition)

In the same manner as in Example 3-4 except that the stabilizer composition (0.51 part) obtained in Example 3-2 was used instead of the stabilizer composition obtained in Example 3-1, a thermoplastic polymer composition was obtained as pellets.

Example 3-6 (Production of thermoplastic polymer composition)

In the same manner as in Example 3-4 except that the stabilizer composition (0.51 part) obtained in Example 3-3 was used instead of the stabilizer composition obtained in Example 3-1, a thermoplastic polymer composition was obtained as pellets.

Reference Example 3-2

In the same manner as in Example 3-4 except that the stabilizer composition (0.5 part) obtained in Reference Example 3-1 was used instead of the stabilizer composition obtained in Example 3-1, a thermoplastic polymer composition was obtained as pellets.

Comparative Example 3-1

In the same manner as in Example 3-4 except that compound (2-1) (0.2 part) was used instead of the stabilizer composition obtained in Example 3-1, a thermoplastic polymer composition was obtained as pellets.

Experimental Example 3-1 (Evaluation of processing stability)

For evaluation of the processing stability during operation of extrusion processing, Dwell MFR tests were performed using the pellets of each thermoplastic polymer composition obtained in Example 3-4 - Example 3-6, Reference Example 3-2 and Comparative Example 3-1. The test was based on JIS K 7210, and 0 min Dwell MFR (g/10 min) and 30 min Dwell MFR (g/10 min) were measured by a melt indexer (L217-E14011 manufactured by Technol Seven Co., Ltd.) at temperature in a cylinder 270°C and load 2.16 kg. The 0 min Dwell MFR was measured after 5-min preheating time after filling pellets of the thermoplastic polymer composition in the cylinder. The 30 min Dwell MFR was measured after 30-min dwell time, including the preheating time, of the pellets of the thermoplastic polymer composition in the cylinder. The MFR variation rate was calculated by the following formula and using the thus-measured 0 min Dwell MFR and 30 min Dwell MFR:

MFR variation rate (%)=
absolute value of (30 min Dwell MFR-0 min Dwell MFR) x 100/(0 min Dwell MFR)

The compositions of the stabilizer compositions obtained in Example 3-1 - Example 3-3 and Reference Example 3-1 are shown in Table 22, and the compositions, 0 min Dwell MFRs, 30 min Dwell MFRs and MFR variation rates of the thermoplastic polymer compositions obtained in Example 3-4 - Example 3-6, Reference Example 3-2 and Comparative Example 3-1 are shown in Table 23. In a thermoplastic polymer composition containing a styrene-butadiene block copolymer, a smaller MFR variation rate means better processing stability.

[Table 22]

Table 22: stabilizer composition

| | compound (2-1) (part) | compound (9-1) (part) | compound (1-1) (part) | compound (1-2) (part) |
|---|---|---|---|---|
| Ex. 3-1 | 0.2 | 0.01 | - | - |

(continued)

| | compound (2-1) (part) | compound (9-1) (part) | compound (1-1) (part) | compound (1-2) (part) |
|---|---|---|---|---|
| Ex. 3-2 | 0.2 | 0.01 | 0.3 | - |
| Ex. 3-3 | 0.2 | 0.01 | - | 0.3 |
| Ref. Ex. 3-1 | 0.2 | - | 0.3 | - |

[Table 23]

Table 23: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 3-4 | 100 | Ex. 3-1 | 0.21 | 17.4 | 9.3 | 46.4 |
| Ex. 3-5 | 100 | Ex. 3-2 | 0.51 | 19.7 | 13.8 | 30.0 |
| Ex. 3-6 | 100 | Ex. 3-3 | 0.51 | 22.5 | 10.6 | 52.9 |
| Ref. Ex. 3-2 | 100 | Ref. Ex. 3-1 | 0.5 | 19.2 | 5.6 | 70.7 |
| Comp. Ex. 3-1 | 100 | compound (2-1) | 0.2 | 16.2 | 0.6 | 96.2 |
| SBS: styrene-butadiene block copolymer | | | | | | |

Example 3-7 (Production of stabilizer composition)

Compound (2-2) (0.1 part) and compound (9-1) (0.1 part) were mixed to produce a stabilizer composition.

Example 3-8 (Production of stabilizer composition)

Compound (2-3) (0.1 part) and compound (9-1) (0.1 part) were mixed to produce a stabilizer composition.

Example 3-9 (Production of thermoplastic polymer composition)

Polypropylene (manufactured by Sumitomo Chemical Company, Limited) (100 parts) and the stabilizer composition (0.2 part) obtained in Example 3-7 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 3-10 (Production of thermoplastic polymer composition)

In the same manner as in Example 3-9 except that the stabilizer composition (0.2 part) obtained in Example 3-8 was used instead of the stabilizer composition obtained in Example 3-7, a thermoplastic polymer composition was obtained as pellets.

Comparative Example 3-2

In the same manner as in Example 3-9 except that compound (2-2) (0.1 part) was used instead of the stabilizer composition obtained in Example 3-7, a thermoplastic polymer composition was obtained as pellets.

Comparative Example 3-3

In the same manner as in Example 3-10 except that compound (2-3) (0.1 part) was used instead of the stabilizer composition obtained in Example 3-8, a thermoplastic polymer composition was obtained as pellets.

Experimental Example 3-2 (Evaluation of processing stability)

For evaluation of the processing stability during operation of extrusion processing, Dwell MFR tests were performed using the pellets of each thermoplastic polymer composition obtained in Example 3-9, Example 3-10, Comparative Example 3-2 and Comparative Example 3-3. The test was based on JIS K 7210, and 30 min Dwell MFR (g/10 min) were measured by a melt indexer (L217-E14011 manufactured by Technol Seven Co., Ltd.) at temperature in a cylinder 270°C and load 2.16 kg. This 30 min Dwell MFR was measured after 30-min dwell time, including the preheating time, of the pellets of the thermoplastic polymer composition in the cylinder.

The composition of the stabilizer composition obtained in Example 3-3 is shown in Table 24, and the compositions and 30 min Dwell MFRs of the thermoplastic polymer compositions obtained in Example 3-9, Example 3-10, Comparative Example 3-2 and Comparative Example 3-3 are shown in Table 25. Decomposition of polypropylene is accelerated by the heat of processing, and 30 min Dwell MFR increases. Therefore, in a thermoplastic polymer composition containing polypropylene, the processing stability becomes higher as 30 min Dwell MFR is smaller.

[Table 24]

Table 24: stabilizer composition

| | compound (2-2) (part) | compound (2-3) (part) | compound (9-1) (part) |
|---|---|---|---|
| Ex. 3-7 | 0.1 | - | 0.1 |
| Ref. Ex. 3-8 | - | 0.1 | 0.1 |

[Table 25]

Table 25: thermoplastic polymer composition

| | polypropylene (part) | stabilizer composition | | 30 min Dwell MFR (g/10 min) |
|---|---|---|---|---|
| | | kind | amount (part) | |
| Ex. 3-9 | 100 | Ex. 3-7 | 0.2 | 13.6 |
| Comp. Ex. 3-2 | 100 | compound (2-2) | 0.1 | 22.8 |
| Ex. 3-10 | 100 | Ref. Ex. 3-8 | 0.2 | 12.4 |
| Comp. Ex. 3-3 | 100 | compound (2-3) | 0.1 | 15.2 |

Example 3-11 (Production of stabilizer composition)

Compound (2-1) (0.2 part), compound (9-1) (0.01 part) and compound (3-1) (0.2 part) were mixed to produce a stabilizer composition.

Example 3-12 (Production of stabilizer composition)

Compound (2-1) (0.2 part), compound (9-1) (0.01 part), compound (1-1) (0.3 part) and compound (3-1) (0.2 part) were mixed to produce a stabilizer composition.

Example 3-13 (Production of thermoplastic polymer composition)

A styrene-butadiene block copolymer (manufactured by DENKI KAGAKU KOGYO KABUSHIKI KAISHA, 100 part) and the stabilizer composition (0.41 part) obtained in Example 3-11 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C, and screw rotation 50 rpm to give strands, and the strands were cut by a pelletizer to give a thermoplastic polymer composition as pellets.

Example 3-14 (Production of thermoplastic polymer composition)

In the same manner as in Example 3-13 except that the stabilizer composition (0.71 part) obtained in Example 3-12 was used instead of the stabilizer composition obtained in Example 3-11, a thermoplastic polymer composition was obtained as pellets.

Experimental Example 3-3

0 min Dwell MFRs (g/10 min) and 30 min Dwell MFRs (g/10 min) were measured using the pellets of each thermoplastic polymer composition obtained in Example 3-13 and Example 3-14 and in the same manner as in Experimental Example 3-1, and the MFR variation rates (%) were calculated.

The compositions of the stabilizer compositions obtained in Example 3-11 and Example 3-12 are shown in Table 26, and the compositions, 0 min Dwell MFRs, 30 min Dwell MFRs and MFR variation rates of the thermoplastic polymer compositions obtained in Example 3-13 and Example 3-14 are shown in Table 27.

[Table 26]

Table 26: stabilizer composition

| | compound (2-1) (part) | compound (9-1) (part) | compound (1-1) (part) | compound (3-1) (part) |
|---|---|---|---|---|
| Ex. 3-11 | 0.2 | 0.01 | - | 0.2 |
| Ex. 3-12 | 0.2 | 0.01 | 0.3 | 0.2 |

[Table 27]

Table 27: thermoplastic polymer composition

| | SBS (part) | stabilizer composition | | 0 min Dwell MFR (g/10 min) | 30 min Dwell MFR (g/10 min) | MFR variation rate (%) |
|---|---|---|---|---|---|---|
| | | kind | amount (part) | | | |
| Ex. 3-13 | 100 | Ex. 3-11 | 0.41 | 21.5 | 10.5 | 51.1 |
| Ex. 3-14 | 100 | Ex. 3-12 | 0.71 | 23.4 | 16.0 | 31.6 |
| SBS: styrene-butadiene block copolymer | | | | | | |

Example 3-15 - Example 3-82 (Production of stabilizer composition)

By mixing the components described in Table 28-1 and Table 28-2, stabilizer compositions are obtained. Thermoplastic polymer compositions containing these stabilizer compositions are predicted to be superior in processing stability.

[Table 28-1]

Table 28-1: stabilizer composition

| Example | compound (2) | | compound (9-1) | compound (1), compound (3) - compound (8) | | | | | |
|---|---|---|---|---|---|---|---|---|---|
| | kind | amount (part) | amount (part) | kind | amount (part) | kind | amount (part) | kind | amount (part) |
| 3-15 | (2-1) | 0.01 | 0.2 | - | - | - | - | - | - |
| 3-16 | (2-1) | 0.05 | 0.15 | - | - | - | - | - | - |
| 3-17 | (2-1) | 0.1 | 0.1 | - | - | - | - | - | - |
| 3-18 | (2-1) | 0.15 | 0.05 | - | - | - | - | - | - |
| 3-19 | (2-1) | 0.2 | 0.001 | - | - | - | - | - | - |
| 3-20 | (2-1) | 0.2 | 0.0002 | - | - | - | - | - | - |
| 3-21 | (2-2) | 0.01 | 0.2 | - | - | - | - | - | - |
| 3-22 | (2-2) | 0.05 | 0.15 | - | - | - | - | - | - |
| 3-23 | (2-2) | 0.1 | 0.1 | - | - | - | - | - | - |
| 3-24 | (2-2) | 0.15 | 0.05 | - | - | - | - | - | - |
| 3-25 | (2-2) | 0.2 | 0.01 | - | - | - | - | - | - |

(continued)

| Example | compound (2) | | compound (9-1) | compound (1), compound (3) - compound (8) | | | | | |
|---|---|---|---|---|---|---|---|---|---|
| | kind | amount (part) | amount (part) | kind | amount (part) | kind | amount (part) | kind | amount (part) |
| 3-26 | (2-2) | 0.2 | 0.001 | - | - | - | - | - | - |
| 3-27 | (2-2) | 0.2 | 0.0002 | - | - | - | - | - | - |
| 3-28 | (2-3) | 0.01 | 0.2 | - | - | - | - | - | - |
| 3-29 | (2-3) | 0.05 | 0.15 | - | - | - | - | - | - |
| 3-30 | (2-3) | 0.1 | 0.1 | - | - | - | - | - | - |
| 3-31 | (2-3) | 0.15 | 0.05 | - | - | - | - | - | - |
| 3-32 | (2-3) | 0.2 | 0.01 | - | - | - | - | - | - |
| 3-33 | (2-3) | 0.2 | 0.001 | - | - | - | - | - | - |
| 3-34 | (2-3) | 0.2 | 0.0002 | - | - | - | - | - | - |
| 3-35 | (2-1) | 0.01 | 0.2 | (1-1) | 0.2 | - | - | - | - |
| 3-36 | (2-1) | 0.2 | 0.01 | (1-1) | 0.2 | - | - | - | - |
| 3-37 | (2-1) | 0.2 | 0.0002 | (1-1) | 0.2 | - | - | - | - |
| 3-38 | (2-2) | 0.01 | 0.2 | (1-1) | 0.2 | - | - | - | - |
| 3-39 | (2-2) | 0.2 | 0.01 | (1-1) | 0.2 | - | - | - | - |
| 3-40 | (2-2) | 0.2 | 0.0002 | (1-1) | 0.2 | - | - | - | - |
| 3-41 | (2-3) | 0.01 | 0.2 | (1-1) | 0.2 | - | - | - | - |
| 3-42 | (2-3) | 0.2 | 0.01 | (1-1) | 0.2 | - | - | - | - |
| 3-43 | (2-3) | 0.2 | 0.0002 | (1-1) | 0.2 | - | - | - | - |
| 3-44 | (2-1) | 0.01 | 0.2 | (1-2) | 0.2 | - | - | - | - |
| 3-45 | (2-1) | 0.2 | 0.01 | (1-2) | 0.2 | - | - | - | - |
| 3-46 | (2-1) | 0.2 | 0.0002 | (1-2) | 0.2 | - | - | - | - |

[Table 28-2]

Table 28-2: stabilizer composition

| Example | compound (2) | | compound (9-1) | compound (1), compound (3) - compound (8) | | | | | |
|---|---|---|---|---|---|---|---|---|---|
| | kind | amount (part) | amount (part) | kind | amount (part) | kind | amount (part) | kind | amount (part) |
| 3-47 | (2-1) | 0.2 | 0.01 | (3-1) | 0.2 | - | - | - | - |
| 3-48 | (2-2) | 0.2 | 0.01 | (3-1) | 0.2 | - | - | - | - |
| 3-49 | (2-3) | 0.2 | 0.01 | (3-1) | 0.2 | - | - | - | - |
| 3-50 | (2-1) | 0.2 | 0.01 | (4-1) | 0.2 | - | - | - | - |
| 3-51 | (2-2) | 0.2 | 0.01 | (4-1) | 0.2 | - | - | - | - |
| 3-52 | (2-3) | 0.2 | 0.01 | (4-1) | 0.2 | - | - | - | - |
| 3-53 | (2-1) | 0.2 | 0.01 | (5-1) | 0.2 | - | - | - | - |
| 3-54 | (2-2) | 0.2 | 0.01 | (5-1) | 0.2 | - | - | - | - |

(continued)

| Example | compound (2) | | compound (9-1) | compound (1), compound (3) - compound (8) | | | | | |
|---|---|---|---|---|---|---|---|---|---|
| | kind | amount (part) | amount (part) | kind | amount (part) | kind | amount (part) | kind | amount (part) |
| 3-55 | (2-3) | 0.2 | 0.01 | (5-1) | 0.2 | - | - | - | - |
| 3-56 | (2-1) | 0.2 | 0.01 | (5-2) | 0.2 | - | - | - | - |
| 3-57 | (2-2) | 0.2 | 0.01 | (5-2) | 0.2 | - | - | - | - |
| 3-58 | (2-3) | 0.2 | 0.01 | (5-2) | 0.2 | - | - | - | - |
| 3-59 | (2-1) | 0.2 | 0.01 | (5-3) | 0.2 | - | - | - | - |
| 3-60 | (2-2) | 0.2 | 0.01 | (5-3) | 0.2 | - | - | - | - |
| 3-61 | (2-3) | 0.2 | 0.01 | (5-3) | 0.2 | - | - | - | - |
| 3-62 | (2-1) | 0.2 | 0.01 | (6-1) | 0.2 | - | - | - | - |
| 3-63 | (2-2) | 0.2 | 0.01 | (6-1) | 0.2 | - | - | - | - |
| 3-64 | (2-3) | 0.2 | 0.01 | (6-1) | 0.2 | - | - | - | - |
| 3-65 | (2-1) | 0.2 | 0.01 | (7-1) | 0.2 | - | - | - | - |
| 3-66 | (2-2) | 0.2 | 0.01 | (7-1) | 0.2 | - | - | - | - |
| 3-67 | (2-3) | 0.2 | 0.01 | (7-1) | 0.2 | - | - | - | - |
| 3-68 | (2-1) | 0.2 | 0.01 | (8-1) | 0.2 | - | - | - | - |
| 3-69 | (2-2) | 0.2 | 0.01 | (8-1) | 0.2 | - | - | - | - |
| 3-70 | (2-3) | 0.2 | 0.01 | (8-1) | 0.2 | - | - | - | - |
| 3-71 | (2-1) | 0.2 | 0.01 | (1-1) | 0.2 | (3-1) | 0.2 | - | - |
| 3-72 | (2-2) | 0.2 | 0.01 | (1-1) | 0.2 | (3-1) | 0.2 | - | - |
| 3-73 | (2-3) | 0.2 | 0.01 | (1-1) | 0.2 | (3-1) | 0.2 | - | - |
| 3-74 | (2-1) | 0.2 | 0.01 | (1-1) | 0.2 | (8-1) | 0.2 | - | - |
| 3-75 | (2-2) | 0.2 | 0.01 | (1-1) | 0.2 | (8-1) | 0.2 | - | - |
| 3-76 | (2-3) | 0.2 | 0.01 | (1-1) | 0.2 | (8-1) | 0.2 | - | - |
| 3-77 | (2-1) | 0.2 | 0.01 | (3-1) | 0.2 | (8-1) | 0.2 | - | - |
| 3-78 | (2-2) | 0.2 | 0.01 | (3-1) | 0.2 | (8-1) | 0.2 | - | - |
| 3-79 | (2-3) | 0.2 | 0.01 | (3-1) | 0.2 | (8-1) | 0.2 | - | - |
| 3-80 | (2-1) | 0.2 | 0.01 | (1-1) | 0.2 | (3-1) | 0.2 | (8-1) | 0.2 |
| 3-81 | (2-2) | 0.2 | 0.01 | (1-1) | 0.2 | (3-1) | 0.2 | (8-1) | 0.2 |
| 3-82 | (2-3) | 0.2 | 0.01 | (1-1) | 0.2 | (3-1) | 0.2 | (8-1) | 0.2 |

Example 3-83 - Example 3-138 (Production of thermoplastic polymer composition)

In the same manner as in Example 3-4 except that the thermoplastic polymers (100 parts) described in Table 29-1 and Table 29-2, and the stabilizer compositions in the kinds and amounts described in Table 28-1 and Table 28-2 are used, thermoplastic polymer compositions are obtained as pellets. The obtained thermoplastic polymer compositions are predicted to be superior in processing stability.

The meanings of the abbreviations of the thermoplastic polymers described in Table 29-1 and Table 29-2 are as follows.

P3-1: high density polyethylene (HDPE)

P3-2: low density polyethylene (LDPE)

P3-3: linear low density polyethylene (LLDPE)
P3-4: ethylene-vinyl alcohol copolymer (EVOH)
P3-5: ethylene-ethyl acrylate copolymer (EEA)
P3-6: ethylene-vinyl acetate copolymer (EVA)
P3-7: propylene-ethylene random copolymer
P3-8: propylene-α-olefin random copolymer
P3-9: propylene-ethylene-α-olefin copolymer
P3-10: polystyrene (PS)
P3-11: acrylonitrile-styrene copolymer (SAN)
P3-12: acrylonitrile-butadiene-styrene copolymer (ABS)
P3-13: special acrylic rubber-acrylonitrile-styrene copolymer
P3-14: acrylonitrile-chlorinated polyethylene-styrene copolymer (ACS)
P3-15: polybutadiene rubber (BR)
P3-16: styrene-butadiene copolymer (SB)
P3-17: styrene-butadiene block copolymer (SBS)
P3-18: chlorinated polyethylene (CPE)
P3-19: polychloroprene
P3-20: chlorinated rubber
P3-21: poly(vinyl chloride) (PVC)
P3-22: poly(vinylidene chloride) (PVDC)
P3-23: methacrylate resin
P3-24: fluororesin
P3-25: polyacetal (POM)
P3-26: grafted poly(phenylene ether) resin
P3-27: poly(phenylene sulfide) resin (PPS)
P3-28: polyurethane (PU)
P3-29: polyamide (PA)
P3-30: poly(ethylene terephthalate) (PET)
P3-31: poly(butylene terephthalate) (PBT)
P3-32: poly(lactic acid) (PLA)
P3-33: polycarbonate (PC)
P3-34: polyacrylate
P3-35: polysulfone (PPSU)
P3-36: poly(ether ether ketone) (PEEK)
P3-37: poly(ether sulfone) (PES)
P3-38: aromatic polyester
P3-39: diallyl phthalate prepolymer
P3-40: silicone resin (SI)
P3-41: 1,2-polybutadiene
P3-42: polyisoprene
P3-43: butadiene-acrylonitrile copolymer (NBR)
P3-44: ethylene-methyl methacrylate copolymer (EMMA)

[Table 29-1]

Table 29-1: thermoplastic polymer composition

| Example | thermoplastic polymer | stabilizer composition | |
|---|---|---|---|
| | | kind | amount (part) |
| 3-83 | P3-1 | Ex. 3-1 | 0.21 |
| 3-84 | P3-2 | Ex. 3-1 | 0.21 |
| 3-85 | P3-3 | Ex. 3-1 | 0.21 |
| 3-86 | P3-3 | Ex. 3-2 | 0.51 |
| 3-87 | P3-3 | Ex. 3-11 | 0.41 |
| 3-88 | P3-3 | Ex. 3-12 | 0.71 |

(continued)

| Example | thermoplastic polymer | stabilizer composition | |
|---|---|---|---|
| | | kind | amount (part) |
| 3-89 | P3-4 | Ex. 3-1 | 0.21 |
| 3-90 | P3-4 | Ex. 3-2 | 0.51 |
| 3-91 | P3-4 | Ex. 3-11 | 0.41 |
| 3-92 | P3-4 | Ex. 3-12 | 0.71 |
| 3-93 | P3-5 | Ex. 3-1 | 0.21 |
| 3-94 | P3-6 | Ex. 3-1 | 0.21 |
| 3-95 | P3-7 | Ex. 3-1 | 0.21 |
| 3-96 | P3-8 | Ex. 3-1 | 0.21 |
| 3-97 | P3-9 | Ex. 3-1 | 0.21 |
| 3-98 | P3-10 | Ex. 3-1 | 0.21 |
| 3-99 | P3-10 | Ex. 3-2 | 0.51 |
| 3-100 | P3-10 | Ex. 3-11 | 0.41 |
| 3-101 | P3-10 | Ex. 3-12 | 0.71 |
| 3-102 | P3-11 | Ex. 3-1 | 0.21 |
| 3-103 | P3-12 | Ex. 3-1 | 0.21 |
| 3-104 | P3-12 | Ex. 3-2 | 0.51 |
| 3-105 | P3-12 | Ex. 3-11 | 0.41 |
| 3-106 | P3-12 | Ex. 3-12 | 0.71 |
| 3-107 | P3-13 | Ex. 3-1 | 0.21 |
| 3-108 | P3-14 | Ex. 3-1 | 0.21 |
| 3-109 | P3-15 | Ex. 3-1 | 0.21 |
| 3-110 | P3-16 | Ex. 3-1 | 0.21 |

[Table 29-2]

Table 29-2: thermoplastic polymer composition

| Example | thermoplastic polymer | stabilizer composition | |
|---|---|---|---|
| | | kind | amount (part) |
| 3-111 | P3-17 | Ex. 3-1 | 0.21 |
| 3-112 | P3-18 | Ex. 3-1 | 0.21 |
| 3-113 | P3-19 | Ex. 3-1 | 0.21 |
| 3-114 | P3-20 | Ex. 3-1 | 0.21 |
| 3-115 | P3-21 | Ex. 3-1 | 0.21 |
| 3-116 | P3-22 | Ex. 3-1 | 0.21 |
| 3-117 | P3-23 | Ex. 3-1 | 0.21 |
| 3-118 | P3-24 | Ex. 3-1 | 0.21 |
| 3-119 | P3-25 | Ex. 3-1 | 0.21 |
| 3-120 | P3-26 | Ex. 3-1 | 0.21 |

(continued)

| Example | thermoplastic polymer | stabilizer composition | |
|---|---|---|---|
| | | kind | amount (part) |
| 3-121 | P3-27 | Ex. 3-1 | 0.21 |
| 3-122 | P3-28 | Ex. 3-1 | 0.21 |
| 3-123 | P3-29 | Ex. 3-1 | 0.21 |
| 3-124 | P3-30 | Ex. 3-1 | 0.21 |
| 3-125 | P3-31 | Ex. 3-1 | 0.21 |
| 3-126 | P3-32 | Ex. 3-1 | 0.21 |
| 3-127 | P3-33 | Ex. 3-1 | 0.21 |
| 3-128 | P3-34 | Ex. 3-1 | 0.21 |
| 3-129 | P3-35 | Ex. 3-1 | 0.21 |
| 3-130 | P3-36 | Ex. 3-1 | 0.21 |
| 3-131 | P3-37 | Ex. 3-1 | 0.21 |
| 3-132 | P3-38 | Ex. 3-1 | 0.21 |
| 3-133 | P3-39 | Ex. 3-1 | 0.21 |
| 3-134 | P3-40 | Ex. 3-1 | 0.21 |
| 3-135 | P3-41 | Ex. 3-1 | 0.21 |
| 3-136 | P3-42 | Ex. 3-1 | 0.21 |
| 3-137 | P3-43 | Ex. 3-1 | 0.21 |
| 3-138 | P3-44 | Ex. 3-1 | 0.21 |

Example 4-1 (Production of stabilizer composition)

Compound (3-1) (0.48 part) and compound (9-1) (0.12 part) were mixed to produce a stabilizer composition.

Example 4-2 (Production of thermoplastic polymer composition)

A styrene-butadiene block copolymer (manufactured by Asahi Kasei Corp.) (100 parts) and the stabilizer composition obtained in Example 4-1 were dry-blended, the obtained mixture was knead-extruded by a single screw extruder having a diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Comparative Example 4-1

In the same manner as in Example 4-1 except that compound (3-1) (0.60 part) was used instead of the stabilizer composition obtained in Example 4-1, a thermoplastic polymer composition was obtained as pellets.

Experimental Example 4-1 (Evaluation of processing stability)

For evaluation of the processing stability during operation of extrusion processing, Dwell MFR tests were performed using the pellets of each thermoplastic polymer composition obtained in Example 4-2 and Comparative Example 4-1. The test was based on JIS K 7210, and 30 min Dwell MFR (g/10 min) were measured by a melt indexer (L217-E14011 manufactured by Technol Seven Co., Ltd.) at temperature in a cylinder 270°C and load 2.16 kg. This 30 min Dwell MFR was measured after 30-min dwell time, including the preheating time, of the pellets of the thermoplastic polymer composition in the cylinder.

In addition, the progress rate of processing stability was calculated by the following formula and using the

values of 30 min Dwell MFR of Example 4-2 and Comparative Example 4-1:

$$\text{progress rate of processing stability (\%)}$$

$$=[(\text{30 min Dwell MFR of Example 4-2})-(\text{30 min Dwell MFR of Comparative Example 4-1})] \times 100/(\text{MFR of Comparative Example 4-1}).$$

The composition of the stabilizer composition obtained in Example 4-1 is shown in Table 30, and the compositions, 30 min Dwell MFRs and progress rate of the thermoplastic polymer compositions obtained in Example 4-2 and Comparative Example 4-1 are shown in Table 31. In a thermoplastic polymer composition containing styrene-butadiene block copolymer, a styrene-butadiene block copolymer is crosslinked by the heat of processing, and as compared to 0 min Dwell MFR, 30 min Dwell MFR decreases. Therefore, in a thermoplastic polymer composition containing a styrene-butadiene block copolymer, the processing stability becomes higher as 30 min Dwell MFR is bigger.
[Table 30]

Table 30: stabilizer composition

| | compound (3-1) (part) | compound (9-1) (part) | mass ratio of compound (3-1):compound (9-1) |
|---|---|---|---|
| Ex. 4-1 | 0.48 | 0.12 | 4:1 |

[Table 31]

Table 31: thermoplastic polymer composition

| | SBS (part) | stabilizer composition | | 30 min Dwell MFR (g/10 min) | progress rate of processing stability (%) |
|---|---|---|---|---|---|
| | | kind | amount (part) | | |
| Ex. 4-2 | 100 | Ex. 4-1 | 0.60 | 15.1 | 169.6 |
| Comp. Ex. 4-1 | 100 | compound (3-1) | 0.60 | 5.6 | - |
| SBS: styrene-butadiene block copolymer | | | | | |

Example 4-3 (Production of stabilizer composition)

Compound (3-1) (0.1 part) and compound (9-1) (0.01 part) were mixed to produce a stabilizer composition.

Example 4-4 (Production of thermoplastic polymer composition)

Polypropylene (manufactured by Sumitomo Chemical Company, Limited) (100 parts) and the stabilizer composition obtained in Example 4-3 were dry-blended, the obtained mixture was knead-extruded by a single screw extruder having a diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Comparative Example 4-2

In the same manner as in Example 4-4 except that compound (3-1) (0.1 part) was used instead of the stabilizer composition obtained in Example 4-3, a thermoplastic polymer composition was obtained as pellets.

Experimental Example 4-2 (Evaluation of processing stability)

For evaluation of the processing stability during operation of extrusion processing, Dwell MFR tests were performed using the pellets of each thermoplastic polymer composition obtained in Example 4-4 and Comparative Example 4-2. The test was based on JIS K 7210, and 30 min Dwell MFR (g/10 min) were measured by a melt indexer

(L217-E14011 manufactured by Technol Seven Co., Ltd.) at temperature in a cylinder 270°C and load 2.16 kg. This 30 min Dwell MFR was measured after 30-min dwell time, including the preheating time, of the pellets of the thermoplastic polymer composition in the cylinder. Furthermore, the inhibition rate of MFR increment was calculated by the following formula and using the 30 min Dwell MFR of Example 4-4 and the 30 min Dwell MFR of Comparative Example 4-2:

inhibition rate of MFR increment(%)

=[(30 min Dwell MFR of Comparative Example 4-2)-(30 min Dwell MFR of Example 4-4)] x 100/(30 min Dwell MFR of Comparative Example 4-2).

The composition of the stabilizer composition obtained in Example 4-3 is shown in Table 32, and the compositions, 30 min Dwell MFRs and inhibition rate of MFR increment of the thermoplastic polymer compositions obtained in Example 4-4 and Comparative Example 4-2 are shown in Table 33. Decomposition of polypropylene is accelerated by the heat of processing, and 30 min Dwell MFR increases. Therefore, in a thermoplastic polymer composition containing polypropylene, the processing stability becomes higher as 30 min Dwell MFR is smaller and the inhibition rate of MFR increment is larger.

[Table 32]

Table 32: stabilizer composition

| | compound (3-1) (part) | compound (9-1) (part) | mass ratio of compound (3-1):compound (9-1) |
|---|---|---|---|
| Example 4-3 | 0.1 | 0.01 | 10:1 |

[Table 33]

Table 33: thermoplastic polymer composition

| | poly propylene (part) | stabilizer composition | | 30 min Dwell MFR (g/10 min) | inhibition rate of MFR increment (%) |
|---|---|---|---|---|---|
| | | kind | amount (part) | | |
| Ex. 4-4 | 100 | Ex. 4-3 | 0.11 | 13.0 | 18.8 |
| Comp. Ex. 4-2 | 100 | compound (3-1) | 0.1 | 16.0 | - |

Example 4-5 - Example 4-8 (Production of stabilizer composition)

By mixing the components described in Table 34, stabilizer compositions were obtained respectively.

Example 4-9 (Production of thermoplastic polymer composition)

A styrene-butadiene block copolymer (manufactured by DENKI KAGAKU KOGYO KABUSHIKI KAISHA) (100 parts) and the stabilizer composition (0.21 part) obtained in Example 4-5 were dry-blended, the obtained mixture was knead-extruded by a single screw extruder having a screw diameter of 30 mm ("VS30-28 type extruder" manufactured by TANABE PLASTICS MACHINERY CO., LTD.) at temperature 230°C and screw rotation 50 rpm to give strands, and the strands were cut by a pelletizer to give a thermoplastic polymer composition as pellets.

Example 4-10 (Production of thermoplastic polymer composition)

In the same manner as in Example 4-9 except that the stabilizer composition (0.51 part) obtained in Example 4-6 was used instead of the stabilizer composition obtained in Example 4-5, a thermoplastic polymer composition was obtained as pellets.

Example 4-11 (Production of thermoplastic polymer composition)

In the same manner as in Example 4-9 except that the stabilizer composition (0.41 part) obtained in Example 4-7 was used instead of the stabilizer composition obtained in Example 4-5, a thermoplastic polymer composition was obtained as pellets.

Example 4-12 (Production of thermoplastic polymer composition)

In the same manner as in Example 4-9 except that the stabilizer composition (0.71 part) obtained in Example 4-8 was used instead of the stabilizer composition obtained in Example 4-5, a thermoplastic polymer composition was obtained as pellets.

Comparative Example 4-3

In the same manner as in Example 4-9 except that compound (3-1) (0.2 part) was used instead of the stabilizer composition obtained in Example 4-5, a thermoplastic polymer composition was obtained as pellets.

Experimental Example 4-3

30 min Dwell MFRs (g/10 min) were measured using the pellets of the thermoplastic polymer compositions obtained in Example 4-9 - Example 4-12 and Comparative Example 4-3 and in the same manner as in Experimental Example 4-1. The progress rates of processing stability were calculated using the values of the 30 min Dwell MFRs of Example 4-9 - Example 4-12 and the 30 min Dwell MFR of Comparative Example 4-3. The results are shown in Table 35.
[Table 34]

Table 34: stabilizer composition

| | compound (3-1) (part) | compound (9-1) (part) | compound (1-1) (part) | compound (2-1) (part) |
|---|---|---|---|---|
| Ex. 4-5 | 0.2 | 0.01 | - | - |
| Ex. 4-6 | 0.2 | 0.01 | 0.3 | - |
| Ex. 4-7 | 0.2 | 0.01 | - | 0.2 |
| Ex. 4-8 | 0.2 | 0.01 | 0.3 | 0.2 |

[Table 35]

Table 35: thermoplastic polymer composition

| | SBS (part) | stabilizer composition | | 30 min Dwell MFR (g/10 min) | progress rate of processing stability (%) |
|---|---|---|---|---|---|
| | | kind | amount (part) | | |
| Ex. 4-9 | 100 | Ex. 4-5 | 0.21 | 9.9 | 209 |
| Ex. 4-10 | 100 | Ex. 4-6 | 0.51 | 15.8 | 394 |
| Ex. 4-11 | 100 | Ex. 4-7 | 0.41 | 10.5 | 228 |
| Ex. 4-12 | 100 | Ex. 4-8 | 0.71 | 16.0 | 400 |
| Comp. Ex. 4-3 | 100 | compound (3-1) | 0.2 | 3.2 | - |
| SBS: styrene-butadiene block copolymer | | | | | |

Example 4-13 - Example 4-141 (Production of stabilizer composition)

By mixing the components described in Table 36-1 - Table 36-4, stabilizer compositions are obtained. Thermoplastic polymer compositions containing these stabilizer compositions are predicted to be superior in processing stability.
[Table 36-1]

Table 36-1: stabilizer composition

| Example | compounds (3) - (7) | | compound (9-1) | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-13 | (3-1) | 0.01 | 0.2 | - | - | | | - | - |
| 4-14 | (3-1) | 0.05 | 0.15 | - | - | - | - | - | - |
| 4-15 | (3-1) | 0.1 | 0.1 | - | - | - | - | - | - |
| 4-16 | (3-1) | 0.15 | 0.05 | - | - | - | - | - | - |
| 4-17 | (3-1) | 0.2 | 0.001 | - | - | - | - | - | - |
| 4-18 | (3-1) | 0.2 | 0.0002 | - | - | - | - | - | - |
| 4-19 | (4-1) | 0.01 | 0.2 | - | - | - | - | - | - |
| 4-20 | (4-1) | 0.05 | 0.15 | - | - | - | - | - | - |
| 4-21 | (4-1) | 0.1 | 0.1 | - | - | - | - | - | - |
| 4-22 | (4-1) | 0.15 | 0.05 | - | - | - | - | - | - |
| 4-23 | (4-1) | 0.2 | 0.01 | - | - | - | - | - | - |
| 4-24 | (4-1) | 0.2 | 0.001 | - | - | - | - | - | - |
| 4-25 | (4-1) | 0.2 | 0.0002 | - | - | - | - | - | - |
| 4-26 | (5-1) | 0.01 | 0.2 | - | - | - | - | - | - |
| 4-27 | (5-1) | 0.05 | 0.15 | - | - | - | - | - | - |
| 4-28 | (5-1) | 0.1 | 0.1 | - | - | - | - | - | - |
| 4-29 | (5-1) | 0.15 | 0.05 | - | - | - | - | - | - |
| 4-30 | (5-1) | 0.2 | 0.01 | - | - | - | - | - | - |
| 4-31 | (5-1) | 0.2 | 0.001 | - | - | - | - | - | - |
| 4-32 | (5-1) | 0.2 | 0.0002 | - | - | - | - | - | - |
| 4-33 | (5-2) | 0.01 | 0.2 | - | - | - | - | - | - |
| 4-34 | (5-2) | 0.05 | 0.15 | - | - | - | - | - | - |
| 4-35 | (5-2) | 0.1 | 0.1 | - | - | - | - | - | - |
| 4-36 | (5-2) | 0.15 | 0.05 | - | - | - | - | - | - |
| 4-37 | (5-2) | 0.2 | 0.01 | - | - | - | - | - | - |
| 4-38 | (5-2) | 0.2 | 0.001 | - | - | - | - | - | - |
| 4-39 | (5-2) | 0.2 | 0.0002 | - | - | - | - | - | - |
| 4-40 | (5-3) | 0.01 | 0.2 | - | - | - | - | - | - |
| 4-41 | (5-3) | 0.05 | 0.15 | - | - | - | - | - | - |
| 4-42 | (5-3) | 0.1 | 0.1 | - | - | - | - | - | - |
| 4-43 | (5-3) | 0.15 | 0.05 | - | - | - | - | - | - |
| 4-44 | (5-3) | 0.2 | 0.01 | - | - | - | - | - | - |
| 4-45 | (5-3) | 0.2 | 0.001 | - | - | - | - | - | - |
| 4-46 | (5-3) | 0.2 | 0.0002 | - | - | - | - | - | - |

[Table 36-2]

Table 36-2: stabilizer composition

| Example | compounds (3) - (7) | | compound (9-1) | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-47 | (6-1) | 0.01 | 0.2 | - | - | - | - | - | - |
| 4-48 | (6-1) | 0.05 | 0.15 | - | - | - | - | - | - |
| 4-49 | (6-1) | 0.1 | 0.1 | - | - | - | - | - | - |
| 4-50 | (6-1) | 0.15 | 0.05 | - | - | - | - | - | - |
| 4-51 | (6-1) | 0.2 | 0.01 | - | - | - | - | - | - |
| 4-52 | (6-1) | 0.2 | 0.001 | - | - | - | - | - | - |
| 4-53 | (6-1) | 0.2 | 0.0002 | - | - | - | - | - | - |
| 4-54 | (7-1) | 0.01 | 0.2 | - | - | - | - | - | - |
| 4-55 | (7-1) | 0.05 | 0.15 | - | - | - | - | - | - |
| 4-56 | (7-1) | 0.1 | 0.1 | - | - | - | - | - | - |
| 4-57 | (7-1) | 0.15 | 0.05 | - | - | - | - | - | - |
| 4-58 | (7-1) | 0.2 | 0.01 | - | - | - | - | - | - |
| 4-59 | (7-1) | 0.2 | 0.001 | - | - | - | - | - | - |
| 4-60 | (7-1) | 0.2 | 0.0002 | - | - | - | - | - | - |
| 4-61 | (3-1) | 0.01 | 0.2 | (1-1) | 0.2 | - | - | - | - |
| 4-62 | (3-1) | 0.2 | 0.01 | (1-1) | 0.2 | - | - | - | - |
| 4-63 | (3-1) | 0.2 | 0.0002 | (1-1) | 0.2 | - | - | - | - |
| 4-64 | (4-1) | 0.01 | 0.2 | (1-1) | 0.2 | - | - | - | - |
| 4-65 | (4-1) | 0.2 | 0.01 | (1-1) | 0.2 | - | - | - | - |
| 4-66 | (4-1) | 0.2 | 0.0002 | (1-1) | 0.2 | - | - | - | - |
| 4-67 | (5-1) | 0.01 | 0.2 | (1-1) | 0.2 | - | - | - | - |
| 4-68 | (5-1) | 0.2 | 0.01 | (1-1) | 0.2 | - | - | - | - |
| 4-69 | (5-2) | 0.2 | 0.0002 | (1-1) | 0.2 | - | - | - | - |
| 4-70 | (5-2) | 0.01 | 0.2 | (1-1) | 0.2 | - | - | - | - |
| 4-71 | (5-2) | 0.2 | 0.01 | (1-1) | 0.2 | - | - | - | - |
| 4-72 | (5-3) | 0.2 | 0.0002 | (1-1) | 0.2 | - | - | - | - |
| 4-73 | (6-1) | 0.01 | 0.2 | (1-1) | 0.2 | - | - | - | - |
| 4-74 | (6-1) | 0.2 | 0.01 | (1-1) | 0.2 | - | - | - | - |
| 4-75 | (6-1) | 0.2 | 0.0002 | (1-1) | 0.2 | - | - | - | - |
| 4-76 | (7-1) | 0.01 | 0.2 | (1-1) | 0.2 | - | - | - | - |
| 4-77 | (7-1) | 0.2 | 0.01 | (1-1) | 0.2 | - | - | - | - |
| 4-78 | (7-1) | 0.2 | 0.0002 | (1-1) | 0.2 | - | - | - | - |

[Table 36-3]

Table 36-3: stabilizer composition

| Example | compounds (3) - (7) | | compound (9-1) | compound (1) | | compound (2) | | compound (8) | |
|---|---|---|---|---|---|---|---|---|---|
| | kind | amount (part) | amount (part) | kind | amount (part) | kind | amount (part) | kind | (part) |
| 4-79 | (3-1) | 0.2 | 0.01 | (1-2) | 0.2 | - | - | - | - |
| 4-80 | (4-1) | 0.2 | 0.01 | (1-2) | 0.2 | - | - | - | - |
| 4-81 | (5-1) | 0.2 | 0.01 | (1-2) | 0.2 | - | - | - | - |
| 4-82 | (5-2) | 0.2 | 0.01 | (1-2) | 0.2 | - | - | - | - |
| 4-83 | (5-3) | 0.2 | 0.01 | (1-2) | 0.2 | - | - | - | - |
| 4-84 | (6-1) | 0.2 | 0.01 | (1-2) | 0.2 | - | - | - | - |
| 4-85 | (7-1) | 0.2 | 0.01 | (1-2) | 0.2 | - | - | - | - |
| 4-86 | (3-1) | 0.2 | 0.01 | - | - | (2-1) | 0.2 | - | - |
| 4-87 | (4-1) | 0.2 | 0.01 | - | - | (2-1) | 0.2 | - | - |
| 4-88 | (5-1) | 0.2 | 0.01 | - | - | (2-1) | 0.2 | - | - |
| 4-89 | (5-2) | 0.2 | 0.01 | - | - | (2-1) | 0.2 | - | - |
| 4-90 | (5-3) | 0.2 | 0.01 | - | - | (2-1) | 0.2 | - | - |
| 4-91 | (6-1) | 0.2 | 0.01 | - | - | (2-1) | 0.2 | - | - |
| 4-92 | (7-1) | 0.2 | 0.01 | - | - | (2-1) | 0.2 | - | - |
| 4-93 | (3-1) | 0.2 | 0.01 | - | - | (2-2) | 0.2 | - | - |
| 4-94 | (4-1) | 0.2 | 0.01 | - | - | (2-2) | 0.2 | - | - |
| 4-95 | (5-1) | 0.2 | 0.01 | - | - | (2-2) | 0.2 | - | - |
| 4-96 | (5-2) | 0.2 | 0.01 | - | - | (2-2) | 0.2 | - | - |
| 4-97 | (5-3) | 0.2 | 0.01 | - | - | (2-2) | 0.2 | - | - |
| 4-98 | (6-1) | 0.2 | 0.01 | - | - | (2-2) | 0.2 | - | - |
| 4-99 | (7-1) | 0.2 | 0.01 | - | - | (2-2) | 0.2 | - | - |
| 4-100 | (3-1) | 0.2 | 0.01 | - | - | (2-3) | 0.2 | - | - |
| 4-101 | (4-1) | 0.2 | 0.01 | - | - | (2-3) | 0.2 | - | - |
| 4-102 | (5-1) | 0.2 | 0.01 | - | - | (2-3) | 0.2 | - | - |
| 4-103 | (5-2) | 0.2 | 0.01 | - | - | (2-3) | 0.2 | - | - |
| 4-104 | (5-3) | 0.2 | 0.01 | - | - | (2-3) | 0.2 | - | - |
| 4-105 | (6-1) | 0.2 | 0.01 | - | - | (2-3) | 0.2 | - | - |
| 4-106 | (7-1) | 0.2 | 0.01 | - | - | (2-3) | 0.2 | - | - |
| 4-107 | (3-1) | 0.2 | 0.01 | - | - | - | - | (8-1) | 0.2 |
| 4-108 | (4-1) | 0.2 | 0.01 | - | - | - | - | (8-1) | $O_o$2 |
| 4-109 | (5-1) | 0.2 | 0.01 | - | - | - | - | (8-1) | 0.2 |
| 4-110 | (5-2) | 0.2 | 0.01 | - | - | - | - | (8-1) | 0.2 |

[Table 36-4]

Table 36-4: stabilizer composition

| Example | compounds (3) - (7) | | compound (9-1) | compound (1) | | compound (2) | | compound (8) | |
|---|---|---|---|---|---|---|---|---|---|
| | kind | amount (part) | amount (part) | kind | amount (part) | kind | amount (part) | kind | amount (part) |
| 4-111 | (5-3) | 0.2 | 0.01 | - | - | - | - | (8-1) | 0.2 |
| 4-112 | (6-1) | 0.2 | 0.01 | - | - | - | - | (8-1) | 0.2 |
| 4-113 | (7-1) | 0.2 | 0.01 | - | - | - | - | (8-1) | 0.2 |
| 4-114 | (3-1) | 0.2 | 0.01 | (1-1) | 0.2 | (2-1) | 0.2 | - | - |
| 4-115 | (4-1) | 0.2 | 0.01 | (1-1) | 0.2 | (2-1) | 0.2 | - | - |
| 4-116 | (5-1) | 0.2 | 0.01 | (1-1) | 0.2 | (2-1) | 0.2 | - | - |
| 4-117 | (5-2) | 0.2 | 0.01 | (1-1) | 0.2 | (2-1) | 0.2 | - | - |
| 4-118 | (5-3) | 0.2 | 0.01 | (1-1) | 0.2 | (2-1) | 0.2 | - | - |
| 4-119 | (6-1) | 0.2 | 0.01 | (1-1) | 0.2 | (2-1) | 0.2 | - | - |
| 4-120 | (7-1) | 0.2 | 0.01 | (1-1) | 0.2 | (2-1) | 0.2 | - | - |
| 4-121 | (3-1) | 0.2 | 0.01 | (1-1) | 0.2 | - | - | (8-1) | 0.2 |
| 4-122 | (4-1) | 0.2 | 0.01 | (1-1) | 0.2 | - | - | (8-1) | 0.2 |
| 4-123 | (5-1) | 0.2 | 0.01 | (1-1) | 0.2 | - | - | (8-1) | 0.2 |
| 4-124 | (5-2) | 0.2 | 0.01 | (1-1) | 0.2 | - | - | (8-1) | 0.2 |
| 4-125 | (5-3) | 0.2 | 0.01 | (1-1) | 0.2 | - | - | (8-1) | 0.2 |
| 4-126 | (6-1) | 0.2 | 0.01 | (1-1) | 0.2 | - | - | (8-1) | 0.2 |
| 4-127 | (7-1) | 0.2 | 0.01 | (1-1) | 0.2 | - | - | (8-1) | 0.2 |
| 4-128 | (3-1) | 0.2 | 0.01 | - | - | (2-1) | 0.2 | (8-1) | 0.2 |
| 4-129 | (4-1) | 0.2 | 0.01 | - | - | (2-1) | 0.2 | (8-1) | 0.2 |
| 4-130 | (5-1) | 0.2 | 0.01 | - | - | (2-1) | 0.2 | (8-1) | 0.2 |
| 4-131 | (5-2) | 0.2 | 0.01 | - | - | (2-1) | 0.2 | (8-1) | 0.2 |
| 4-132 | (5-3) | 0.2 | 0.01 | - | - | (2-1) | 0.2 | (8-1) | 0.2 |
| 4-133 | (6-1) | 0.2 | 0.01 | - | - | (2-1) | 0.2 | (8-1) | 0.2 |
| 4-134 | (7-1) | 0.2 | 0.01 | - | - | (2-1) | 0.2 | (8-1) | 0.2 |
| 4-135 | (3-1) | 0.2 | 0.01 | (1-1) | 0.2 | (2-1) | 0.2 | (8-1) | 0.2 |
| 4-136 | (4-1) | 0.2 | 0.01 | (1-1) | 0.2 | (2-1) | 0.2 | (8-1) | 0.2 |
| 4-137 | (5-1) | 0.2 | 0.01 | (1-1) | 0.2 | (2-1) | 0.2 | (8-1) | 0.2 |
| 4-138 | (5-2) | 0.2 | 0.01 | (1-1) | 0.2 | (2-1) | 0.2 | (8-1) | 0.2 |
| 4-139 | (5-3) | 0.2 | 0.01 | (1-1) | 0.2 | (2-1) | 0.2 | (8-1) | 0.2 |
| 4-140 | (6-1) | 0.2 | 0.01 | (1-1) | 0.2 | (2-1) | 0.2 | (8-1) | 0.2 |
| 4-141 | (7-1) | 0.2 | 0.01 | (1-1) | 0.2 | (2-1) | 0.2 | (8-1) | 0.2 |

Example 4-142 - Example 4-201 (Production of thermoplastic polymer composition)

In the same manner as in Example 4-2 except that the thermoplastic polymers (100 parts) described in Table 37-1 and Table 37-2, and the stabilizer compositions in the kinds and amounts described in Table 37-1 and Table 37-2 are used, thermoplastic polymer compositions are obtained as pellets. The obtained thermoplastic polymer compositions are predicted to be superior in processing stability.

The meanings of the abbreviations of the thermoplastic polymers described in Table 37-1 and Table 37-2 are as follows.

P4-1: high density polyethylene (HDPE)
P4-2: low density polyethylene (LDPE)
P4-3: linear low density polyethylene (LLDPE)
P4-4: ethylene-vinyl alcohol copolymer (EVOH)
P4-5: ethylene-ethyl acrylate copolymer (EEA)
P4-6: ethylene-vinyl acetate copolymer (EVA)
P4-7: propylene-ethylene random copolymer
P4-8: propylene-α-olefin random copolymer
P4-9: propylene-ethylene-α-olefin copolymer
P4-10: polystyrene (PS)
P4-11: acrylonitrile-styrene copolymer (SAN)
P4-12: acrylonitrile-butadiene-styrene copolymer (ABS)
P4-13: special acrylic rubber-acrylonitrile-styrene copolymer
P4-14: acrylonitrile-chlorinated polyethylene-styrene copolymer (ACS)
P4-15: polybutadiene rubber (BR)
P4-16: styrene-butadiene copolymer (SB)
P4-17: styrene-butadiene block copolymer (SBS)
P4-18: chlorinated polyethylene (CPE)
P4-19: polychloroprene
P4-20: chlorinated rubber
P4-21: poly(vinyl chloride) (PVC)
P4-22: poly(vinylidene chloride) (PVDC)
P4-23: methacrylate resin
P4-24: fluororesin
P4-25: polyacetal (POM)
P4-26: grafted poly(phenylene ether) resin
P4-27: poly(phenylene sulfide) resin (PPS)
P4-28: polyurethane (PU)
P4-29: polyamide (PA)
P4-30: poly(ethylene terephthalate) (PET)
P4-31: poly(butylene terephthalate) (PBT)
P4-32: poly(lactic acid) (PLA)
P4-33: polycarbonate (PC)
P4-34: polyacrylate
P4-35: polysulfone (PPSU)
P4-36: poly(ether ether ketone) (PEEK)
P4-37: poly(ether sulfone) (PES)
P4-38: aromatic polyester
P4-39: diallyl phthalate prepolymer
P4-40: silicone resin (SI)
P4-41: 1,2-polybutadiene
P4-42: polyisoprene
P4-43: butadiene-acrylonitrile copolymer (NBR)
P4-44: ethylene-methyl methacrylate copolymer (EMMA)

[Table 37-1]

Table 37-1: thermoplastic polymer composition

| Example | thermoplastic polymer | stabilizer composition | |
|---|---|---|---|
| | | kind | amount (part) |
| 4-142 | P4-1 | Ex. 4-3 | 0.11 |
| 4-143 | P4-2 | Ex. 4-3 | 0.11 |
| 4-144 | P4-3 | Ex. 4-3 | 0.11 |
| 4-145 | P4-3 | Ex. 4-5 | 0.21 |

(continued)

| Example | thermoplastic polymer | stabilizer composition | |
|---|---|---|---|
| | | kind | amount (part) |
| 4-146 | P4-3 | Ex. 4-6 | 0.51 |
| 4-147 | P4-3 | Ex. 4-7 | 0.41 |
| 4-148 | P4-3 | Ex. 4-8 | 0.71 |
| 4-149 | P4-4 | Ex. 4-3 | 0.11 |
| 4-150 | P4-4 | Ex. 4-5 | 0.21 |
| 4-151 | P4-4 | Ex. 4-6 | 0.51 |
| 4-152 | P4-4 | Ex. 4-7 | 0.41 |
| 4-153 | P4-4 | Ex. 4-8 | 0.71 |
| 4-154 | P4-5 | Ex. 4-3 | 0.11 |
| 4-155 | P4-6 | Ex. 4-3 | 0.11 |
| 4-156 | P4-7 | Ex. 4-3 | 0.11 |
| 4-157 | P4-8 | Ex. 4-3 | 0.11 |
| 4-158 | P4-9 | Ex. 4-3 | 0.11 |
| 4-159 | P4-10 | Ex. 4-3 | 0.11 |
| 4-160 | P4-10 | Ex. 4-5 | 0.21 |
| 4-161 | P4-10 | Ex. 4-6 | 0.51 |
| 4-162 | P4-10 | Ex. 4-7 | 0.41 |
| 4-163 | P4-10 | Ex. 4-8 | 0.71 |
| 4-164 | P4-11 | Ex. 4-3 | 0.11 |
| 4-165 | P4-12 | Ex. 4-3 | 0.11 |
| 4-166 | P4-12 | Ex. 4-5 | 0.21 |
| 4-167 | P4-12 | Ex. 4-6 | 0.51 |
| 4-168 | P4-12 | Ex. 4-7 | 0.41 |
| 4-169 | P4-12 | Ex. 4-8 | 0.71 |
| 4-170 | P4-13 | Ex. 4-3 | 0.11 |
| 4-171 | P4-14 | Ex. 4-3 | 0.11 |

[Table 37-2]

Table 37-2: thermoplastic polymer composition

| Example | thermoplastic polymer | stabilizer composition | |
|---|---|---|---|
| | | kind | amount (part) |
| 4-172 | P4-15 | Ex. 4-3 | 0.11 |
| 4-173 | P4-16 | Ex. 4-3 | 0.11 |
| 4-174 | P4-17 | Ex. 4-3 | 0.11 |
| 4-175 | P4-18 | Ex. 4-3 | 0.11 |
| 4-176 | P4-19 | Ex. 4-3 | 0.11 |
| 4-177 | P4-20 | Ex. 4-3 | 0.11 |

(continued)

| Example | thermoplastic polymer | stabilizer composition | |
|---|---|---|---|
| | | kind | amount (part) |
| 4-178 | P4-21 | Ex. 4-3 | 0.11 |
| 4-179 | P4-22 | Ex. 4-3 | 0.11 |
| 4-180 | P4-23 | Ex. 4-3 | 0.11 |
| 4-181 | P4-24 | Ex. 4-3 | 0.11 |
| 4-182 | P4-25 | Ex. 4-3 | 0.11 |
| 4-183 | P4-26 | Ex. 4-3 | 0.11 |
| 4-184 | P4-27 | Ex. 4-3 | 0.11 |
| 4-185 | P4-28 | Ex. 4-3 | 0.11 |
| 4-186 | P4-29 | Ex. 4-3 | 0.11 |
| 4-187 | P4-30 | Ex. 4-3 | 0.11 |
| 4-188 | P4-31 | Ex. 4-3 | 0.11 |
| 4-189 | P4-32 | Ex. 4-3 | 0.11 |
| 4-190 | P4-33 | Ex. 4-3 | 0.11 |
| 4-191 | P4-34 | Ex. 4-3 | 0.11 |
| 4-192 | P4-35 | Ex. 4-3 | 0.11 |
| 4-193 | P4-36 | Ex. 4-3 | 0.11 |
| 4-194 | P4-37 | Ex. 4-3 | 0.11 |
| 4-195 | P4-38 | Ex. 4-3 | 0.11 |
| 4-196 | P4-39 | Ex. 4-3 | 0.11 |
| 4-197 | P4-40 | Ex. 4-3 | 0.11 |
| 4-198 | P4-41 | Ex. 4-3 | 0.11 |
| 4-199 | P4-42 | Ex. 4-3 | 0.11 |
| 4-200 | P4-43 | Ex. 4-3 | 0.11 |
| 4-201 | P4-44 | Ex. 4-3 | 0.11 |

## Industrial Applicability

The thermoplastic polymer composition of the present invention containing compound (1), compound (2) and at least one selected from the group consisting of compound (3) - compound (7), or compound (8) and compound (9) shows superior processing stability. The thermoplastic polymer composition of the present invention can be used for production of, for example, electronic component, automobile part, clock component, camera component, component of leisure goods and the like.

## Claims

**1.** A thermoplastic polymer composition comprising a compound represented by the formula (1):

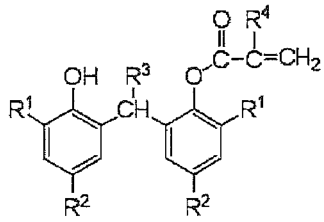

(1)

wherein in the formula (1), each $R^1$ and/or each $R^2$ are/is independently a $C_{1-8}$ alkyl group, a $C_{6-12}$ aryl group or a $C_{7-18}$ aralkyl group, $R^3$ is a hydrogen atom or a $C_{1-3}$ alkyl group, and $R^4$ is a hydrogen atom or a methyl group, a compound represented by the formula (9):

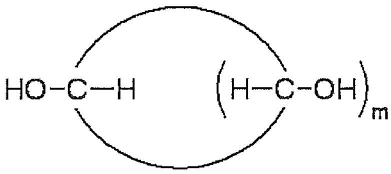

(9)

wherein in the formula (9), m is an integer of 2 or more, and a thermoplastic polymer.

**2.** The thermoplastic polymer composition according to claim 1, wherein the total amount of the compound represented by the formula (1) and the compound represented by the formula (9) is 0.001 - 3 parts by weight relative to 100 parts by weight of the thermoplastic polymer.

**3.** A stabilizer composition comprising a compound represented by the formula (1):

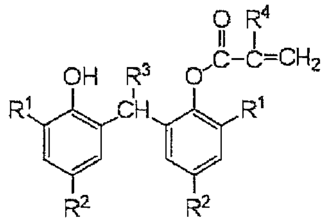

(1)

wherein in the formula (1), each $R^1$ and/or each $R^2$ are/is independently a $C_{1-8}$ alkyl group, a $C_{6-12}$ aryl group or a $C_{7-18}$ aralkyl group, $R^3$ is a hydrogen atom or a $C_{1-3}$ alkyl group, and $R^4$ is a hydrogen atom or a methyl group, and a compound represented by the formula (9):

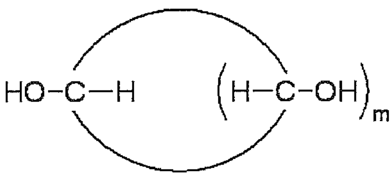

(9)

wherein in the formula (9), m is an integer of 2 or more.

**4.** The stabilizer composition according to claim 3, wherein the compound represented by the formula (1) is at least one selected from the group consisting of 2,4-di-t-pentyl-6-[1-(3,5-di-t-pentyl-2-hydroxyphenyl)ethyl]phenyl acrylate and 2-t-butyl-6-(3-t-butyl-2-hydroxy-5-methylbenzyl)-4-methylphenyl acrylate.

**5.** The stabilizer composition according to claim 3 or 4, wherein m is 5.

6. The stabilizer composition according to claim 5, wherein the compound represented by the formula (9) is at least one selected from the group consisting of myo-inositol and scyllo-inositol.

7. The stabilizer composition according to any one of claims 3 - 6, further comprising a compound represented by the formula (2) :

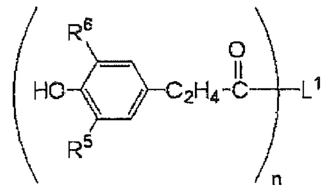

(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

8. The stabilizer composition according to any one of claims 3 - 7, further comprising at least one selected from the group consisting of the compounds represented by the formulas (3) - (7) :

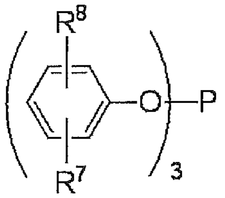

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

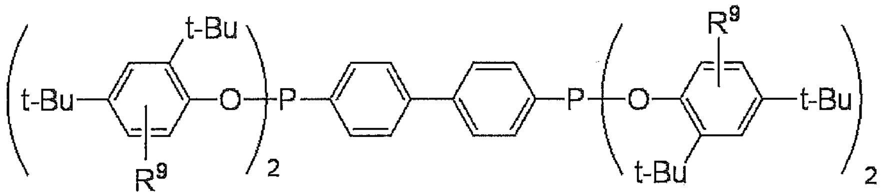

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

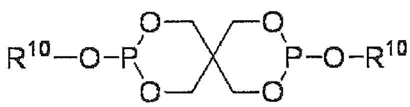

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

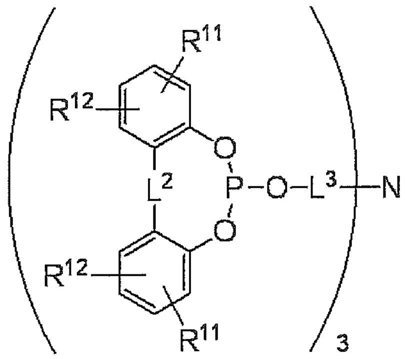

(6)

wherein in the formula (6),
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

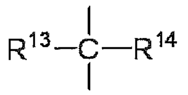

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

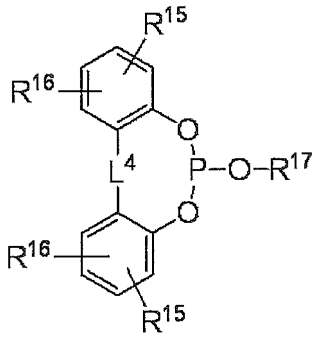

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

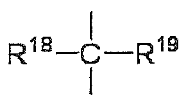

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**9.** The stabilizer composition according to claim 8, wherein at least one selected from the group consisting of the compounds represented by the formulas (3) - (7) is the compound represented by the formula (3).

**10.** A thermoplastic polymer composition comprising a compound represented by the formula (8):

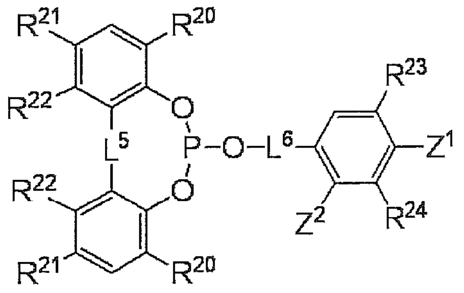

(8)

wherein in the formula (8),
each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

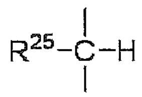

(8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

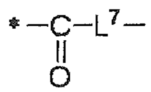

(8b)

wherein in the formula (8b), $L^7$ is a single bond or a $C_{1-8}$ alkylene group, and * shows bonding to the oxygen atom side, and
one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group,
a compound represented by the formula (9):

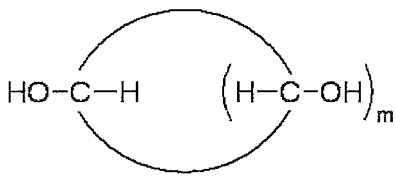

(9)

wherein in the formula (9), m is an integer of 2 or more, and a thermoplastic polymer.

**11.** The thermoplastic polymer composition according to claim 10, wherein the total amount of the compound represented by the formula (8) and the compound represented by the formula (9) is 0.001 - 3 parts by weight relative to 100 parts by weight of the thermoplastic polymer.

**12.** A stabilizer composition comprising
a compound represented by the formula (8):

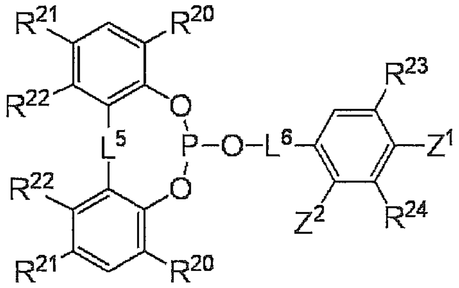

(8)

wherein in the formula (8),
each $R^{20}$ and/or each $R^{21}$ are/is independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
$R^{23}$ and $R^{24}$ are each independently a hydrogen atom, a $C_{1-8}$ alkyl group, a $C_{5-8}$ cycloalkyl group, a $C_{6-12}$ alkylcycloalkyl group, a $C_{7-12}$ aralkyl group or a phenyl group,
each $R^{22}$ is independently a hydrogen atom or a $C_{1-8}$ alkyl group,
$L^5$ is a single bond, a sulfur atom or a divalent group represented by the formula (8a):

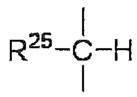

(8a)

wherein in the formula (8a), $R^{25}$ is a hydrogen atom, a $C_{1-8}$ alkyl group or a $C_{5-8}$ cycloalkyl group,
$L^6$ is a $C_{2-8}$ alkylene group or a divalent group represented by the formula (8b):

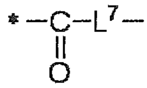

(8b)

wherein in the formula (8b), $L^7$ is a single bond or a $C_{1-8}$ alkylene group, and * shows bonding to the oxygen atom side, and
one of $Z^1$ and $Z^2$ is a hydroxy group, a $C_{1-8}$ alkyl group, a $C_{1-8}$ alkoxy group or a $C_{7-12}$ aralkyloxy group, and the other is a hydrogen atom or a $C_{1-8}$ alkyl group, and
a compound represented by the formula (9):

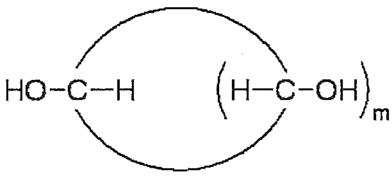

(9)

wherein in the formula (9), m is an integer of 2 or more.

**13.** The stabilizer composition according to claim 12, wherein the compound represented by the formula (8) is 6-[3-(3-t-butyl-4-hydroxy-5-methylphenyl)propoxy]-2,4,8,10-tetra-t-butyldibenzo[d,f][1,3,2]dioxaphosphepine.

**14.** The stabilizer composition according to claim 12 or 13, wherein m is 5.

**15.** The stabilizer composition according to claim 14, wherein the compound represented by the formula (9) is at least one selected from the group consisting of myo-inositol and scyllo-inositol.

**16.** The stabilizer composition according to any one of claims 12 - 15, further comprising a compound represented by the formula (2):

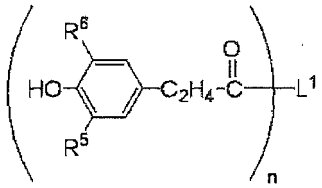

(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol.

**17.** The stabilizer composition according to any one of claims 12 - 16, further comprising at least one selected from the group consisting of the compounds represented by the formulas (3) - (7):

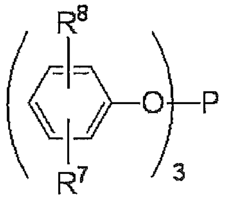

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

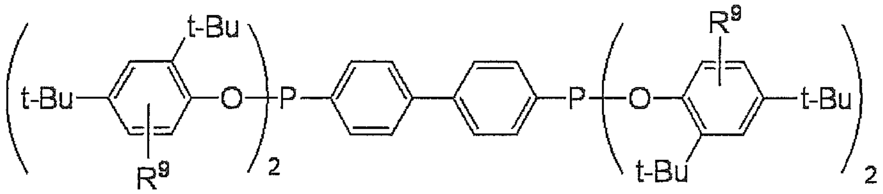

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

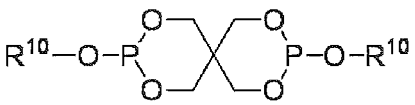

(5)

wherein in the formula (5), each $R^{10}$ is independently a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

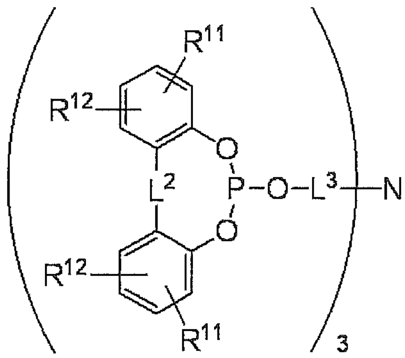

(6)

wherein in the formula (6),
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

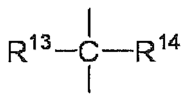

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

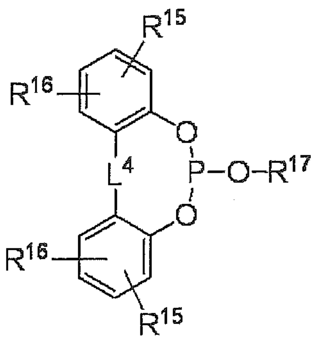

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

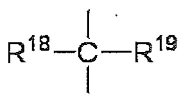

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**18.** The stabilizer composition according to claim 17, wherein at least one selected from the group consisting of the compounds represented by the formulas (3) - (7) is the compound represented by the formula (3).

**19.** A thermoplastic polymer composition comprising a compound represented by the formula (2):

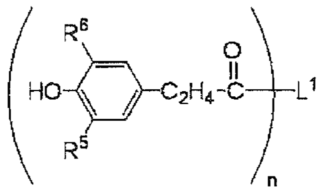
(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol,
a compound represented by the formula (9):

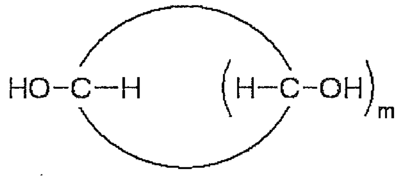
(9)

wherein in the formula (9), m is an integer of 2 or more, and a thermoplastic polymer.

**20.** The thermoplastic polymer composition according to claim 19, wherein the total amount of the compound represented by the formula (2) and the compound represented by the formula (9) is 0.001 - 3 parts by weight relative to 100 parts by weight of the thermoplastic polymer.

**21.** The thermoplastic polymer composition according to claim 19 or 20, wherein the thermoplastic polymer is a styrene-butadiene block copolymer.

**22.** A stabilizer composition comprising
a compound represented by the formula (2):

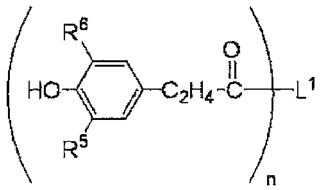
(2)

wherein in the formula (2),
each $R^5$ and/or each $R^6$ are/is independently a hydrogen atom or a $C_{1-6}$ alkyl group,
$L^1$ is an n-valent $C_{1-24}$ alcohol residue optionally containing a hetero atom,
n is an integer of 1 - 4, and
the alcohol residue here is a residue obtained by removing a hydrogen atom from the hydroxy group of the alcohol, and
a compound represented by the formula (9):

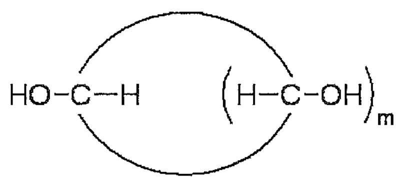
(9)

wherein in the formula (9), m is an integer of 2 or more.

**23.** The stabilizer composition according to claim 22, wherein the compound represented by the formula (2) is at least one selected from the group consisting of octadecyl 3-(3,5-di-t-butyl-4-hydroxyphenyl)propionate, 3,9-bis[2-{3-(3-t-butyl-4-hydroxy-5-methylphenyl)propionyloxy}-1,1-dimethylethyl]-2,4,8,10-tetraoxaspiro[5.5]undecane and pentaerythritol tetrakis[3-(3,5-di-t-butyl-4-hydroxyphenyl)propionate].

**24.** The stabilizer composition according to claim 22 or 23, wherein m is 5.

**25.** The stabilizer composition according to claim 24, wherein the compound represented by the formula (9) is at least one selected from the group consisting of myo-inositol and scyllo-inositol.

**26.** A thermoplastic polymer composition comprising a compound represented by the formula (9):

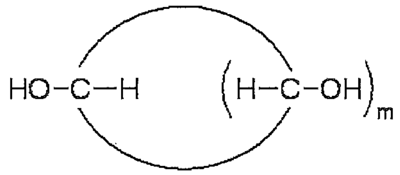

(9)

wherein in the formula (9), m is an integer of 2 or more,
a thermoplastic polymer and
at least one selected from the group consisting of the compounds represented by the formulas (3) - (7):

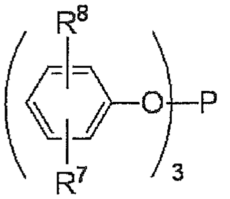

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

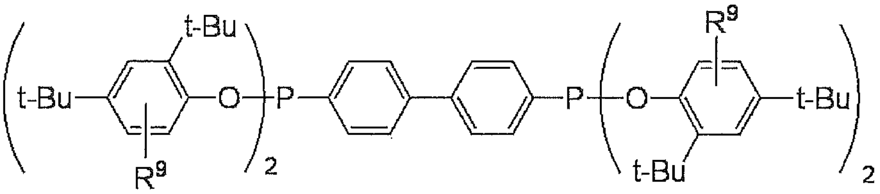

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

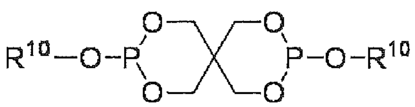

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

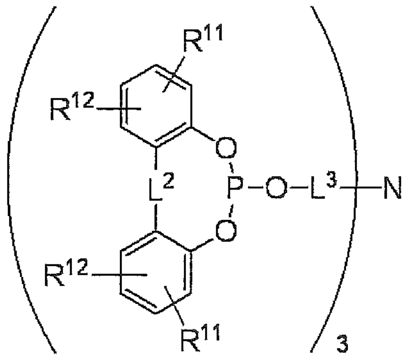

(6)

wherein in the formula (6), each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

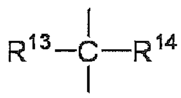

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

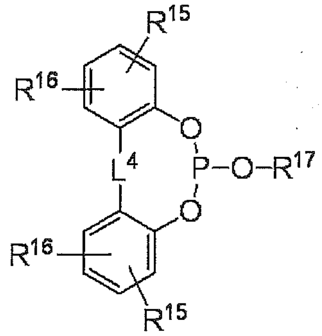

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

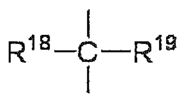

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**27.** The thermoplastic polymer composition according to claim 26, wherein the total amount of the compound represented by the formula (9) and the compound selected from the group consisting of the compounds represented by the formulas (3) - (7) is 0.001 - 3 parts by weight relative to 100 parts by weight of the thermoplastic polymer.

**28.** The thermoplastic polymer composition according to claim 26 or 27, wherein the thermoplastic polymer is a styrene-butadiene block copolymer.

**29.** A stabilizer composition comprising
a compound represented by the formula (9):

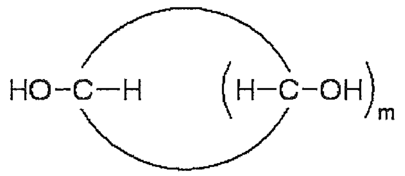

(9)

wherein in the formula (9), m is an integer of 2 or more, and at least one selected from the group consisting of the compounds represented by the formulas (3) - (7):

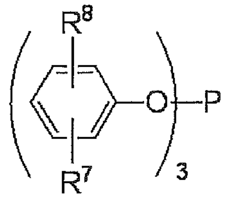

(3)

wherein in the formula (3), each $R^7$ and/or each $R^8$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

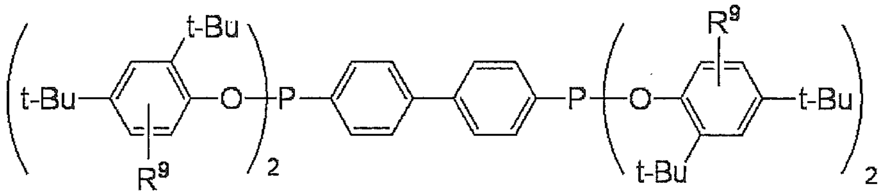

(4)

wherein in the formula (4), each $R^9$ is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,

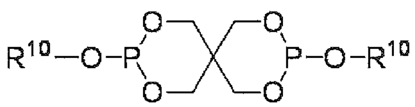

(5)

wherein in the formula (5), each $R^{10}$ is independently a $C_{1-18}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group,

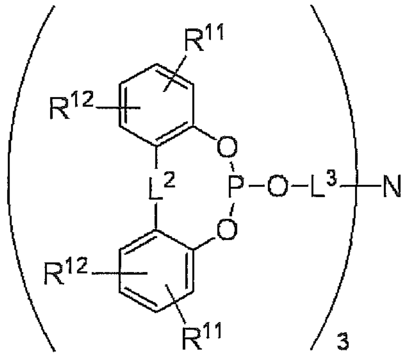

(6)

wherein in the formula (6);
each $R^{11}$ and/or each $R^{12}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
each $L^2$ is independently a single bond, a sulfur atom or a divalent group represented by the formula (6a):

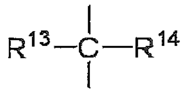

(6a)

wherein in the formula (6a), $R^{13}$ and $R^{14}$ are each independently a hydrogen atom or a $C_{1-7}$ alkyl group, and the total carbon number of $R^{13}$ and $R^{14}$ is not more than 7, and
each $L^3$ is independently a $C_{2-8}$ alkylene group,

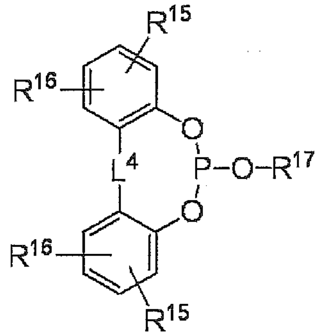

(7)

wherein in the formula (7),
each $R^{15}$ and/or each $R^{16}$ are/is independently a hydrogen atom, a $C_{1-9}$ alkyl group, a $C_{5-8}$ cycloalkyl group, a $C_{6-12}$ alkylcycloalkyl group, a $C_{7-12}$ aralkyl group or a phenyl group,
$R^{17}$ is a $C_{1-8}$ alkyl group or a phenyl group optionally substituted by at least one selected from the group consisting of a $C_{1-9}$ alkyl group, a $C_{5-8}$ cycloalkyl group, a $C_{6-12}$ alkylcycloalkyl group and a $C_{7-12}$ aralkyl group, and
$L^4$ is a single bond, a sulfur atom or a divalent group represented by the formula (7a):

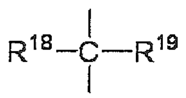

(7a)

wherein in the formula (7a), $R^{18}$ and $R^{19}$ are each independently a hydrogen atom or a $C_{1-7}$ alkyl group, and the total carbon number of $R^{18}$ and $R^{19}$ is not more than 7.

**30.** The stabilizer composition according to claim 29, wherein at least one selected from the group consisting of the compounds represented by the formulas (3) - (7) is the compound represented by the formula (3).

**31.** The stabilizer composition according to claim 30, wherein the compound represented by the formula (3) is tris(2,4-di-t-butylphenyl) phosphite.

## INTERNATIONAL SEARCH REPORT

International application No.
PCT/JP2011/059267

A. CLASSIFICATION OF SUBJECT MATTER
*C08L101/00*(2006.01)i, *C08K5/13*(2006.01)i, *C08K5/134*(2006.01)i, *C08K5/1545*(2006.01)i, *C08K5/524*(2006.01)i

According to International Patent Classification (IPC) or to both national classification and IPC

B. FIELDS SEARCHED

Minimum documentation searched (classification system followed by classification symbols)
C08L101/00, C08K5/13, C08K5/134, C08K5/1545, C08K5/524

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 63-213550 A (General Electric Co.), 06 September 1988 (06.09.1988), claims; examples & US 4767810 A & EP 272416 A2 | 1-9 |
| A | JP 63-213554 A (General Electric Co.), 06 September 1988 (06.09.1988), claims; entire text & EP 272417 A2 | 1-9 |
| A | JP 10-212386 A (Sakai Chemical Industry Co., Ltd.), 11 August 1998 (11.08.1998), claims; entire text (Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 July, 2011 (14.07.11) | 26 July, 2011 (26.07.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2011/059267

C (Continuation). DOCUMENTS CONSIDERED TO BE RELEVANT

| Category* | Citation of document, with indication, where appropriate, of the relevant passages | Relevant to claim No. |
|---|---|---|
| A | JP 56-136850 A (Adeka Argus Chemical Co., Ltd.), 26 October 1981 (26.10.1981), claims; entire text (Family: none) | 1-9 |
| A | JP 01-168643 A (Sumitomo Chemical Co., Ltd.), 04 July 1989 (04.07.1989), claims; entire text & US 5128398 A & EP 322166 A1 & DE 3870187 A & CA 1325218 A | 1-9 |
| A | JP 04-305413 A (Sumitomo Chemical Co., Ltd.), 28 October 1992 (28.10.1992), claims; entire text (Family: none) | 1-9 |
| A | JP 05-255549 A (Sumitomo Chemical Co., Ltd.), 05 October 1993 (05.10.1993), claims; entire text (Family: none) | 1-9 |
| A | JP 2009-046665 A (Sumitomo Chemical Co., Ltd.), 05 March 2009 (05.03.2009), claims; entire text & US 2009/0030127 A1 & EP 2017299 A1 & KR 10-2009-0009717 A & CN 101628990 A | 1-9 |
| A | JP 2009-132633 A (Sumitomo Chemical Co., Ltd.), 18 June 2009 (18.06.2009), claims; entire text & US 2009/0143517 A1 & EP 2065359 A1 & CN 101450900 A & KR 10-2009-0056863 A | 1-9 |
| A | JP 2010-007002 A (Sumitomo Chemical Co., Ltd.), 14 January 2010 (14.01.2010), claims; entire text & US 2009/0326160 A1 & EP 2141194 A1 & CN 101618782 A & SG 158055 A & KR 10-2010-0003208 A | 1-9 |
| P,A | JP 2010-159368 A (Sumitomo Chemical Co., Ltd.), 22 July 2010 (22.07.2010), claims; entire text (Family: none) | 1-9 |

Form PCT/ISA/210 (continuation of second sheet) (July 2009)

**INTERNATIONAL SEARCH REPORT**

International application No.
PCT/JP2011/059267

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet.

1. ☐ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1-9

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2011/059267

Continuation of Box No.III of continuation of first sheet(2)

The invention in claim 1, the invention in claim 3, the invention in claim 10, the invention in claim 12, the invention in claim 19, the invention in claim 22, the invention in claim 26, and the invention in claim 29 have a common technical feature in such a point that all of the inventions relate to a composition containing a compound, which acts as a stabilizing agent, and a compound represented by "formula (9)".

However, the above-said technical feature cannot be considered to be a "special technical feature", since said technical feature does not make a contribution over the prior art in the light of the contents disclosed in the following document 1. Furthermore, there is no other same or corresponding "special technical feature".

Document 1: JP 63-213550 A (General Electric Co.), 06 September 1988 (06.09.1988), claims, examples & US 4767810 A & EP 272416 A2

Consequently, the invention in claim 1, the invention in claim 3, the invention in claim 10, the invention in claim 12, the invention in claim 19, the invention in claim 22, the invention in claim 26, and the invention in claim 29 cannot be deemed be so linked as to share a special technical feature, and therefore, a group of these inventions cannot be considered to be so linked as to form a single general inventive concept.

It is considered that four inventions linked by respective special technical features indicated below are involved in claims 1-31.

(Invention 1) the inventions in claims 1-9

The invention relating to a composition which contains a compound represented by "formula (1)" and a compound represented by "formula (9)".

(Invention 2) the inventions in claims 10-18

The invention relating to a composition which contains a compound represented by "formula (8)" and a compound represented by "formula (9)".

(Invention 3) the inventions in claims 19-25

The invention relating to a composition which contains a compound represented by "formula (2)" and a compound represented by "formula (9)".

(Invention 4) the inventions in claims 26-31

The invention relating to a composition which contains a compound represented by "formulae (3) to (7)" and a compound represented by "formula (9)".

Meanwhile, this international search report covers the above-said (invention 1).

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 1168643 A
- JP 10273494 A
- US 3330859 A
- US 3644482 A
- JP 59025826 A
- JP 58084835 A